# EUROPEAN PATENT SPECIFICATION

(11) **EP 4 106 488 B1**
(45) Date of publication and mention of the grant of the patent: **13.08.2025**
(21) Application number: 21753236.5
(22) Date of filing: 08.02.2021
(51) Int. Cl.: H04W 8/18, H04B 1/3816, H04W 8/20

(54) **ELECTRONIC DEVICE SUPPORTING PLURALITY OF SIMS AND OPERATING METHOD THEREFOR**
ELEKTRONISCHE VORRICHTUNG MIT MEHREREN SIMS UND BETRIEBSVERFAHREN DAFÜR
DISPOSITIF ÉLECTRONIQUE PRENANT EN CHARGE UNE PLURALITÉ DE MODULES D'IDENTIFICATION D'ABONNÉ ET SON PROCÉDÉ DE FONCTIONNEMENT

(30) Priority: 10.02.2020 KR 20200015903
(43) Date of publication of application: 21.12.2022
(73) Proprietor: Samsung Electronics Co., Ltd., Suwon-si, Gyeonggi-do 16677 (KR)
(72) Inventor: BAE, Jeongtak, Suwon-si Gyeonggi-do 16677 (KR); KANG, Junwon, Suwon-si Gyeonggi-do 16677 (KR); BAN, Hyongjin, Suwon-si Gyeonggi-do 16677 (KR); LEE, Sanghwi, Suwon-si Gyeonggi-do 16677 (KR); JUNG, Jieun, Suwon-si Gyeonggi-do 16677 (KR)
(74) Representative: Gulde & Partner
(86) International application number: PCT/KR2021/001663
(87) International publication number: WO 2021/162387

(56) References cited:
- EP-A1- 4 021 042
- WO-A1-2017/172604
- CN-A- 110 621 013
- KR-A- 20140 011 771
- US-A1- 2011 117 964
- US-A1- 2016 149 605
- US-A1- 2016 337 515
- US-A1- 2019 297 476
- GSM ASSOCIATION, GSM ASSOCIATION, GSMA FLOOR2 THE WALBROOK BUILDING 25 WALLBROOK LONDON, UK, 26 February 2019 (2019-02-26), XP040720522

## Description

### [Technical Field]

Various embodiments relate to an electronic device supporting multiple subscriber identity modules (SIMs) and a method for operating the same.

### [Background Art]

In a wireless communication system, an electronic device (e.g., a user equipment (UE)) may access a wireless communication network and use a voice communication or data communication service while being in a predetermined location or while moving. In order to provide a communication service to an electronic device, an appropriate authentication process is required. In general, a universal integrated circuit card (UICC) is inserted into an electronic device, and authentication is performed between the electronic device and a server of a mobile network operator (MNO) through a universal subscriber identity module (USIM) installed in the UICC. UICC may be called a subscriber identity module (SIM) card in the case of a global system for mobile communications (GSM), and may be called a universal subscriber identity module (USIM) card in the case of wideband code division multiple access (WCDMA), long-term evolution (LTE), or new radio (NR).

When a user of an electronic device subscribes to a wireless communication service provided by a mobile network operator, the mobile network operator may provide the user with a UICC (e.g., a SIM card or a USIM card), and the user may insert the provided UICC into the electronic device of the user. When the UICC is inserted into the electronic device, a USIM application installed in the UICC may be executed, and an appropriate authentication process may be performed, using an international mobile subscriber identity (IMSI) value stored in the UICC and an encryption key value for authentication, between the electronic device and a server of the mobile network operator in which the same values are stored. After the appropriate authentication process is performed, the wireless communication service may be used.

An electronic device may support two or more SIMs. A device supporting two SIMs may be called a dual-SIM electronic device, and a device supporting multiple SIMs may be called a multi-SIM electronic device. The dual-SIM or multi-SIM electronic device may support multiple SIMs, and the SIMs may be associated with different subscriptions. A device in which one transceiver transmits and receives signals associated with multiple SIMs may be called a dual SIM dual standby (DSDS) device. In this case, when one SIM transmits or receives a signal, another SIM may be in a standby mode. Alternatively, a device in which both SIMs can be simultaneously enabled may be called a dual SIM dual active (DSDA) device. In similar regards, publication CN110621013A relates to a SIM module management method and an electronic device, particularly related to supporting an eSIM module for an existing electronic device that supports dual SIM modules, publication "GSM ASSOCIATION, GSM ASSOCIATION, GSMA FLOOR2 THE WALBROOK BUILDING 25 WALLBROOK LONDON, UK, 26 February 2019 (2019-02-26)" relates to the development and adoption of eSIM technology in China, and publication US2019297476A1 relates to a method and apparatus for switching an in-vehicle service by using an external SIM card, which allows for the interconnection, interworking, and information sharing between people and vehicles and between vehicles.

### [Detailed Description of the Invention]

### [Technical Problem]

An electronic device supporting a dual SIM is implemented to support two removable subscriber identity modules, or is implemented to support one removable subscriber identity module and an embedded subscriber identity module (eSIM). Hereinafter, the removable subscriber identity module may be called a removable SIM (rSIM), and the embedded subscriber identity module may be called an eSIM. The rSIM may be called a physical SIM (or pSIM). An electronic device supporting two rSIMs may be implemented to include two slots capable of containing respective SIMs. An electronic device supporting one rSIM and an eSIM may include a slot capable of containing the one SIM and the eSIM. However, there is no disclosure of an electronic device switchable to use two rSIMs or to use one rSIM and an eSIM. If a mobile network operator supports an eSIM and then stops supporting the eSIM, an electronic device including one slot and an eSIM may not support a function of a dual SIM. Alternatively, when the mobile network operator changes a policy so as to support the eSIM, an electronic device including two slots may not support a function of the eSIM.

An electronic device according to various embodiments may include multiple slots and one or more eSIMs. An electronic device and an operating method thereof may switch a connection to an eSIM or a connection to an rSIM.

### [Technical Solution]

In accordance with various embodiments, an electronic device is provided, corresponding to the appended claims.

In accordance with various embodiments, an operation method of an electronic device is provided, corresponding to the appended claims.

The invention is defined by the independent claims. The dependent claims specify the preferred embodiments of the invention.

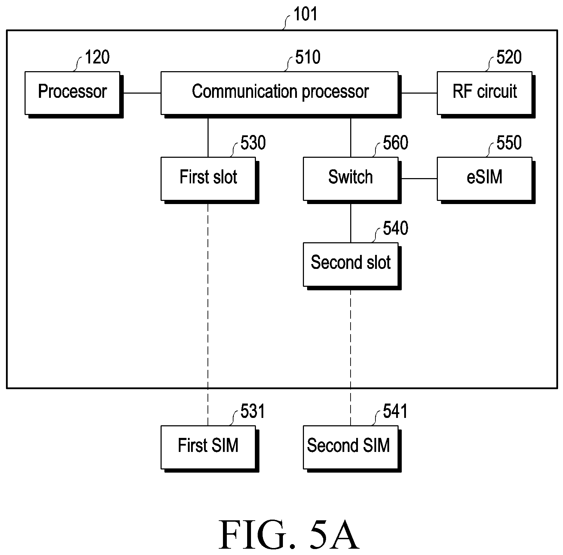

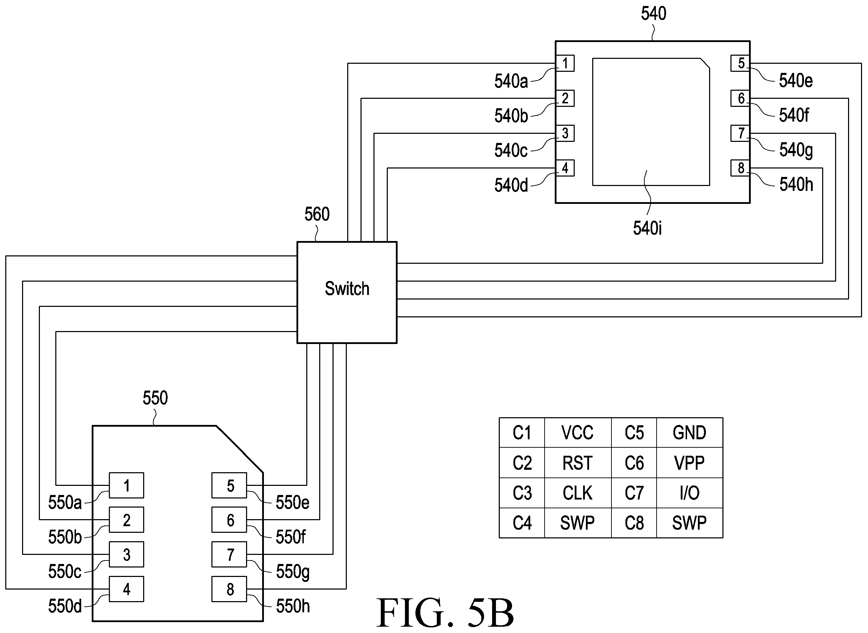

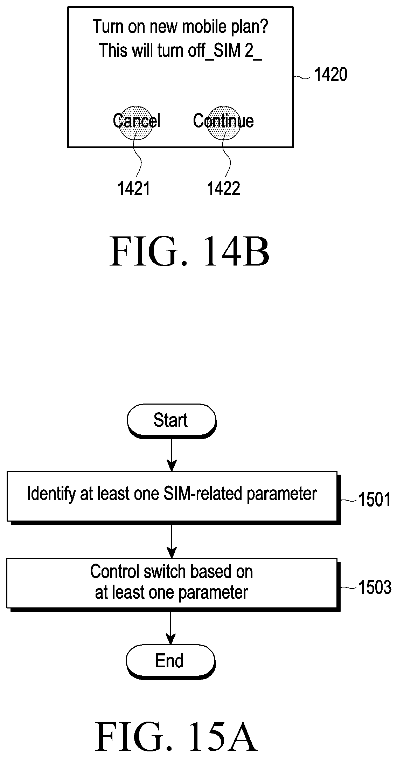

In the following, embodiments of the invention are described with particular reference to figures 5A, 5B, 15A (first and second example), 15B and 16. The other embodiments and/or examples of the disclosure are provided for illustrative purposes to support a better understanding of the invention.

### [Advantageous Effects]

According to various embodiments, an electronic device including multiple slots and one or more eSIMs may be provided. According to various embodiments, an electronic device capable of switching a connection to an eSIM or a connection to an rSIM and an operating method thereof may be provided. Accordingly, a dual SIM function according to an eSIM and one rSIM, or a dual SIM function according to two rSIMs may be provided.

### [Brief Description of Drawings]

FIG. 1A is block diagram of an electronic device in a network environment.
FIG. 1B illustrates a network environment including an electronic device.
FIG. 2 illustrates a system for providing a profile-based communication connection to an electronic device.
FIG. 3 is a block diagram illustrating the configuration of an electronic device according to various embodiments.
FIG. 4 illustrates an internal structure of an eUICC,
FIG. 5A illustrates a block diagram of an electronic device according to various embodiments.
FIG. 5B illustrates a switch according to various embodiments.
FIG. 6A is a flowchart illustrating an operation method of an electronic device.
FIG. 6B is a flowchart illustrating an operation method of an electronic device.
FIG. 6C is a flowchart illustrating an operation method of an electronic device.
FIGS. 7A and 7B are flowcharts illustrating an operation method of an electronic device.
FIGS. 8A, 8B, 8C, and 8D illustrate screens displayed in an electronic device.
FIG. 9 is a flowchart illustrating an operation method of an electronic device.
FIG. 10 illustrates a screen displayed in an electronic device.
FIG. 11A is a flowchart illustrating an operation method of an electronic device.
FIGS. 11B, 11C, 11D, 11E, and 11F illustrate screens displayed in an electronic device.
FIG. 12 is a flowchart illustrating an operation method of an electronic device.
FIGS. 13A, 13B, 13C, 13D, and 13E illustrate screens displayed in an electronic device.
FIG. 14A is a flowchart illustrating an operation method of an electronic device.
FIG. 14B illustrates a screen displayed in an electronic device.
FIG. 15A is a flowchart illustrating an operation method of an electronic device according to various embodiments.
FIGS. 15B, 15C, and 15D illustrate screens displayed in an electronic device.
FIG. 16 is a flowchart illustrating an operation method of an electronic device according to various embodiments.
FIG. 17 is a flowchart illustrating an operation method of an electronic device.
FIG. 18 illustrates a policy change of a network.
FIG. 19 is a flowchart illustrating a profile enabling method.
FIG. 20 is a flowchart illustrating a profile disabling method.
FIG. 21 is a flowchart illustrating a profile deletion method.
FIG. 22 is a flowchart illustrating a profile download method.
FIG. 23 is a flowchart illustrating a profile download method.
FIG. 24 is a flowchart illustrating a profile download method.
FIG. 25 is a flowchart illustrating a profile enabling method.
FIGS. 26A, 26B, and 26C illustrate screens displayed in an electronic device.
FIG. 27 is a flowchart illustrating a method of enabling a profile of an eSIM.
FIGS. 28A, 28B, 28C, and 28D illustrate screens displayed in an electronic device.
FIG. 29 is a flowchart illustrating a profile disabling method.
FIGS. 30A, 30B, and 30C illustrate screens displayed in an electronic device.
FIG. 31 is a flowchart illustrating a profile deletion method.
FIGS. 32A, 32B, 32C, 32D, 32E, and 32F illustrate screens displayed in an electronic device.
FIGS. 33A, 33B, and 33C illustrate screens displayed in an electronic device.
FIGS. 34A, 34B, and 34C illustrate screens displayed in an electronic device.
FIGS. 35A and 35B illustrate screens displayed in an electronic device.

### [Mode for Carrying out the Invention]

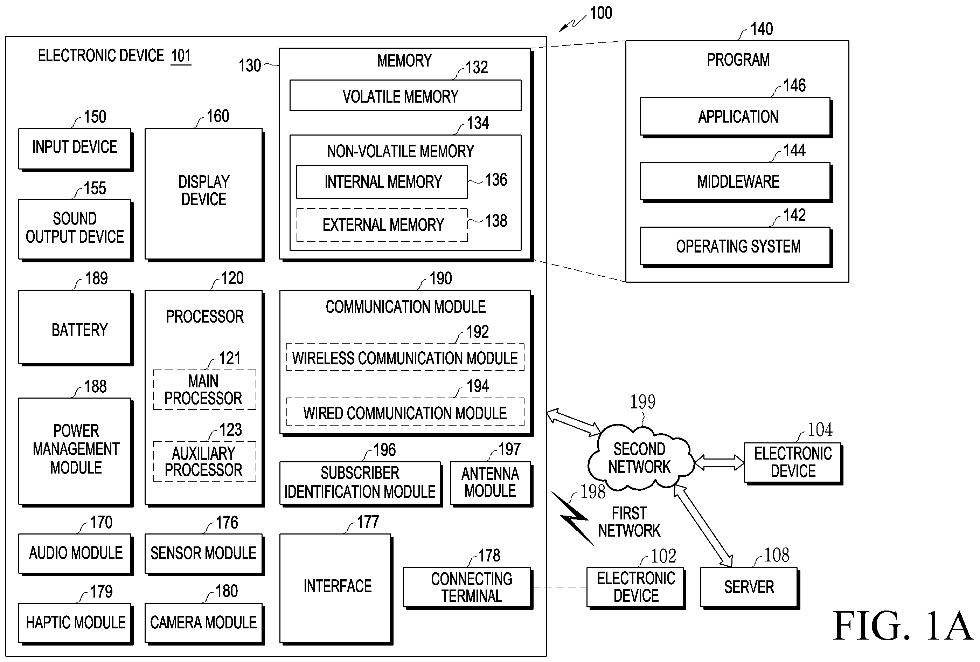

FIG. 1A is a block diagram illustrating an electronic device 101 in a network environment 100 according to an embodiment. Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by a component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to one embodiment, the power management module 388 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

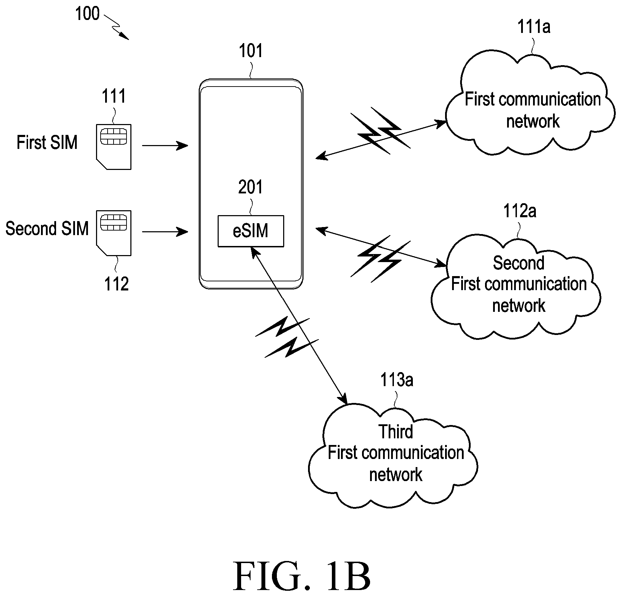

FIG. 1B illustrates a network environment 100 including an electronic device according to various embodiments. Referring to FIG. 1B, a network according to various embodiments of the disclosure may include the electronic device 101, a first communication network 111a, a second communication network 112a, or a third communication network 113a.

In accordance with various embodiments, the electronic device 101 may operate as a dual SIM dual standby (DSDS) or dual SIM dual active (DSDA) electronic device that supports two SIMs in one device. For example, the electronic device 101 may be equipped with two SIMs, a first SIM 111 and a second SIM 112. The first SIM 111 and the second SIM 112 may be removable rSIMs. For example, the electronic device 101 may be equipped with two SIM cards in order to support the two SIMs. Hereinafter, for convenience of description, the SIM card will be referred to as a SIM. As illustrated in FIG. 1B, the electronic device 101 may be equipped with two SIM cards, the first SIM 111 and the second SIM 112. The electronic device 101 may include a first slot (not shown) and a second slot (not shown) as first structures therein in order to receive the first SIM 111 and the second SIM 112, respectively.

For example, the first SIM 111 is a SIM subscribing to a mobile network operator of the first communication network 111a, and the electronic device 101 may receive a wireless communication service by accessing the first communication network 111a by using the first SIM 111. The second SIM 112 is a SIM subscribing to a mobile network operator of the second communication network 112a, and the electronic device 101 may receive a wireless communication service by accessing the second communication network 112a by using the second SIM 112. In accordance with various embodiments, the electronic device 101 may include an embedded subscriber identity module (eSIM) 201. The eSIM may be called an eUICC. The electronic device 101 may receive a wireless communication service by accessing the third communication network 113a by using the eSIM 201. At least some of the first communication network 111a, the second communication network 112a, or the third communication network 113a may be provided by an identical mobile network operator, or may be provided by each of different mobile network operators.

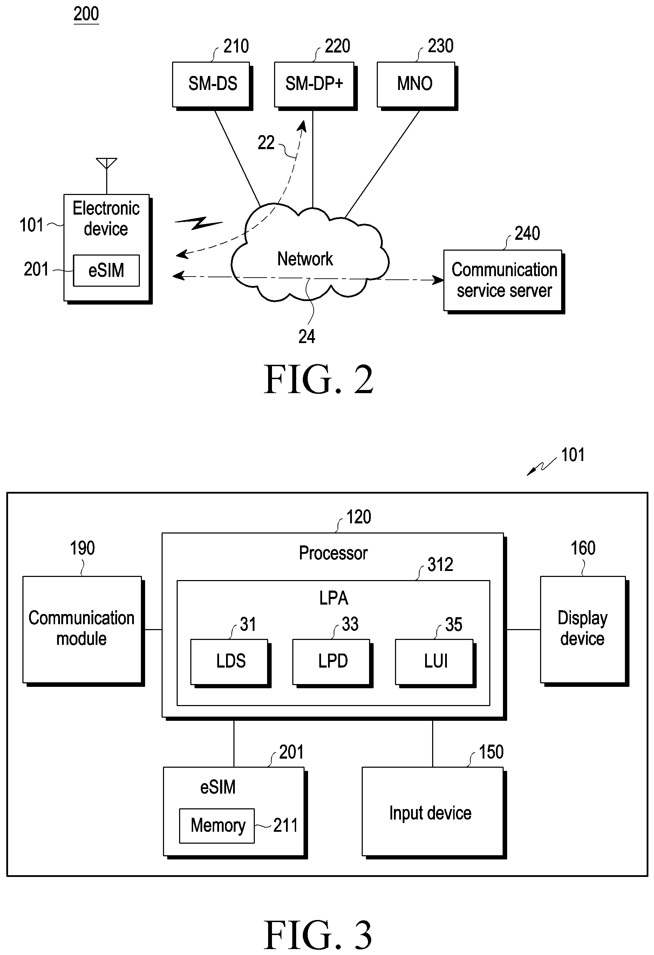

FIG. 2 illustrates a system for providing a profile-based communication connection to an electronic device according to various embodiments.

Referring to FIG. 2, a system 200 according to various embodiments may include an electronic device 101, an SM-DS server 210, an SM-DP+ server 220, an MNO server 230, and a communication service server 240.

According to various embodiments, the electronic device 101 (e.g., the electronic device 100 in FIG. 1) may include an eSIM 201. Although not illustrated for convenience of description, the electronic device 101 may include two or more slots capable of containing two or more rSIMs. Alternatively, the electronic device 101 may be implemented to include two eSIMs and one slot capable of containing one rSIM. In accordance with various embodiments, the electronic device 101 may include or accommodate N (N is a natural number) SIMs (an eSIM or an rSIM), and may perform switching to use some thereof. There is no limit to a combination of N SIMs, and there is also no limit to the number.

According to various embodiments, the eSIM 201 may be inserted into the electronic device 101, may be provided integrally with the electronic device 101, or may be implemented such that the electronic device 101 can be accessed. According to various embodiments, the eSIM 201 may enable the electronic device 101 to perform authentication with a server of a mobile network operator (MNO) by using information in the eSIM 201 (e.g., a profile including universal subscriber identity module information). According to an embodiment, the eSIM 201 may be called a subscriber identity module (SIM) card in the case of global system for mobile communications (GSM), or may be called a universal subscriber identity module (USIM) card in the case of wideband code division multiple access (WCDMA), long-term evolution (LTE), or new radio (NR). In addition, the eSIM 201 may be called by various names depending on communication methods. For example, when a user of the electronic device 101 subscribes to a wireless communication service provided by the mobile network operator, the electronic device 101 may perform, using information in the eSIM 201, for example, an international mobile subscriber identity (IMSI) value and a K value as an encryption key, an authentication process with a server of a mobile network operator in which the same values are stored, and then may use the wireless communication service. For example, the appropriate authentication process may be authentication and key agreement (AKA), and various other authentication methods may also be used.

According to various embodiments, the eSIM 201 may be manufactured as a dedicated card for a specific mobile network operator at the request of the mobile network operator, and may be preloaded with authentication information for access to a network of the mobile network operator (e.g., USIM application and subscriber identity ID (e.g., IMSI)) or an encryption key (e.g., a known K value or Ki value). Applications (or information) within the eSIM 201 may be installed, modified, deleted or updated using technologies such as over-the-air (OTA) when necessary.

According to various embodiments, the eSIM 201 may download and/or store, in the form of a profile, information for providing a communication service. According to an embodiment, a profile may be installed or stored in the process of manufacturing the eSIM 201, or may be downloaded by a terminal in an over-the-air (OTA) manner and installed or stored in the eSIM 201. For example, a profile may include a provisioning profile and an operational profile. It will be understood by those skilled in the art that the electronic device 101 may download an operational profile through a Wi-Fi short-distance connection or an Internet connection even when the provisioning profile is not installed, and that the provisioning profile does not need to be necessarily installed in the electronic device 101. For example, the operational profile may be a profile including subscriber identification information of the user of the electronic device, and the provisioning profile may include subscriber identification information or information (hereinafter, also referred to as "first information") for downloading a profile (hereinafter, also referred to as a "first operational profile") including subscriber identification information (hereinafter, also referred to as "first subscriber identification information") in the electronic device. The electronic device may download the first operational profile based on the first information of the provisioning profile in the eSIM 201.

According to various embodiments, the electronic device 101 may be provided with a communication service by using subscriber identification information (hereinafter, also referred to as "second subscriber identification information") of an operational profile (hereinafter, also referred to as a "second operational profile") installed or stored in the eSIM 201. For example, the profile including subscriber identification information may be a subscriber identity module (SIM) profile.

According to an embodiment, in addition to the subscriber identification information, the operational profile may further include subscriber network access authentication information, a subscriber phone book, subscriber personal information (e.g., SMS), the name of a mobile network operator to which a scriber scribes, an available service, the available amount of data, charges or service providing speed, or information by which subscriber authentication and traffic security key generation is performed when accessing a wireless communication network such as GSM, WCDMA, LTE, or NR to enable safe use of wireless communication.

According to various embodiments, the first information for downloading data (e.g., the first operational profile) including the first subscriber identification information may include communication session information for a first communication connection designated for the download of the first operational profile. For example, the communication session information may include subscription manager discovery service (SM-DS) server 210 access information for the download of the first operational profile or a mobile network operator network available for access to the SM-DS server 210.

According to various embodiments, the SM-DS server 210 may provide the electronic device 101 with the address of the SM-DP+ server 220 at which the first operational profile may be downloaded based on the provisioning profile.

According to various embodiments, the subscription manager data preparation plus (SM-DP+) server 220 may be a profile providing server, an off-card entity of profile domain, a profile encryption server, a profile generation server, a profile provisioner or a profile provider. The SM-DP+ server 220 may perform, based on a provisioning profile-based first communication connection request from the electronic device 101, a first communication connection 22 with the electronic device 101 through a wireless communication network, and may provide the first operational profile to the electronic device 101 through the first communication connection 22. According to various embodiments, the wireless communication network may be a specific node of the wireless communication network. For example, the wireless communication network may be a base station, a subscriber information management node, or a mobility management node of the wireless communication network. According to an embodiment, the wireless communication network may include a home location register (HLR) and/or authentication center (AuC) server to which the electronic device 101 accesses to perform a subscriber authentication function, and may be connected to the communication service server 240 which may be accessed after the authentication and provide a communication service such as voice communication or data communication.

According to various embodiments, the mobile network operator (MNO) server 230 may be a server associated with a mobile network operator. According to various embodiments, the MNO server 230 may request the SM-DP+ server 220 to prepare at least one profile (or profile package) (e.g., the first operational profile) associated with at least one piece of subscriber identification information (e.g., the first subscriber identification information), and may transmit information associated with the first operational profile to the SM-DP+ server 220. According to an embodiment, the MNO server 230 may transmit, to the SM-DP+ server 220, a signal for updating and managing the first operational profile. The MNO server 230 may allow a second communication connection 24 between the electronic device 101 and the communication service server 240 through the second operational profile installed in the eSIM 201 of the electronic device 101.

According to various embodiments, the communication service server 240 may be a server for providing a communication service. According to various embodiments, the communication service maybe a service associated with transmission or reception of data through the wireless communication network. According to an embodiment, the communication service may include a service associated with, in addition to download of an operational profile (e.g., the first operational profile including the first subscriber identification information), transmission or reception of other profiles (or data) that do not include subscriber identification information. For example, the communication service server 240 may include a service server associated with various data, such as a server associated with each of various types of application, a push server, a search server, or a market server, and communication services by the communication service server 240 may include various services such as data transmission/reception, notification reception, push reception, link reception and access, or a service request by an application.

According to various embodiments, when requesting a service related to transmission or reception of a profile (or data) which does not includes subscriber identification information, the electronic device 101 may perform, based on the second operational profile, the second communication connection 24 with the communication service server 240.

According to various embodiments, the SM-DS server 210, the SM-DP+ server 220, the MNO server 230, or the communication service server 240 is merely described as an example of implementation of servers for performing respective functions, and thus may be called by different names. Each of the SM-DS server 210, the SM-DP+ server 220, the MNO server 230, or the communication service server 240 may be configured as one server or multiple servers. Some or all of the SM-DS server 210, the SM-DP+ server 220, the MNO server 230, or the communication service server 240 may be configured as one integrated server. According to various embodiments, the electronic device (e.g., the electronic device 101 in FIG. 1A or 1B or the electronic device 101 in FIG. 2) may include a display (e.g., the display device 160 in FIG. 1A), a communication module (e.g., the communication module 190 in FIG. 1A), an embedded subscriber identity module (e.g., the subscriber identity module 196 in FIG. 1A or the eSIM 201 in FIG. 2) for storing first information associated with first communication connection for downloading data including first subscriber identification information for access to at least one communication service providing server, a memory (e.g., the memory 130 in FIG. 1A or the memory 211 in FIG. 3), and a processor (e.g., the processor 120 in FIG. 1A) electrically connected to the display, the communication module, and the memory, wherein the processor is configured to perform, using the communication module and based on the first information, the first communication connection for downloading the data including the first subscriber identification information, terminate the first communication connection when transmission or reception of data which does not include the first subscriber identification information is requested during the first communication connection, and transmit or receive the data by performing a second communication connection based on second subscriber identification information.

According to various embodiments, the first information may include a provisioning profile, and the data including the first subscriber identification information may include a first operational profile.

According to various embodiments, the processor may be configured to display the nonexistence of a second operational profile corresponding to the second subscriber identification information through the display when the second subscriber identification information does not exist in the subscriber identity module at the time of requesting the transmission or reception of the data during the first communication connection.

According to various embodiments, the processor may be further configured to display a purchase screen associated with the second operational profile when the second operational profile does not exist.

According to various embodiments, the processor may be configured to perform a second communication session based on the second operational profile which has been previously used.

According to various embodiments, the processor may be configured to perform a second communication session based on a second operational profile selected by a user.

According to various embodiments, the processor may be configured to display at least one indicator indicating a first communication connection based on the provisioning profile through the display.

According to various embodiments, the at least one indicator may include at least one type among a service provider name (SPN), radio access technology (RAT), and a received signal strength indicator (RSSI).

According to various embodiments, the processor may be configured to select the provisioning profile associated with a network being accessed through the communication module.

According to various embodiments, the processor may be configured to select the provisioning profile associated with a network being accessed through the communication module, based on at least one of a PLMN identifier, MCC, and region information of the accessed network.

FIG. 3 is a block diagram illustrating the configuration of an electronic device according to various embodiments.

Referring to FIG. 3, the electronic device 101 in FIG. 1A or 1B or the electronic device 101 in FIG. 2, according to various embodiments, may include the processor 120, the eSIM 201, the communication module 190, the display device 160, and the input device 150. Although not illustrated for convenience of description, the electronic device 101 may include two or more slots capable of containing two or more rSIMs.

According to various embodiments, the processor 120 (e.g., the processor 120 in FIG. 1A) may include one or multiple processors (e.g., the main processor 121 and the auxiliary processor 123 of FIG. 1A or an application processor and a communication processor), and may include a local profile assistant (LPA) 312 (e.g., an LPAd (device)) according to an embodiment. According to various embodiments, when the processor 120 includes multiple processors, a part of the LPA 312 may be included in some of the multiple processors, and another part of the LPA 312 may be included in others of the multiple processors. According to various embodiments, the LPA 312 may be included in the eSIM 201, and in this case, the LPA 312 may be called an LPAe (eUICC).

According to various embodiments, the LPA 312 may communicate with a server in order to support an operation of downloading, installing, and managing a profile of the eSIM 201, or may perform an operation of providing a user interface required for the operation of downloading, installing, and managing the profile. The LPA 312 may be a module for providing operations for local discovery services (LDSs) 31, local profile download (LPD) 33, and a local user interface (LUI) 35 in the electronic device 101.

According to various embodiments, the LDS 31 may communicate with the SM-DS server 210 and receive the address of the SM-DP+ server 220 at which an operational profile can be downloaded from the SM-DS server 210 based on a provisioning profile.

According to various embodiments, the LPD 33 may perform, based on the address of the SM-DP+ server 220, the first communication connection 22 with the SM-DP+ server 220 through a wireless communication network, and may receive the first operational profile from the SM-DP+ server 220 through the first communication connection 22. According to various embodiments, the LPD 33 may support downloading, enabling, disabling, or deleting of a profile or downloading of a profile policy rule (PPR), initiated by a network, or may support enabling, disabling, or deleting a profile or resetting eUICC by an electronic device.

According to various embodiments, the LUI 35 may provide various types of user interfaces when downloading the operational profile. According to an embodiment, the LUI 35 may support data exchange between the LDS 31 and a user and between the LPD 33 and the user, and may include a UI for transmitting a user input to the LDS 31 or the LPD 33.

According to an embodiment, the processor 120 may use (or execute) the LPA 312 to perform a communication service based on information stored in the eSIM 201. For example, the processor 120 may use the LPA 312 to perform a first communication connection with the SM-DP+ server 220 through the communication module 190 in order to download, based on a provisioning profile stored in the eSIM 201, a profile (e.g., the first operational profile) including the first subscriber identification information. When transmission or reception a profile or data, which does not include subscriber identification information, is requested during the first communication connection by using the LPA 312, the processor 120 may terminate the first communication connection, and may perform a second communication connection based on second subscriber identification information to transmit or receive the profile or the data which does not included the subscriber identification information.

According to various embodiments, the eSIM 201 (e.g., the subscriber identity module 196 in FIG. 1A or the eSIM 201 in FIG. 2) may include one or multiple profiles as information for receiving a communication service. A profile may imply a profile obtained by packaging, in a software forme, at least one among an application, a file system, and an authentication key value stored in the eSIM 201. For example, the profile may include a provisioning profile and an operational profile. The operational profile may include subscriber identification information, and in addition to the subscriber identification information, may further include subscriber network access authentication information, a subscriber phone book, subscriber's personal information (e.g., SMS), the name of a mobile network operator to which a subscriber subscribes, an available service, the available amount of data, charges or service providing speed, or information by which subscriber authentication and traffic security key generation is performed when accessing a wireless communication network such as GSM, WCDMA, LTE, or NR to enable safe use of wireless communication. According to an embodiment, the operational profile may include a SIM profile. For example, the SIM profile may include a SIM file system (a master file (MF), a dedicated file (DF), or an elementary file (EF)), and a subscriber identification information (IMSI) value may be stored in the elementary file.

According to various embodiments, the provisioning profile may be a profile including first information for downloading first operational profile from the electronic device. For example, the first information may include communication session information for a first communication connection designated for download of the first operational profile. For example, the communication session information may include SM-DS server (e.g., the SM-DS server 210 in FIG. 2) access information for downloading the first operational profile, and may include mobile network operator network available for SM-DS server access.

According to various embodiments, the communication module 190 (e.g., the communication module 190 in FIG. 1A) may perform first communication based on a provisioning profile or second communication based on a second operational profile. At least one screen associated with the first communication based on the provisioning profile or the second communication based on the second operational profile may be displayed on the display device 160.

In accordance with an embodiment, the LPA 312 has been described as an element included in the processor 120, but at least some functions of the LPA 312 may be performed in the processor 120, or a separate LPA 312 may operate in conjunction with the processor 120. For example, the LPA 312 may be included in a program (e.g., the program 140 in FIG. 1A), and may be loaded and executed on the processor 120. When the LPA 312 is loaded and executed on the processor 120, this may be understood as an operation of the processor 120. According to various embodiments, the functional modules (e.g., the LDS 31, the LPD 33, or the LUI 35) included in the LPA 312 are exemplarily distinguished, and may be expressed as other functional modules and may not be limited to the embodiment. According to various embodiments, the LPA 312 may be included in the eSIM 201.

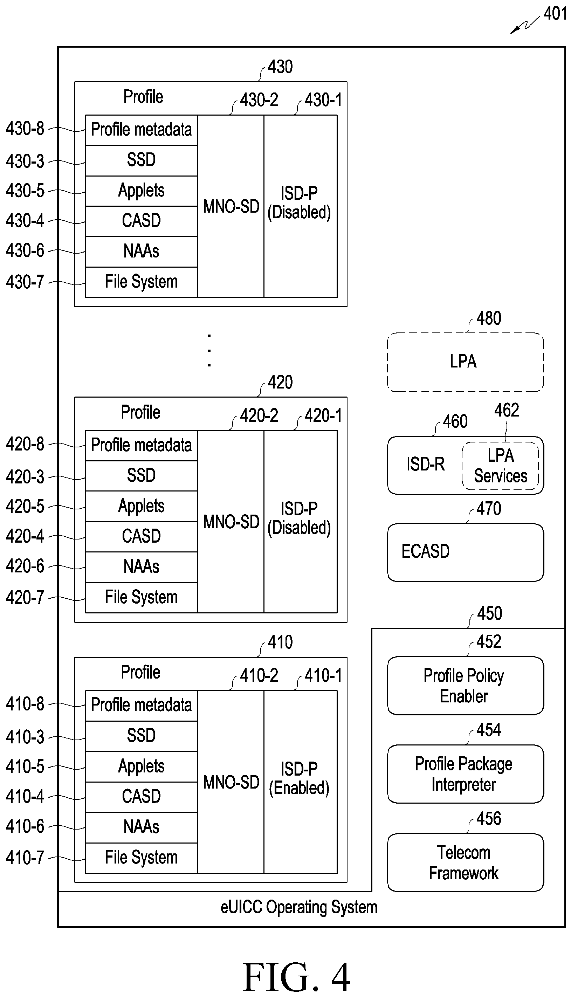

FIG. 4 illustrates an internal structure of an eUICC according to various embodiments.

An eUICC 401 (e.g., the eSIM 201 in FIG. 2 or 3) according to an embodiment may be shaped as a card or a chip, and at least one profile 410, 420, or 430 in the form of software may be installed therein. According to various embodiments, each of the at least one profile 410, 420, or 430 may be a provisioning profile or an operational profile. The at least one profile 410, 420, or 430 may operate on an eUICC operating system (OS) 450. Each of the at least one profile 410, 420, or 430 may be enabled or disabled by a processor or an LPA (e.g., the LPA 312 in FIG. 3 or the LPA 480 in FIG. 4). In FIG. 4, according to an embodiment, one profile 410 may be enabled, and the other profiles 420 and 430 may be disabled.

According to various embodiments, the eUICC operating system (OS) 450 of the eUICC 401 may include a profile policy enabler 452, a profile package interpreter 454, and a telecom framework 456. According to an embodiment, the profile policy enabler 452 manage a profile policy rule (PPR) for each of the at least one profile 410, 420, or 430. According to an embodiment, the profile package interpreter 454 may unpackage a profile package, received from the SM-DP+ 220, in a form in which the profile package can be installed in the eUICC 401. According to an embodiment, the telecom framework 556 may perform a function associated with communication of applications in the eUICC 401. According to various embodiments, the eUICC 401 may include an issuer security domain root (ISD-R) 460 and an ECASD 470. According to an embodiment, the ISD-R 460 may manage the at least one profile 410, 420, or 430 installed in the eUICC 401. For example, the ISD-R 460 may include an LPA services 462, and the LPA services 462 may manage the at least one profile 410, 420, or 430 installed in the eUICC 401 through a processor or an LPA (e.g., the LPA 312 in FIG. 3 or the LPA 480 in FIG. 4) and an interface. According to an embodiment, the eUICC controlling authority security domain (ECASD) 470 may perform security processing of the at least one profile 410, 420, or 430 installed in the eUICC 401.

According to various embodiments, each of the at least one profile 410, 420, or 430 may include an ISD-P 410-1, 420-1, or 430-1, an MNO-SD 410-2, 420-2, or 430-2, a supplementary security domain (SSD) 410-3, 420-3, or 430-3, a controlling authority security domain (CASD) 410-4, 420-4, or 430-4, applets 410-5, 420-5, or 430-5, network access applications (NAAs) 410-6, 420-6, or 430-6, a file system 410-7, 420-7, or 430-7, or profile metadata 410-8, 420-8, or 430-8.

According to an embodiment, the ISD-P 410-1, 420-1, or 430-1 may include information for decoding and interpreting a profile package, and may be used to unpackage and install a profile package received from the SM-DP+ 220 in cooperation with the profile package interpreter 454.

According to an embodiment, the MNO-SD 410-2, 420-2, or 430-2 may include an over-the-air (OTA) key of MN0, and may include information for providing a secure OTA channel capable of communicating with the MN0.

According to an embodiment, the supplementary security domain (SSD) 410-3, 420-3, or 430-3 and the controlling authority security domain (CASD) 410-4, 420-4, or 430-4 may include information for secure processing of a profile.

According to an embodiment, the applets 410-5, 420-5, or 430-5 may include various pieces of application information associated with a user of a profile.

According to an embodiment, the network access applications (NAAs) 410-6, 420-6, or 430-6 may include application information that allows a profile to access a network.

According to an embodiment, the file system 410-7, 420-7, or 430-7 may include a file system associated with each piece of information in a profile.

According to an embodiment, the profile metadata 410-8, 420-8, or 430-8 may also be called a profile record, and may include metadata information about a profile in a text form. The metadata information may include at least one among an integrated circuit card ID (ICCID) of a profile, a profile name, the name of a profile providing MNO, a profile nickname of a user, an icon, a profile class, notification configuration information, profile owner information, or profile policy rule (PPR).

According to various embodiments, the profile ICCID may indicate a unique identifier of each profile as a profile identifier. The profile name may include the name of each profile. The name of a profile providing MNO may include the name of a mobile network operator that has provided a profile. The user's profile nickname may include a profile nickname designated by the user. The icons may include an icon corresponding to a profile. The profile class may include information indicating whether the type of profile is a provisioning profile or an operational profile. The notification configuration information may include the address of a server (e.g., the SM-DP+ server 220) which is to receive a notification. The profile owner information may include information about a mobile country code (MCC), a mobile network code (MNC), or group identifier (GID) 1 or 2, which is associated with a profile owner. For example, the mobile country code (MCC) may be a code for identifying a country, and the mobile network code (MNC) may be a code for identifying a mobile network operator. The group identifier (GID) 1 or 2 may be code domain information for identifying a group or a domain to which a profile belongs. The domain information may include a group including multiple countries. The profile policy rule (PPR) may include policy rule information for managing a profile.

According to various embodiments, the electronic device 101 may use profile class information of profile metadata 410-8, 420-8, or 430-8 included in each of the at least one profile 410, 420, or 430 included in the eUICC 401 to identify whether a profile is a provisioning profile or an operational profile, and may enable or disable each of the provisioning profile or the operational profile through an LPA (the LPA 312 in FIG. 3 or the LPA 480 in FIG. 4).

FIG. 5A illustrates a block diagram of an electronic device according to various embodiments.

According to various embodiments, the electronic device 101 includes at least one among a processor 120, a communication processor 510, an RF circuit 520, a first slot 530, a second slot 540, an eSIM 550, or a switch 560. The communication processor 510 may establish a communication channel of a band to be used for wireless communication and may support network communication through the established channel. For example, the communication processor 510 may support at least one of second generation (2G), 3G, 4G, or 5G network communication. The RF circuit 520 may include at least one of, for example, a radio frequency integrated circuit (RFIC), a radio frequency front end (RFFE), or an antenna module. The RF circuit 520 may process data (e.g., a baseband signal) output from the communication processor 510 into an RF signal, and may send the RF signal through an antenna module. Alternatively, the RF circuit 520 may convert an RF signal received through an antenna module into a baseband signal, and may transmit the baseband signal to the communication processor 510. The RF circuit 520 may process an RF signal or a baseband signal according to a communication method supported by the communication processor 510, and the type of the RF circuit 520 is not limited. An interface between elements may be implemented as, for example, a general-purpose input/output (GPIO), universal asynchronous receiver/transmitter (UART) (e.g., a high speed-UART (HS-UART)), or peripheral component interconnect bus express (PCIe) interface, but the type thereof is not limited. Alternatively, at least some of the elements may exchange control information or packet data information by using, for example, a shared memory. Meanwhile, in the embodiment in FIG. 5A, the processor 120 and the communication processor 510 have been illustrated as different types of hardware, but this is merely an example. The processor 120 and the communication processor 510 may be implemented as different types of hardware, but according to another embodiment, the processor 120 and the communication processor 510 may be implemented in a single chip.

The communication processor 510 according to various embodiments may perform an authentication procedure based on information stored in the above-mentioned SIM. The communication processor 510 may be connected to a first SIM 531 through the first slot 530. For example, the first SIM 531 may be connected to a stack (e.g., a stack according to ISO7816) of the communication processor 510. In the embodiment in FIG. 5A, the communication processor 510 may include two stacks. For example, the first slot 530 may be a structure capable of containing the first SIM 531 which is an rSIM, and when the first SIM 531 is received, may include at least one terminal capable of transmitting information from the first SIM 531 to the communication processor 510. The second slot 540 may be a structure capable of containing a second SIM 541 which is an rSIM, and when the second SIM 541 is received, may include at least one terminal capable of transmitting information from the second SIM 541 to the communication processor 510. The first slot 530 and the second slot 540 may be the same type, but may be different types depending on implementation. The communication processor 510 may obtain information stored in the first SIM 531 from the first SIM 531 received in the first slot 530. For example, at least one an integrated circuit card identifier (ICCID), an IMSI, home public land mobile network (HPLMN)-related information, or a mobile subscriber international ISDN number (MSISIDN) may be stored in at least one of the first SIM 531, the second SIM 541, or the eSIM 550 (e.g., the eSIM 201 in FIG. 3). This may be called an elementary file (EF). The communication processor 510 may perform, based on the obtained information stored in the first SIM 531, an authentication procedure for network communication corresponding to the first SIM 531 through the RF circuit 520. When authentication is successful, the communication processor 510 may perform network communication corresponding to the first SIM 531 through the RF circuit 520.

At least one of the processor 120 or the communication processor 510 according to various embodiments may control the state of the switch 560. The state of the switch 560 may be one of a first state, in which the communication processor 510 is connected to the second slot 540, or a second state, in which the communication processor 510 is connected to the eSIM 550. For example, at least one of the processor 120 or the communication processor 510 may control the switch 560 such that the second slot 540 is connected to the communication processor 510. In other words, at least one of the processor 120 or the communication processor 510 may provide the switch 560 with a control signal capable of controlling the state of the switch 560 to the first state. When a default state in which the switch 560 does not receive a specific signal is the first state, at least one of the processor 120 or the communication processor 510 may not perform a special operation such that the second slot 540 is connected to the communication processor 510. A signal for controlling the switch 560 may be transmitted, for example, through a general-purpose input/output (GPIO), but an interface therefor is not limited. In some cases, the state of the switch 560 may be controlled as a third state in which a connection to either the second slot 540 or the eSIM 550 is not made. The switch 560 may include, for example, at least one metal oxide semiconductor field effect transistor (MOSFET), or a freewheeling switch, but those skilled in the art will understand that the type thereof is not limited.

Although FIG. 5A shows that the communication processor 510 is selectively connected to the second slot 540 or the eSIM 550 according to control of the state of the switch 560, but this is merely exemplary. According to various embodiments, the communication processor 510 may selectively use a soft SIM installed exclusively for a mobile network operator in the electronic device 101 instead of the eSIM 550. For example, when a soft SIM is installed in the electronic device 101 (e.g., in the processor 120 or in the communication processor 510), the communication processor 510 may be connected to the second slot 540 to use the second SIM 541, or may selectively use the soft SIM. According to various embodiments, an eSIMs in each of embodiments described below may be replaced with the soft SIM, and may be applied identically or similarly.

For example, referring to FIG. 5B, according to various embodiments, the switch 560 may be selectively connected to one of the second slot 540 or the eSIM 550. The second slot 540 may include at least one among a voltage common collector (VCC) terminal 540a, a reset (RST) terminal 540b, a clock (CLK) terminal 540c, a single wire protocol (SWP) terminal 540d, a ground (GND) terminal 540e, a voltage programming power (VPP) terminal 540f, an input/output (I/O) terminal 540g, or an SWP terminal 540h. The second SIM 541 may include terminals connectable to the VCC terminal 540a, the RST terminal 540b, the CLK terminal 540c, the SWP terminal 540d, the GND terminal 540e, the VPP terminal 540f, the I/O terminal 540g, or the SWP terminal 540h. The second SIM 541 may be received in an opening 540i of the second slot 540. When the second SIM 541 is received in the second slot 540, the terminals 540a to 540h of the second slot 540 may be brought in contact with (or connected to) terminals (not shown) of the second SIM 541, and thus the second SIM 541 may be connected to the communication processor 510. In various embodiments, the fact that the switch 560 is in the first state may mean that at least some of the multiple terminal 540a to 540h of the second slot 540 are connected to the communication processor 510. For example, the eSIM 550 may include at least one among a VCC terminal 550a, an RST terminal 550b, a CLK terminal 550c, an SWP terminal 550d, a GND terminal 550e, a VPP terminal 550f, an I/O terminal 550g, or an SWP terminal 550h. The second SIM 541 may include terminals connectable to the VCC terminal 550a, the RST terminal 550b, the CLK terminal 550c, the SWP terminal 550d, the GND terminal 550e, the VPP terminal 550f, the I/O terminal 550g, or the SWP terminal 550h. In various embodiments, the fact that the switch 560 is in the second state may mean that at least some of the multiple terminal 550a to 550h of the eSIM 550 are connected to the communication processor 510.

In accordance with various embodiments, while the communication processor 510 is connected to the second slot 540, the communication processor 510 may obtain information stored in the second SIM 541 from the second SIM 541 accommodated in the second slot 540. For example, at least one of the processor 120 or the communication processor 510 may control the switch 560 to connect the eSIM 550 to the communication processor 510. In other words, at least one of the processor 120 or the communication processor 510 may provide the switch 560 with a control signal capable of controlling the state of the switch 560 to a second state. A default state in which the switch 560 does not receive a specific signal may be the second state. In this case, at least one of the processor 120 or the communication processor 510 may not perform a special operation such that the eSIM 550 is connected to the communication processor 510. In various embodiments herein, the expression that the processor 120 or the communication processor 510 controls the switch 560 to have a specific state may include not only outputting a signal allowing the switch 560 to have the corresponding state but also outputting no special signal allowing the switch 560 to have the corresponding state. As described above, the communication processor 510 may perform, based on the obtained information stored in the eSIM 550, an authentication procedure for network communication corresponding to the eSIM 550. When authentication is successful, the communication processor 510 may perform the network communication corresponding to the eSIM 550 through the RF circuit 520.

According to various embodiments, the communication processor 510 may perform dual SIM network communications according to the first SIM 531 and the second SIM 541, or may perform dual SIM network communications according to the first SIM 531 and the eSIM 550. It will be understood by those skilled in the art that dual SIM network communications may be performed in either a DSDS mode or a DSDA mode depending on the implementation of the RF circuit 520.

According to various embodiments, the communication processor 510 may include two stacks (e.g., stacks according to ISO7816) for processing a SIM, and the first SIM 531 and the second SIM 541 may be connected to the two stacks, or the first SIM 531 and the eSIM 550 may be connected in two stacks. For example, the first slot 530 may be fixedly connected to one stack, and the second slot 540 or the eSIM 550 may be selectively connected to the other stack. As described above, an embodiment of a structure capable of processing three or more SIMs without adding a stack of the communication processor 510 is disclosed herein.

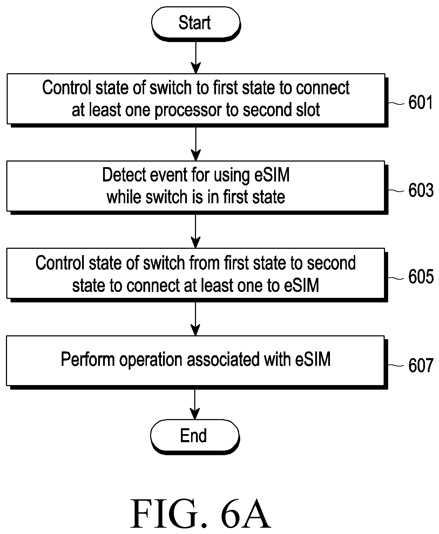

FIG. 6A is a flowchart illustrating an operation method of an electronic device according to various embodiments.

Operations in FIG. 6A according to various embodiments will be described with reference to the electronic device 101 in FIG. 1A or 5A.

In accordance with various embodiments, in operation 601, the electronic device 101 (e.g., at least one of the processor 120 or the communication processor 510) may connect at least one processor (e.g., the communication processor 510) to the second slot 540 by controlling the state of the switch 560 to a first state. For example, the electronic device 101 may connect the communication processor 510 to the second slot 540, based on detection of an event for use of the second SIM 541. The event for use of the second SIM 541 may be, for example, detection of reception of the second SIM 541 into the second slot 540, or a user command to use the second SIM 541, but if the event is an event requiring data transmission/reception between the second SIM 541 and the communication processor 510, the type thereof is not limited. Alternatively, the first SIM 531 and the second SIM 541 may be configured as default SIMs for use. In this case, the communication processor 510 may be connected to the second slot 540 without special control of the electronic device 101.

In accordance with various embodiments, in operation 603, may detect an event for using the eSIM 550 while the switch 560 is in the first state. The event for using the eSIM 550 may be, for example, enabling of at least one profile configured in the eSIM 550, or deletion or addition of at least one profile configured in the eSIM 550, but the event is an event requiring data transmission/reception between the eSIM 550 and the communication processor 510, the type thereof is not limited. In operation 605, the electronic device 101 may connect the at least one processor (e.g., the communication processor 510) to the eSIM 550 by controlling the state of the switch 560 from the first state to a second state. In operation 607, the electronic device 101 may perform an operation associated with the eSIM 550. For example, the electronic device 101 may use information stored in the eSIM 550 to perform network authentication. Alternatively, the electronic device 101 may control the eSIM 550 to delete or add a profile of the eSIM 550.

In FIG. 6A, the configuration in which the electronic device 101 controls the switch 560 from the first state to the second state, based on detection of an event for using the eSIM 550, is illustrated, but this is exemplary. In accordance with various embodiments, it will be understood by those skilled in the art that the electronic device 101 controls the state of the switch 560 from the second state to the first state based on detection of an event for using the second SIM 541 while the eSIM 550 is connected to the communication processor 510.

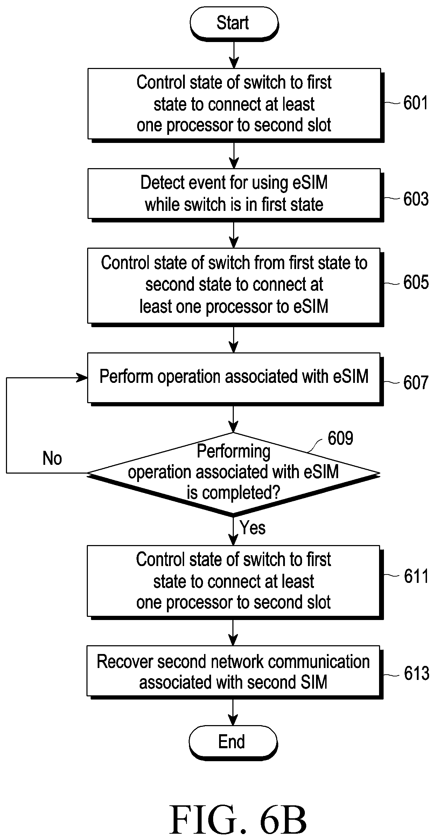

FIG. 6B is a flowchart illustrating an operation method of an electronic device according to various embodiments. The above-mentioned operations, among operations in FIG. 6B, will be described briefly.

The operations in FIG. 6B according to various embodiments will be described with reference to the electronic device 101 of FIG. 1A or 5A. In accordance with various embodiments, in operation 601, the electronic device 101 (e.g., at least one of the processor 120 or the communication processor 510) may connect at least one processor (e.g., the communication processor 510) to the second slot 540 by controlling the state of the switch 560 to a first state. It is assumed that the electronic device 101 performs network communication corresponding to the first SIM 531 and network communication corresponding to the second SIM 541 while the state of the switch 560 is the first state. In operation 603, the electronic device 101 may detect an event for using the eSIM 550 while the switch 560 is in the first state. For example, the electronic device 101 may detect an event for temporarily using the eSIM 550. In various embodiments, the event for using the eSIM 550 may include an event for temporarily using the eSIM 550 and an event for non-temporarily using the eSIM 550. For example, the event for temporarily using the eSIM 550 may be deletion or addition of a profile configured in the eSIM 550, or a request for information about a profile of the eSIM 550, but this is exemplary. In relation to the event for temporarily using the eSIM 550, there is no limitation on an event which requires transmission/reception data to/from the eSIM 550 without requiring connection of network communication corresponding to the eSIM 550 or while requiring temporary connection of network communication. The event for non-temporarily using the eSIM 550 may be an event requiring connection of network communication corresponding to the eSIM 550, or an event requiring the connection and maintenance of network communication for at least a predetermined time (or a procedure). When the event for temporarily using the eSIM 550 is detected, the electronic device 101 may connect, in operation 605, at least processor (e.g., the communication processor 510) to the eSIM 550 by controlling the state the switch 560 from the first state to a second state. While the state of the switch 560 is the second state, network communication corresponding to the second SIM 541 may be released. The electronic device 101 may perform an operation associated with the eSIM 550 in operation 607.

In accordance with various embodiments, in operation 609, the electronic device 101 may determine whether the operation associated with the eSIM 550 has been completed. When it is determined that the operation associated with the eSIM 550 has not been completed (609-No), the electronic device 101 may perform the operation associated with the eSIM 550. When it is determined that the operation associated with the eSIM 550 has been completed (609-Yes), the electronic device 101 may connect, in operation 611, the at least one processor (e.g., the communication processor 510) to the second slot 540 by controlling the state of the switch 560 to the first state. Accordingly, the second SIM 541 received in the second slot 540 may be connected to the communication processor 510. In operation 613, the electronic device 101 may recover network communication associated with the second SIM 541. The electronic device 101 may recover the network communication, based on information stored in the second SIM 541.

Although not illustrated, if an event for non-temporarily using the eSIM 550, for example, a network communication connection event corresponding to the eSIM 550, is detected, the electronic device 101 may form network communication corresponding to the eSIM 550, and may perform data transmission/reception based on the corresponding network communication. In this case, operations 609 to 613 may not be performed.

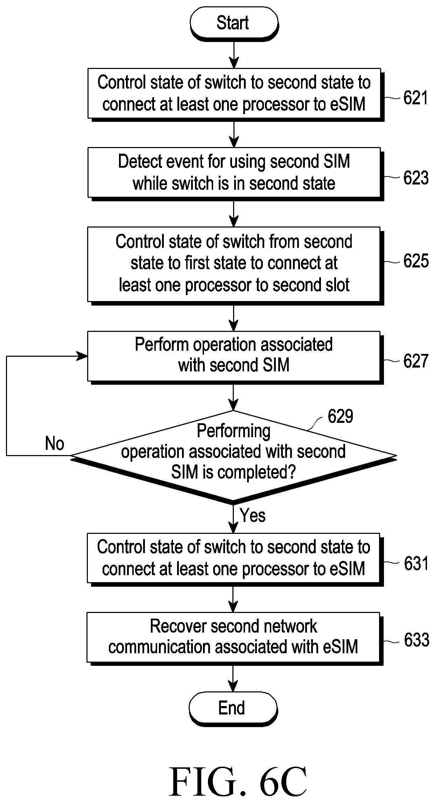

FIG. 6C is a flowchart illustrating an operation method of an electronic device according to various embodiments. The above-mentioned operations, among operation in FIG. 6C, will be described briefly.

The operations in FIG. 6C according to various embodiments will be described with reference to the electronic device 101 in FIG. 1A or 5A. In accordance with various embodiments, in operation 621, the electronic device 101 (e.g., at least one of the processor 120 or the communication processor 510) may connect at least one processor (e.g., the communication processor 510) to the eSIM 550 by controlling the state of the switch 560 to a second state. For example, the electronic device 101 may connect the communication processor 510 to the eSIM 550, based on detection of an event for using the eSIM 550. The event for using the eSIM 550 may be a user command to use the eSIM 550, but in the case of an event requiring data transmission/reception between the eSIM 550 and the communication processor 510, the type thereof is not limited. Alternatively, the first SIM 531 and the eSIM 550 may be configured as default SIMs for use. In this case, the communication processor 510 may be connected to the eSIM 550 without special control of the electronic device 101.

In accordance with various embodiments, in operation 623, the electronic device 101 may detect an event for using the second SIM 541 while the switch 560 is in the second state. For example, the electronic device 101 may detect an event for temporarily using the second SIM 541. In various embodiments, the event for using the second SIM 541 may include an event for temporarily using the second SIM 541 and an event for non-temporarily using the second SIM 541. For example, the event for temporarily using the second SIM 541 may be a request for information about the second SIM 541, but this is exemplary. In relation to the event for temporarily using the second SIM 541, there is no limitation on an event which requires transmission/reception of data to/from the second SIM 541 without requiring connection of network communication corresponding to the second SIM 541 or while requiring temporary network communication. The event for non-temporarily using the second SIM 541 may be an event requiring connection of network communication corresponding to the second SIM 541 or an event requiring the connection and maintenance of the network communication for at least a predetermined time (or a predetermined procedure). When the event for temporarily using the second SIM 541 is detected, the electronic device 101 may connect, in operation 625, at least one processor (e.g., the communication processor 510) to the second SIM 541 by controlling the state of the switch 560 from the second state to a first state. While the state of the switch 560 is the first state, the network communication corresponding to the eSIM 550 may be released. In operation 627, the electronic device 101 may perform an operation associated with the second SIM 541.

In accordance with various embodiments, in operation 629, the electronic device 101 may determine whether the operation associated with the second SIM 541 has been completed. When it is determined that the operation associated with the second SIM 541 has not been completed (629-No), the electronic device 101 may perform the operation associated with the second SIM 541. When it is determined that the operation associated with the second SIM 541 has been completed (629-Yes), the electronic device 101 may connect, in operation 631, the at least one processor (e.g., the communication processor 510) to the eSIM 550 by controlling the state of the switch 560 to the second state. In operation 633, the electronic device 101 may recover network communication associated with the eSIM 550. The electronic device 101 may recover the network communication, based on information stored in the eSIM 550.

Although not illustrated, if an event for non-temporarily using the second SIM 541, for example, a network communication connection event corresponding to the second SIM 541, is detected, the electronic device 101 may form network communication corresponding to the second SIM 541, and may perform data transmission/reception based on the corresponding network communication. In this case, operations 629 to 633 may not be performed.

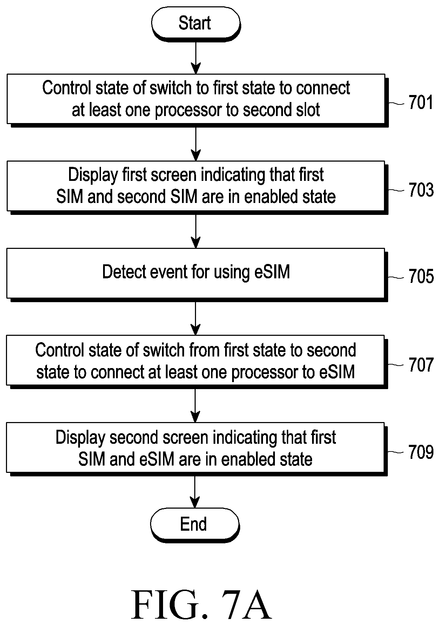

FIG. 7A is a flowchart illustrating an operation method of an electronic device according to various embodiments.

Operations in FIG. 7A according to various embodiments will be described with reference to the electronic device 101 in FIG. 1A or 5A.

The above-mentioned operations, among the operations in FIG. 7A, will be described briefly.

In accordance with various embodiments, in operation 701, the electronic device 101 (e.g., at least one of the processor 120 or the communication processor 510) may connect at least one processor (e.g., the communication processor 510) to the second slot 540 by controlling the state of the switch 560 to a first state. The second SIM 541 may be connected to the communication processor 510 through the second slot 540. In operation 703, the electronic device 101 may control, for example, the display device 160 to display a first screen indicating that the first SIM 531 and the second SIM 541 are in an enabled state. The first screen may include at least some among, for example, information about the first SIM 531 and the second SIM 541, information about network communication connected based on the first SIM 531 and the second SIM 541, or information indicating whether the first SIM 531 and the second SIM 541 are enabled. Here, enabling of the first SIM 531 and the second SIM 541 may imply that network communication corresponding to the first SIM 531 and the second SIM 541 has been formed. For example, even if at least one of the first SIM 531 and the second SIM 541 is in a standby state based on a DSDS mode, the corresponding SIM may be described as being in an enabled state when the corresponding SIMs can be woken up at a predetermined period (or, based on an event) in the standby state. Alternatively, even if at least one of the first SIM 531 and the second SIM 541 is in a sleep mode according to discontinuous reception (DRX), the corresponding SIMs may be described as being in an enabled state when the corresponding SIMs can be woken up at a predetermined period (or, based on an event). The configuration of the first screen is not limited, and will be described later. Alternatively, even if network communication is not connected because PLMN search, cell search, camp-on for a cell, or RRC connection for a specific cell with respect to a specific SIM fails, the corresponding SIM may be described as being in an enabled state when a procedure for connection of network communication for the corresponding SIM is being performed.

In accordance with various embodiments, in operation 705, the electronic device 101 may detect an event for using the eSIM 550. For example, the electronic device 101 may detect an event for using the eSIM 550, based on a user input on the first screen. In operation 707, the electronic device 101 may connect the at least one processor to the eSIM 550 by controlling the state the switch 560 from the first state to the second state. In operation 709, the electronic device 101 may display a second screen indicating that the first SIM 531 and the eSIM 550 are in the enabled state.

As the eSIM 550 switches in the enabled state, the second SIM 541 may switch to a disabled state. The electronic device 101 may output a message indicating that the network communication corresponding to the second SIM 541 will be released, and, for example, may be configured to enable the eSIM 550 when an additional command is received from a user.

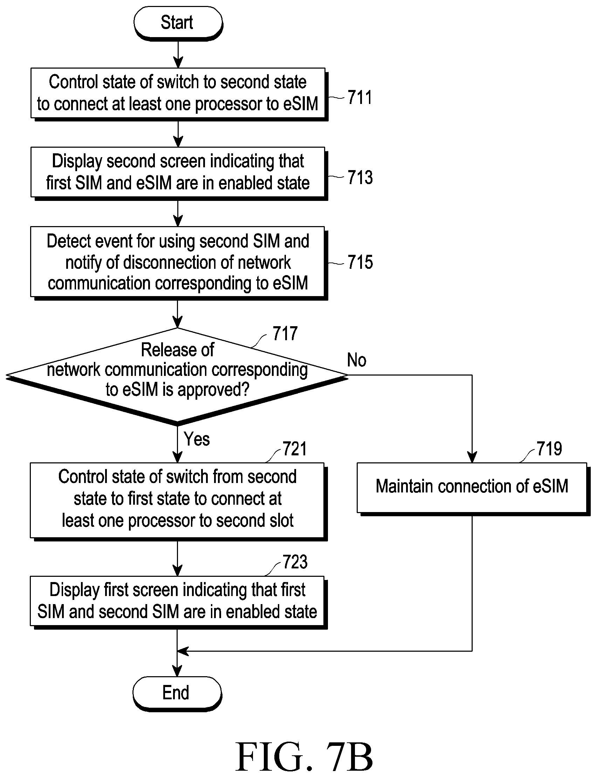

FIG. 7B is a flowchart illustrating an operation method of an electronic device according to various embodiments. The above-mentioned operations, among operations in FIG. 7B, will be described briefly. FIG. 7B will be described with reference to the electronic device 101 in FIG. 1A or 5A, and FIGS. 8A to 8D.

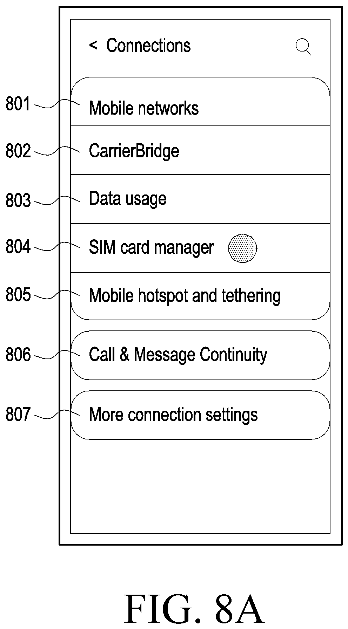

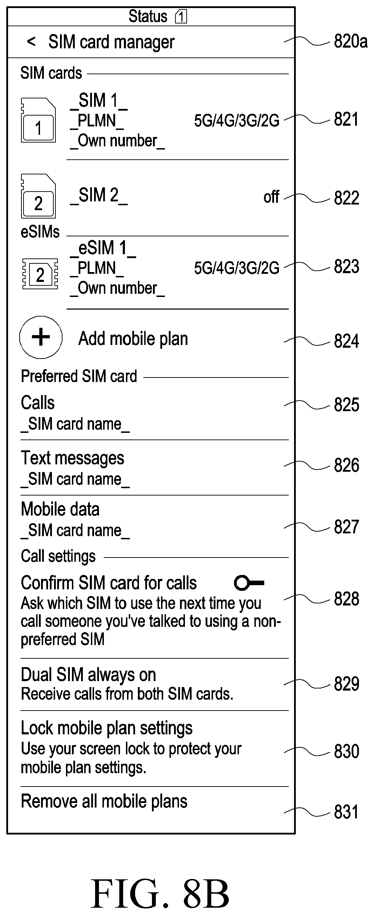

In accordance with various embodiments, in operation 711, the electronic device 101 (e.g., at least one of the processor 120 or the communication processor 510) may connect at least one processor (e.g., the communication processor 510) to the eSIM 550 by controlling the state of the switch 560 to a second state. In operation 713, the electronic device 101 may display a second screen indicating that the first SIM 531 and the eSIM 550 are in an enabled state. For example, as in FIG. 8A, the electronic device 101 may display a screen for setting a connection of network communication. The screen for configuring the connection may include at least one among, for example, a mobile network setting tab 801, a carrier-bridge setting tab 802, a data usage determination tab 803, a SIM card manager setting tab 804, a mobile hotspot and tethering setting tab 805, a call and message continuity setting tab 806, or a more connection setting tab 807, but the type of tab is not limited. When the SIM card manager setting tab 804 is selected from among the tabs 801 to 807, the electronic device 101 display a screen 820a including SIM-related information as illustrated in FIG. 8B.

In accordance with various embodiments, the screen 820a including SIM-related information may include a tab 821 corresponding to the first SIM 531, a tab 822 corresponding to the second SIM 541, and a tab 823 corresponding to a first profile (e.g., eSIM1) stored in the eSIM 550. The electronic device 101 may display information related to the first SIM 531 (e.g., own number (e.g., mobile station international subscriber directory number (MSISDN)), PLMN information, or a supportable network communication type) on the tab 821 corresponding to the first SIM 531. The electronic device 101 may display, based on the enabled state of the first SIM 531, the supportable network communication type to be visually distinguished from the tab 822 corresponding to a disabled SIM (e.g., the second SIM 541). The number "1" included in an icon in the tab 821 may correspond to, for example, the first slot 530, and the number "2" included in icons in the tabs 822 and 823 may correspond to, for example, the second slot 540. However, this is merely exemplary, and the icons may be omitted. The electronic device 101 may display information related to the second SIM 541 (e.g., own number, PLMN information, or a supportable network communication type) in the tab 822 corresponding to the second SIM 541. However, the electronic device 101 may display, based on the disabled state of the second SIM 541, only the text "off" on the tab 822 corresponding to the second SIM 541. The electronic device 101 may display information related to the eSIM 550 (e.g., own number, PLMN information, or a supportable network communication type) on the tab 823 corresponding to the first profile. The electronic device 101 may display, based on the enabled state of the eSIM 550, the supportable network communication type to be visually distinguished from the tab 822 corresponding to a disabled SIM (e.g., the second SIM 541). The electronic device 101 may display a supportable network type (e.g., 5G/4G/3G/2G) with respect to an enabled SIM (e.g., the first SIM 531 and the eSIM 550) and an indicator (e.g., text of "off") indicating a disabled state with respect to a disabled SIM (e.g., the second SIM 541), so that a user identifies currently enabled/disabled SIMs. The screen 820a including SIM-related information may further include, based on the implementation, a tab 824 for adding a mobile plan, a tab 825 related to calls, a tab 826 related to text messages, a tab 827 related to mobile data, a tab 828 to confirm a SIM card for calls, a dual SIM always on tab 829, a tab 830 to lock mobile plan settings, and a tab 831 to remove all mobile plans, but there is no limitation. A mobile plan may include a profile.

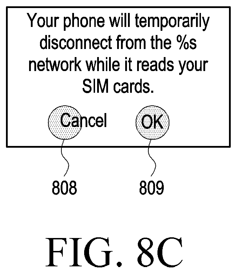

In accordance with various embodiments, in operation 715, the electronic device 101 may notify of detection of an event for using the second SIM 541 and disconnection of network communication corresponding to the eSIM 550. For example, the electronic device 101 may detect an event (e.g., reception of SIM in the second slot 540) for temporarily using the second SIM 541. The electronic device 101 may display, for example, a pop-up window indicating that network communication (e.g., a %s network) corresponding to the eSIM 550 may be temporarily disconnected, as illustrated in FIG. 8C. The pop-up window may include an icon 808 for rejection and an icon 809 for approval. In operation 717, the electronic device 101 may determine whether release of the network communication corresponding to the eSIM 550 is approved. For example, when the icon 809 for approval of the pop-up window is selected, the electronic device 101 may determine that the release of the network communication corresponding to the eSIM 550 is approved. When it is determined that the release of the network communication corresponding to the eSIM 550 has not been approved (717-No) (e.g., when the icon 808 for rejection is selected, or when the icon 809 for approval fails to be detected), the electronic device 101 may maintain the connection of the eSIM 550 in operation 719. When it is determined that the release of the network communication corresponding to the eSIM 550 has been approved (717-Yes), the electronic device 101 may connect, in operation 721, the at least one processor (e.g., the communication processor 510) to the second slot 540 by controlling the state of the switch 560 from the second state to a first state.

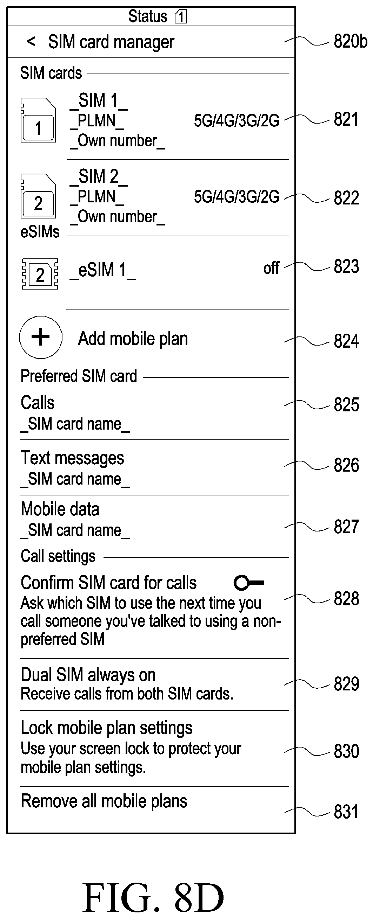

In accordance with various embodiments, in operation 723, the electronic device 101 may display a first screen indicating that the first SIM 531 and the second SIM 541 are in an enabled state. For example, as in a screen 820b in FIG. 8D, the electronic device 101 may display information related to the second SIM 541 (e.g., own number, PLMN-related information, and a supportable network communication type) on the tab 822 corresponding to the second SIM 541. The electronic device 101 may display, based on the enabled state of the second SIM 541, a supportable network communication type to be visually distinguished from the tab 823 corresponding to a disabled SIM (e.g., the eSIM 550). The electronic device 101 may display a supportable network type (e.g., 5G/4G/3G/2G) with respect to an enabled SIM (e.g., the first SIM 531 and the second SIM 541) and an indicator (e.g., text of "off") indicating a disabled state with respect to a disabled SIM (e.g., the eSIM 550), so that a user identifies currently enabled/disabled SIMs.

Although not illustrated, as described with reference to FIG. 7A, the electronic device 101 may switch from a screen (e.g., the screen 820b in FIG. 8D) showing that the eSIM 550 is disabled to a screen (e.g., the screen 820a in FIG. 8B) showing that the eSIM 550 is enabled. In addition, when an event for using the eSIM 550 is detected, the electronic device 101 may display a pop-up window indicating that the network communication corresponding to the second SIM 541 is to be temporarily release, similarly to FIG. 8C, and when an approval command is confirmed, the electronic device 101 may enable the eSIM 550 and disable the second SIM 541.

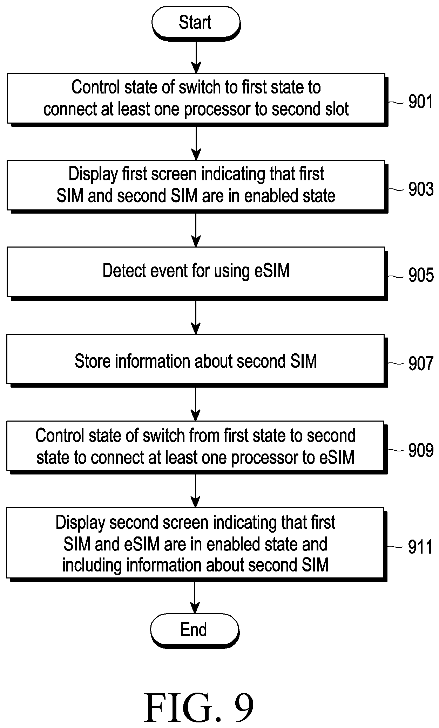

FIG. 9 is a flowchart illustrating an operation method of an electronic device according to various embodiments. The above-mentioned operations, among operations in FIG. 9, will be described briefly. FIG. 9 will be described with reference to the electronic device 101 in FIG. 1A or 5A, and FIG 10.

In accordance with various embodiments, in operation 901, the electronic device 101 (e.g., at least one of the processor 120 or the communication processor 510) may connect at least one processor (e.g., the communication processor 510) to the second slot 540 by controlling the state of the switch 560 to a first state. While the second SIM 541 is connected, the electronic device 101 may display, in operation 903, a first screen (e.g., the screen in FIG. 8D) indicating that the first SIM 531 and the second SIM 541 are in an enabled state. In operation 905, the electronic device 101 may detect an event for using the eSIM 550.

In accordance with various embodiments, in operation 907, the electronic device 101 may store information about the second SIM 541. For example, the electronic device 101 may store at least some of an ICCID, an IMSI, HPLMN-related information, and a MSISIDN that correspond to the second SIM 541. It is illustrated that the electronic device 101 stores the information about the second SIM 541 when detecting the event for using the eSIM 550, but this is exemplary. The electronic device 101 may store (or update) the information about the second SIM 541 at various time points, such as when the second SIM 541 is initialized (e.g., when the SIM is initialized by booting of the electronic device 101), or when the second SIM 541 is first enabled, or when the second SIM 541 is reenabled, and the time points are not limited. When the information about the second SIM 541 is already stored before detection of an event for using the eSIM 550, operation 907 may be omitted or replaced with an operation of reading the information about the second SIM 541. In operation 909, the electronic device 101 may connect the at least one processor (e.g., the communication processor 510) to the eSIM 550 by controlling the state of the switch 560 from the first state to a second state.

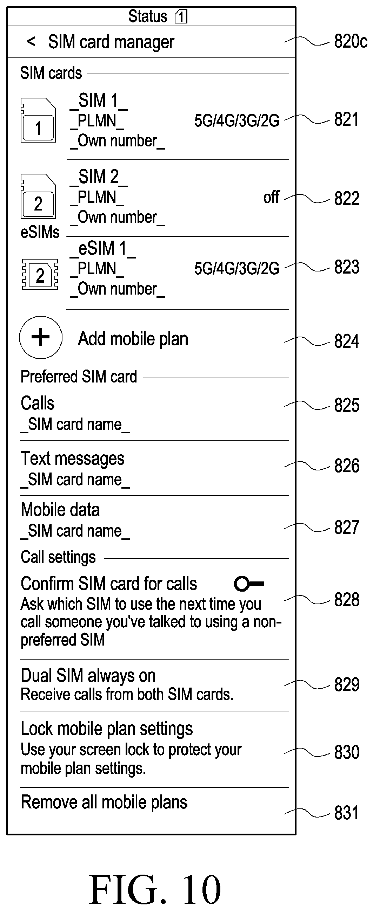

In accordance with various embodiments, in operation 911, the electronic device 101 may display a second screen indicating that the first SIM 531 and the eSIM 550 are in the enabled state and including the information about the second SIM 541 (e.g., PLMN information or own number). For example, the electronic device 101 may display a screen 820c illustrated in FIG. 10. Referring to FIG. 10, the electronic device 101 may display text of "off" indicating that the tap 822 corresponding to the second SIM 541 is in a disabled state. The electronic device 101 may further display information about PLMN corresponding to the second SIM 541 on the tap 822 corresponding to the second SIM 541. The electronic device 101 may display information about the second SIM 541 stored in operation 905 (or before detection of the event for using the eSIM 550). Accordingly, even while a specific SIM (e.g., the second SIM 541) is temporarily disabled, a user may identify information about the corresponding SIM.

In accordance with various embodiments, although not illustrated, the electronic device 101 may store information about the eSIM 550. As the switch 560 is controlled to the first state, the second SIM 541 may be controlled to be in an enabled state, and the eSIM 550 may be controlled to be in a disabled state. The electronic device 101 may display a screen indicating that the first SIM 531 and the second SIM 541 are in an enabled state and indicating that the eSIM 550 is in a disabled state, wherein information about the eSIM 550 may be displayed together.

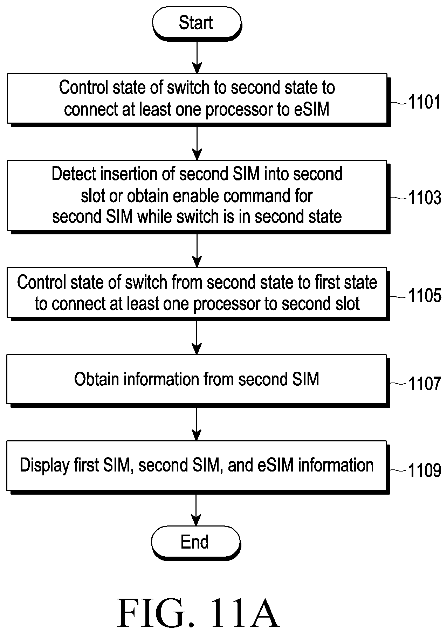

FIG. 11A is a flowchart illustrating an operation method of an electronic device according to various embodiments. The above-mentioned operations, among operations in FIG. 11A, will be described briefly. FIG. 11A will be described with reference to the electronic device 101 in FIG. 1A or 5A, and FIGS. 11B to 11F.

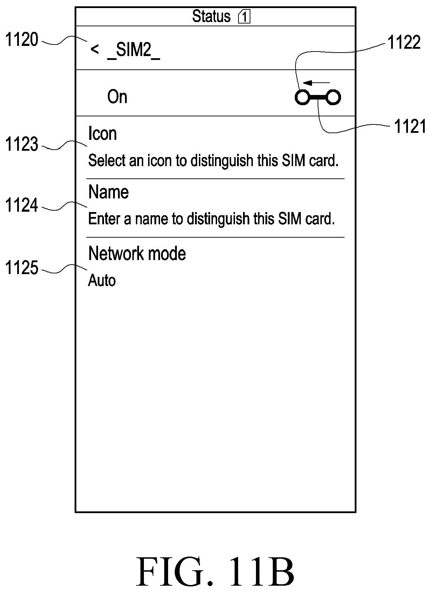

In accordance with various embodiments, in operation 1101, the electronic device 101 (e.g., at least one of the processor 120 or the communication processor 510) may connect at least one processor (e.g., the communication processor 510) to the eSIM 550 by controlling the state of the switch 560 to a second state. For example, the electronic device 101 may display a screen, illustrated in FIG. 8B, indicating that the first SIM 531 and the eSIM 550 are in an enabled state and the second SIM 541 is in a disabled state. In operation 1103, while the switch 560 is in the second state, the electronic device 101 may detect that the second SIM 541 is inserted into the second slot 540, or may obtain a command to enable the second SIM 541. For example, when a tab 822 corresponding to the second SIM 541 is selected on the screen illustrated in FIG. 8B, the electronic device 101 may display a screen 1120 including information corresponding to the second SIM 541 as illustrated in FIG. 11B. The screen 1120 including the information corresponding to the second SIM 541 may include a bar 1121 for toggling an object 1122. When the object 1122 is located at a first position on the bar 1121, the second SIM 541 may be enabled, and a text (e.g., On) indicating that the second SIM 541 is in an enabled state may be displayed. When the object 1122 is located at a second position on the bar 1121, the second SIM 541 may be disabled, and text (e.g., Off) indicating that the second SIM 541 is in n disabled state may be displayed. The electronic device 101 may change the position of the object 1122 based on a drag input corresponding to the object 1122 (or a touch input designating the first position or the second position), and may control, based on the position of the object 1122, whether the second SIM 541 is enabled (or, the state of the switch 560). As illustrated in FIG. 11B, when an input for moving the object 1122 from the second position of the bar 1121 to the first position thereof is determined, the electronic device 101 may determine that a command to enable the second SIM 541 has been obtained, and may also change text from "Off" to "On" as illustrated in FIG. 11B. In operation 1105, the electronic device 101 may connect the at least one processor to the second slot 540 by controlling the state of the switch 560 from the second state to a first state. The screen 1120 may include a SIM card corresponding icon control tab 1123, a name-related tab 1124, and a network mode tab 1125, but this is merely exemplary.

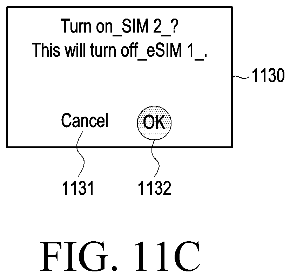

In accordance with various embodiments, as illustrated in FIG. 11C, the electronic device 101 may display a pop-up window 1130 indicating that network communication corresponding to the eSIM 550 is scheduled to be released. The pop-up window 1130 may include an icon 1131 for rejection and an icon 1132 for approval. When the icon 1132 for approval is selected, the electronic device 101 may enable the second SIM 541 by changing the state of the switch 560 from the second state to the first state. If the icon 1131 for rejection is designated, the electronic device 101 may maintain the enabled state of the eSIM 550.

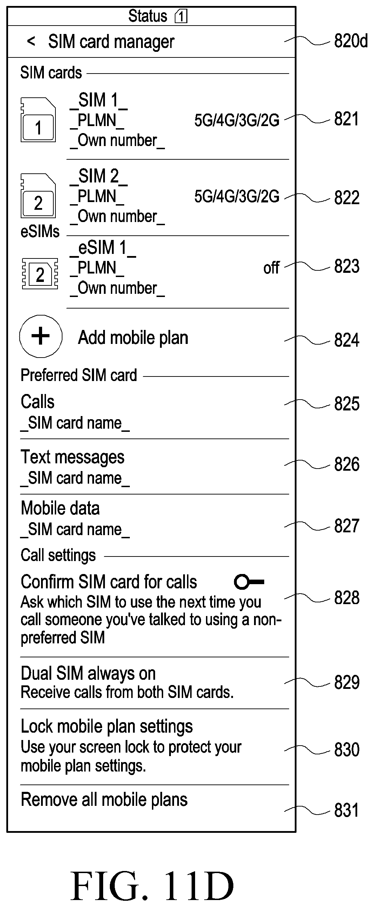

In accordance with various embodiments, in operation 1107, the electronic device 101 may obtain information from the second SIM 541. The electronic device 101 may perform, based on the obtained information, an operation corresponding to the second SIM 541 (e.g., an authentication procedure for network communication corresponding to the second SIM 541, and a network communication connection). In operation 1109, the electronic device 101 may display information about the first SIM 531, the second SIM 541, and the eSIM 550. For example, as illustrated in FIG. 11D, the electronic device 101 may display supportable network communication (e.g., 5G/4G/3G/2G) on the tab 822 corresponding to the second SIM 541, thereby showing that the second SIM 541 is in an enabled state. The electronic device 101 may display an indicator (e.g., text of "Off") indicating that the eSIM 550 is in an inactive state, on a tab 823 corresponding to a first profile. Meanwhile, the electronic device 101 may store information about the eSIM 550. For example, the electronic device 101 may store information about the eSIM 550 after the connection to the eSIM 550 in operation 1101, and there is no limitation on a storage time point thereof. The electronic device 101 may display the stored information about the eSIM 550 (e.g., PLMN information) on the tab 823 corresponding to the first profile.

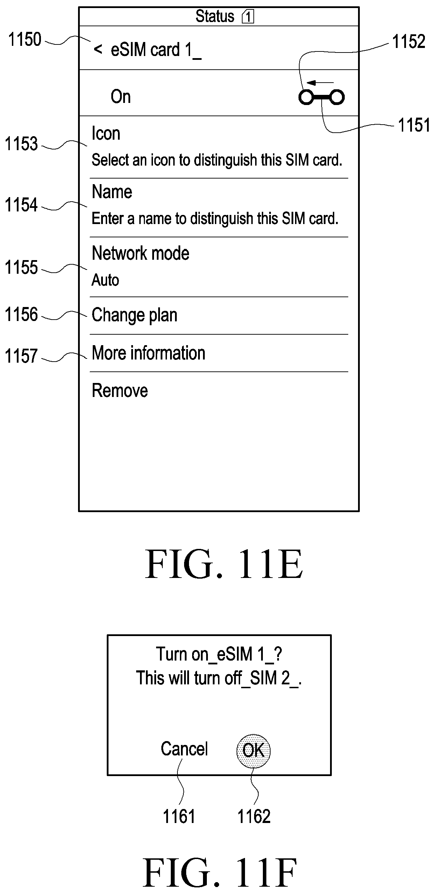

In accordance with various embodiments, the electronic device 101 may obtain a command to enable the eSIM 550. For example, the electronic device 101 may detect the selection of the tab 823 corresponding to the first profile while a screen 820d illustrated in FIG. 11D is displayed. When the tab 823 corresponding to the first profile is selected, the electronic device 101 may display a screen 1150 including information corresponding to the eSIM 550 as illustrated in FIG. 11E. The screen 1150 including the information corresponding to the eSIM 550 may include a bar 1151 for toggling an object 1152. When the object 1152 is located at a first position on the bar 1151, the eSIM 550 may be enabled, and text (e.g., On) indicating that the eSIM 550 is in an enabled state may be displayed. When the object 1152 is located at a second position on the bar 1151, the eSIM 550 may be disabled, and text (e.g., Off) indicating that the eSIM 550 is in a disabled state may be displayed. The electronic device 101 may change the position of the object 1152 based on a drag input corresponding to the object 1152, and may control, based on the position of the object 1152, whether the eSIM 550 is enabled (or, the state of the switch 560). As illustrated in FIG. 11E, when an input for moving the object 1152 from the second position of the bar 1151 to the first position thereof, the electronic device 101 may determine that a command to enable the eSIM 550 has been obtained, and may change text from "Off" to "On" as illustrated in FIG. 11E. The electronic device 101 may connect the at least one processor to the eSIM 550 by controlling the state of the switch 560 from the first state to the second state. The screen 1150 may include at least one among a SIM card corresponding icon control tab 1153, a name-related tab 1154, a network mode tab 1155, a mobile plan change tab 1156, and a more information-related tab 1157.

In accordance with various embodiments, as illustrated in FIG. 11F, the electronic device 101 may display a pop-up window 1160 indicating that network communication corresponding to the second SIM 541 is scheduled to be released. The pop-up window 1160 may include an icon 1161 for rejection and an icon 1162 for approval. When the icon 1162 for approval is designated, the electronic device 101 may enable the second SIM 541 by changing the state of the switch 560 from the first state to the second state. If the icon 1161 for rejection is designated, the electronic device 101 may maintain the enabled state of the second SIM 541.

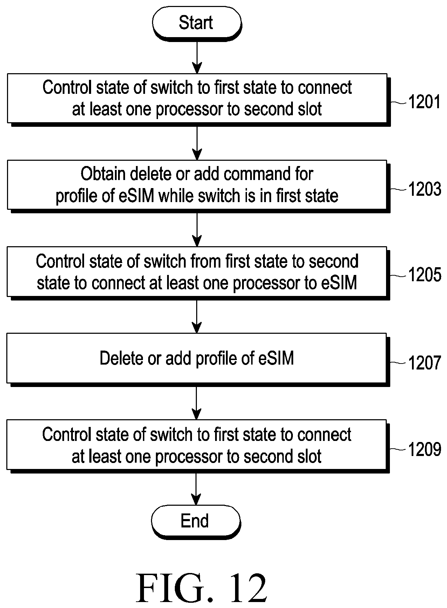

FIG. 12 is a flowchart illustrating an operation method of an electronic device according to various embodiments. The above-mentioned operations, among operations in FIG. 12, will be described briefly. FIG. 12 will be described with reference to the electronic device 101 in FIG. 1A or 5A, and FIGS. 13A to 13E.

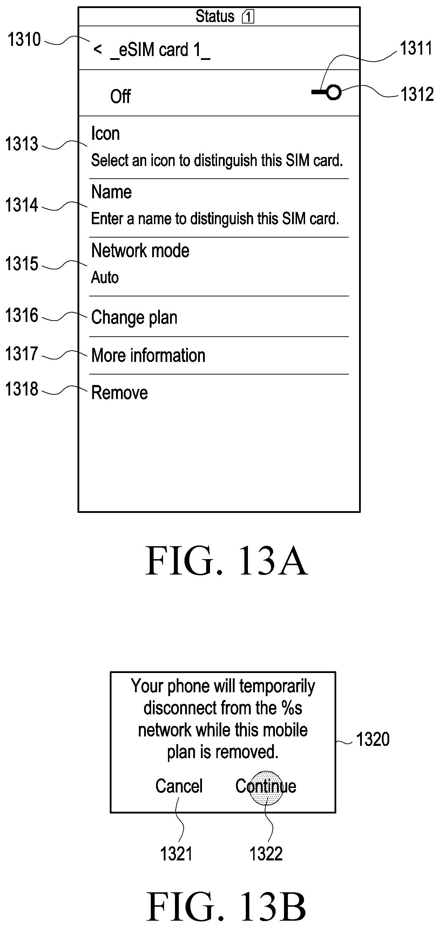

In accordance with various embodiments, in operation 1201, the electronic device 101 (e.g., at least one of the processor 120 or the communication processor 510) may connect at least one processor (e.g., the communication processor 510) to the second slot 540 by controlling the state of the switch 560 to a first state. In operation 1203, the electronic device 101 may obtain a command for deletion or addition of a profile of the eSIM 550 while the switch 560 is in the first state. For example, the electronic device 101 may detect selection of a tab 823 corresponding to a first profile while a screen indicating that the second SIM 541 is in an enabled state and the eSIM 550 is in a disabled state (e.g., the screen in FIG. 8D) is displayed. When the tab 823 corresponding to the first profile is selected, the electronic device 101 may display a screen 1310 including information corresponding to the eSIM 550, illustrated in FIG. 13A. The screen 1310 including the information corresponding to the eSIM 550 may include a bar 1311 for toggling an object 1312. When the object 1312 is located at a first position on the bar 1311, the eSIM 550 may be enabled, and text (e.g., On) indicting that the eSIM 550 is in an enabled state may be displayed. When the object 1312 is located at second position on the bar 1311, the eSIM 550 may be disabled, and text (e.g., Off) indicting that the eSIM 550 is in a disabled state may be displayed. The current state is a state in which the eSIM 550 is disabled, text of "Off" may be displayed. The screen 1310 may include at least one among a SIM card corresponding icon control tab 1313, a name-related tab 1314, a network mode tab 1315, a mobile plan change tab 1316, a more information-related tab 1317, or a mobile plan (e.g., profile) deletion tab 1318. When the mobile plan deletion tab 1318 is selected, the electronic device 101 may determine that a profile deletion command has been obtained.

In accordance with various embodiments, when a profile deletion command or a profile addition command is obtained, the electronic device 101 may connect the at least one processor to the eSIM 550 by controlling the state of the switch 560 from the first state to a second state in operation 1205. In accordance with various embodiments, the electronic device 101 may determine whether the corresponding profile can be deleted. When the correspond profile can be deleted, the electronic device 101 may start a deletion procedure for controlling the state of the switch 560 from the first state to the second state. For example, when the corresponding profile is set with profile policy rules 2 (PPR 2), it may be impossible to delete the corresponding profile. When it is determined that there is no restriction on deletion, the electronic device 101 may start the deletion procedure. Alternatively, as illustrated in FIG. 13B, the electronic device 101 may display a pop-up window 1320 indicating that network communication corresponding to the second SIM 541 may be temporarily released while the profile is being deleted. When an icon 1322 for approval is selected from among an icon 1321 for rejection and the icon 1322 for approval included in the pop-up window 1320, the electronic device 101 may start the deletion procedure.

In accordance with various embodiments, in operation 1207, the electronic device 101 may delete or add a profile of the eSIM 550. For example, at least one of the processor 120 or the communication processor 510 may transmit a request for deletion or addition of a profile to the eSIM 550, and the eSIM 550 may delete or add the profile. When the deletion or addition of the profile is completed (or the transmission of the request for deletion or addition of the profile to the eSIM 550 is completed), the electronic device 101 may connect, in operation 1209, the at least one processor to the second slot 540 by controlling the state of the switch 560 to the first state. The electronic device 101 may switch the second SIM 541 to an enabled state, and may recover network communication corresponding to the second SIM 541.

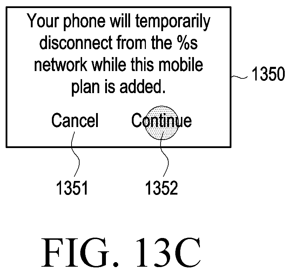

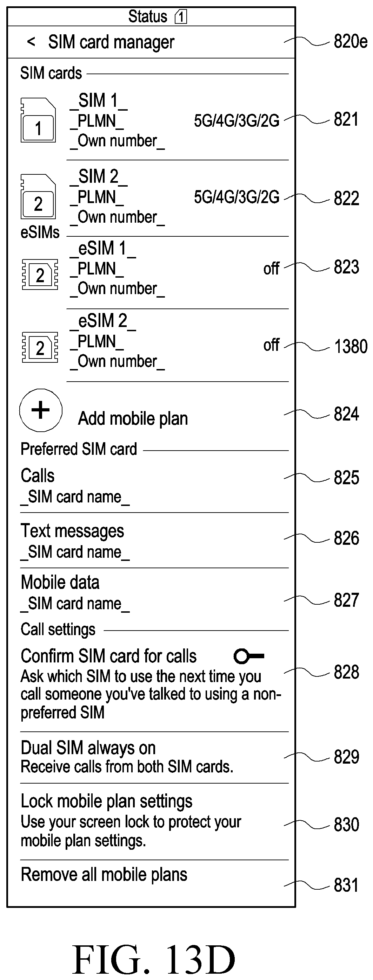

In various embodiments, when the tab 824 for adding a mobile plan (e.g., profile) is selected on the screen illustrated in FIG. 8D, the electronic device 101 may determine that a command to add the profile has been obtained. When the command to add a mobile plan is obtained, the electronic device 101 may control the switch 560 such that the at least one processor is connected to the eSIM 550. The electronic device 101 may, for example, determine whether the addition of a profile is possible, and may start a procedure for the addition when the addition is possible. If PPR 1 is set in a profile previously set in the eSIM 550, the disabling of the corresponding profile may be impossible. In this case, it may be determined that the addition of another profile is impossible. If PPR 1 is not set in the previously set profile, the electronic device 101 may start the procedure for addition. Alternatively, as illustrated in FIG. 13C, the electronic device 101 may display a pop-up window 1350 indicating that network communication corresponding to the second SIM 541 may be temporarily released while the profile is being added. When an icon 1352 for approval is selected from among an icon 1351 for rejection and the icon 1352 for approval (or continuousness) included in the pop-up window 1350, the electronic device 101 may start the addition procedure. When the addition is completed, the electronic device 101 may display, as illustrated in FIG. 13D, a screen 820e including a tab 1380 corresponding to an added second profile (e.g., eSIM2). In FIG. 13D, the added second profile is marked as "eSIM2" in the tab 1380 corresponding to the added second profile according to an embodiment, but the added profile may be stored in an existing profile (e.g., an eSIM (e.g., the eUICC 401 or the eSIM 550) such as the first profile (eSIM1)). When the tab 1380 corresponding to the added second profile is selected, at least one object capable of controlling the corresponding profile in an enabled state may be displayed. In another embodiment, after the addition of the profile, the electronic device 101 may enable the eSIM 550, and in this case, may display a screen indicating that the added profile in the eSIM 550 is enabled.

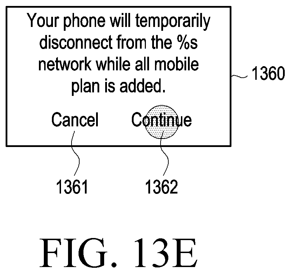

In various embodiments, when the tab 831 to remove all mobile plans (e.g., profiles) is selected on the screen illustrated in FIG. 8D, the electronic device 101 may determine that a command to delete all profiles has been obtained. When the electronic device 101 obtains the command to delete all profiles, the electronic device 101 may connect, in operation 1205, the at least one processor to the eSIM 550 by controlling the state of the state of the switch 560 from the first state to the second state. In accordance with various embodiments, the electronic device 101 may determine whether at least some of the all profiles can be deleted, and when the deletion is possible, may start a deletion procedure capable of controlling the state of the switch 560 from the first state to the second state. Alternatively, as illustrated in FIG. 13E, the electronic device 101 may display a pop-up window 1360 indicating that network communication corresponding to the second SIM 541 may be temporarily released while the all profiles is being deleted. When an icon 1362 for approval is selected from among included in the pop-up window 1360 an icon 1361 for rejection and the icon 1362 for approval (or continuousness), the electronic device 101 may start the deletion procedure.

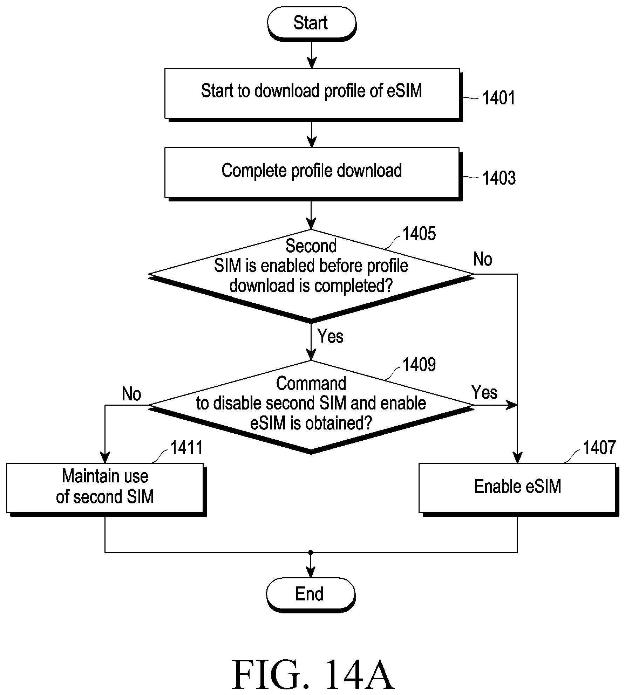

FIG. 14A is a flowchart illustrating an operation method of an electronic device according to various embodiments. The above-mentioned operations, among operations in FIG. 14A, will be described briefly. FIG. 14A will be described with reference to the electronic device 101 in FIG. 1A or 5A, and FIG. 14B.

In accordance with various embodiments, in operation 1401, the electronic device 101 (e.g., at least one of the processor 120 or the communication processor 510) may initiate downloading of a profile of the eSIM 550. In operation 1403, the electronic device 101 may complete the profile downloading. In operation 1405, the electronic device 101 may determine whether the second SIM 541 is enabled before the profile downloading is completed. For example, before the profile downloading, the second SIM 541 may be enabled, and the electronic device 101 may determine whether the second SIM 541 is enabled.

When it is determined that the second SIM 541 is not enabled (1405-No), the electronic device 101 may enable the eSIM 550 in operation 1407 in accordance with various embodiments, and may perform network communication by using the downloaded profile. In various embodiments, the electronic device 101 may output an inquiry about whether to enable the eSIM 550 and may enable the eSIM 550 based on additional user input. When it is determined that the second SIM 541 is enabled (1405-Yes), the electronic device 101 may determine, in operation 1409, whether a command to disable the second SIM 541 and enable the eSIM 550 is obtained. For example, the electronic device 101 may display a pop-up window 1420, illustrated in FIG. 14B, indicating that the second SIM 541 will be disabled and inquiring whether the downloaded profile is enabled. When the command to disable the second SIM 541 and enable the eSIM 550 is obtained (e.g., when an icon 1422 for approval (or continuousness) in the pop-up window 1420 is selected) (1409-Yes), the electronic device 101 may enable the eSIM 550 in operation 1407. The electronic device 101 may switch the state of the switch 560 to a second state. When the command to disable the second SIM 541 and enable the eSIM 550 is not obtained (e.g., when an icon 1421 for rejection in the pop-up window 1420 is selected) (1409-No), the electronic device 101 may maintain use of the second SIM 541 in operation 1411. The electronic device 101 may maintain the state of the switch 560 as a first state.

FIG. 15A is a flowchart illustrating an operation method an electronic device according to various embodiments. The above-mentioned operations, among operations in FIG. 15A, will be described briefly. FIG. 15A will be described with reference to the electronic device 101 in FIG. 1A or 5A, and FIG. 15B to 15D.

In accordance with various embodiments, the electronic device 101 (e.g., at least one of the processor 120 or the communication processor 510) may determine at least one parameter related to a SIM in operation 1501. In accordance with various embodiments, the electronic device 101 may determine at least one of parameters stored in the memory 130 or a parameter received from a network. For example, the memory 130 may store at least one of a first parameter (e.g., HAS_EUICC) indicating whether the eSIM 550 is included in the electronic device 101 or a second parameter (e.g., UICC_SLOT) indicating the number of available slots. The number of available slots may indicate, for example, the number of slots using an rSIM and/or the number of capable of containing an rSIM as operator requirements. For example, first to third parameters may be determined during manufacturing and stored in a consumer software customization (CSC) file. In various embodiments, the first parameter and/or the second parameter may also be received from network and updated. For example, when whether the mobile network operator supports an eSIM is changed, the electronic device 101 may receive the changed third parameter (e.g., SUPPORT_EUICC) from the network, and may store the same in the memory 130. For example, the electronic device 101 may determine the third parameter included in the consumer software customization (CSC) file, but there is no imitation on a method in which the electronic device 101 determines that the network supports an eSIM. At least a part of operation 1501 or operation 1503 may be performed, for example, during booting of the electronic device 101, but there is no limitation on the time point to perform the same.

In accordance with various embodiments, in operation 1503, the electronic device 101 may control the switch 560 based on the at least one parameter. In a first example, it may be determined that the first parameter is true, the number of the second parameters is two, and the third parameter is true. In this case, the electronic device 101 controls the switch 560 such that either the second slot 540 or the eSIM 550 is selectively connected to the communication processor 510. As described through operations 603 and 605 in FIG. 6A, based on detection of an event for using the second SIM 541, the electronic device 101 controls the switch 560 such that the second slot 540 is connected to the communication processor 510. Based on detection of an event for using the eSIM 550, the electronic device 101 controls the switch 560 such that the eSIM 550 is connected to the communication processor 510. The electronic device 101 may display, for example, the screen illustrated in FIG. 8B or 8D, and may enable either the second SIM 541 or the eSIM 550 by controlling the switch 560 based on a user input. In accordance with various embodiments, when the third parameter is true, the electronic device 101 may display a screen including all of a tab corresponding to the first SIM 531, a tab corresponding to the second SIM 541, and a tab corresponding to the eSIM 550. The electronic device 101 may determine, based on the input on the screen, a SIM to be enabled between the second SIM 541 and the eSIM 550. The electronic device 101 may control the switch 560 such that the SIM determined to be enabled is connected to at least one processor (e.g., the communication processor 510). In various embodiments, for example, as illustrated in FIG. 10, the electronic device 101 may store information about a disabled SIM, and may display the information even in a disabled state.

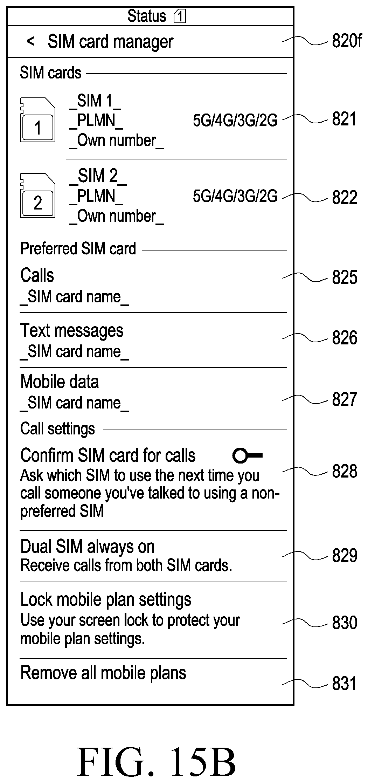

In a second example, it may be determined that the first parameter is true, the number of the second parameter is two, and the third parameter is false. For example, a specific mobile network operator may not support an eSIM, and in this case, the third parameter may be false. In this case, the electronic device 101 controls the switch 560 such that the second slot 540 is connected to the communication processor 510. For example, the electronic device 101 may determine the third parameter during booting and control the switch 560 such that the second slot 540 is connected to the communication processor 510. The electronic device 101 may display, for example, a screen 820f illustrated in FIG. 15B. As illustrated in FIG. 15B, information about a profile of an eSIM may not be displayed. In another embodiment, information about a profile of an eSIM may be implemented to be displayed but disabled such that the information cannot be selected by a user.

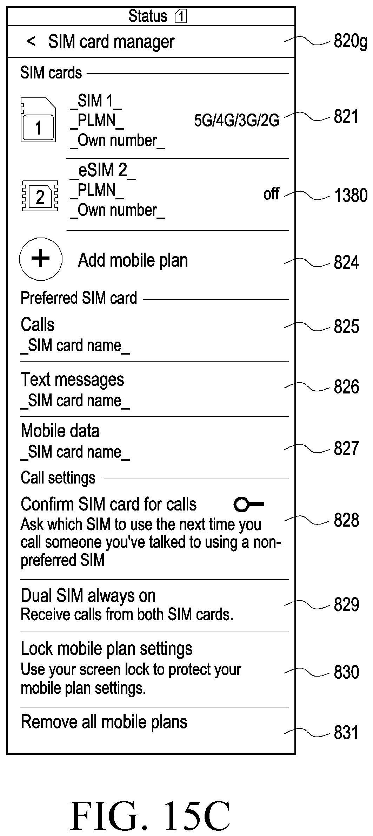

In third example, it may be determined that the first parameter is true, the number of the second parameter is one, and the third parameter is true. For example, a specific mobile network operator may be an operator that requires use of an eSIM. The electronic device 101 may control the switch 560 such that the eSIM 550 is connected to the communication processor 510. The electronic device 101 may display, for example, a screen 820g illustrated FIG. 15C. As illustrated in FIG. 15C, information about the first SIM 531 and an eSIM may be displayed.

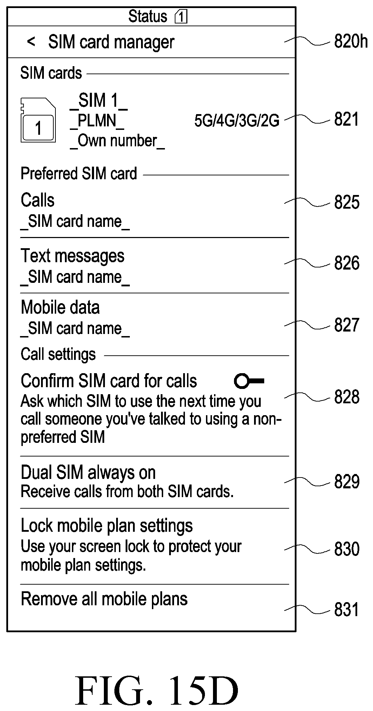

In a fourth example, it may be determined that the first parameter is true, the number of the second parameter is one, and the third parameter is false. For example, a specific mobile network operator may be an operator that allows only one rSIM to be used. The electronic device 101 may control the switch 560 such that the second slot 540 or the eSIM 550 is connected to the communication processor 510, but may not request a connected entity for information from or may ignore received information. Alternatively, the electronic device 101 may control the switch 560 such that the communication processor 510 is not connected to either the second slot 540 or the eSIM 550. The electronic device 101 may display, for example, a screen 820h illustrated in FIG. 15D. As illustrated in FIG. 15D, information about profiles of the second SIM 541 and at least one eSIM may not be displayed. In another embodiment, information about profiles of the second SIM 541 and at least one eSIM may be implemented to be displayed but disabled such that the information cannot be selected by a user.

In a fifth example, a user of the electronic device 101 may use network communication by changing from a first mobile network operator in which the third parameter supports true to a second mobile network operator in which the third parameter supports false. For example, the electronic device 101 may change setting for the first mobile network operator to setting for the second mobile network operator. The electronic device 101 may, for example, set the changed setting during booting. In this case, the electronic device 101 may be in a state in which a profile is downloaded and stored while using the eSIM 550. When the downloaded profile exists, the electronic device 101 may display a message indicating that the network communication operator cannot be changed. Alternatively, the electronic device 101 may display a pop-up window inquiring about deletion of the profile of the eSIM 550, and when profile deletion command is obtained through the pop-up window, may perform, after performing the profile deletion command, a procedure for changing setting for the mobile network operator. In a specific country (e.g., Turkey), eUICC operation-related law may be enacted, and thus it may be impossible to change from a mobile network operator supporting an eSIM to a mobile network operator that does not support an eSIM or vice versa. When it is determined, based on information about a country in which the electronic device 101 is currently positioned, that the electronic device 101 is determined to be positioned in a specific country, the electronic device 101 may display a message indicating that it is impossible to change the mobile network operator.

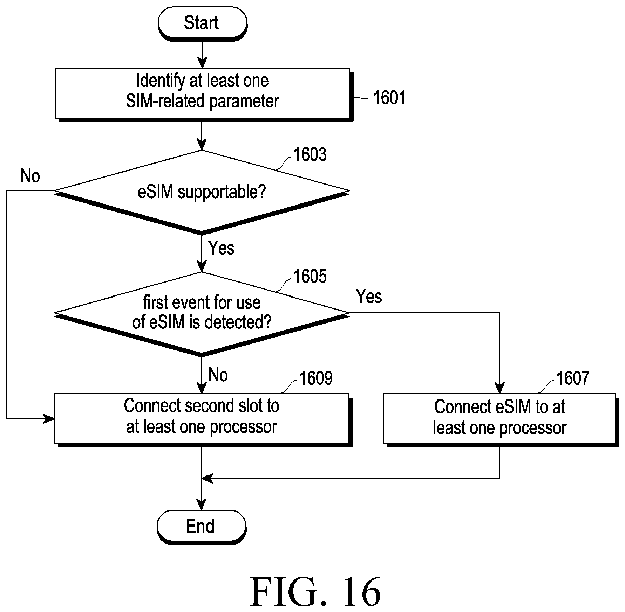

FIG. 16 is a flowchart illustrating an operation method of an electronic device according to various embodiments. FIG. 16 will be described with reference to the electronic device 101 in FIG. 1A or 5A. The above-mentioned operations, among operations in FIG. 16, will be described briefly.

In accordance with various embodiments, the electronic device 101 (e.g., at least one of the processor 120 or the communication processor 510) may determine at least one parameter related a SIM in operation 1601. In operation 1603, the electronic device 101 may determine, based on the at least one parameter, whether a network can support an eSIM. For example, the electronic device 101 may determine whether a third parameter is true or false. It is determined that the network can support an eSIM (e.g., when it is determined that the third parameter is true) (1603-Yes), the electronic device 101 may determine, in operation 1605, whether a first event for using the eSIM 550 has been detected. When the eSIM can be supported and the number of available slots is two, the electronic device 101 determines whether the first event for using the eSIM 550 has been detected. When it is determined that the first event for using the eSIM 550 has been detected (1605-Yes), the electronic device 101 controls, in operation 1607, the switch 560 to connect the eSIM 550 to at least one processor. When it is determined that the first event for using the eSIM 550 has not been detected (1605-No), the electronic device 101 controls, in operation 1609, the switch 560 to connect the second slot 540 to the at least one processor. Alternatively, when it is determined that the network cannot support an eSIM (e.g., when it is determined that the third parameter is false) (1603-No), the electronic device 101 controls, in operation 1609, the switch 560 to connect the second slot 540 to the at least one processor.

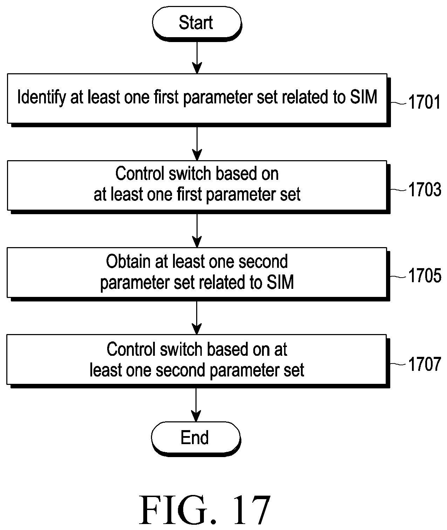

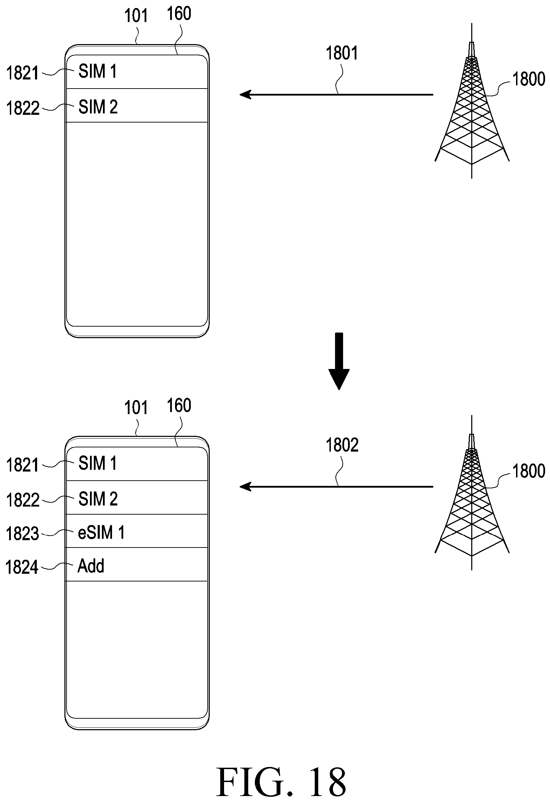

FIG. 17 is a flowchart illustrating an operation method of an electronic device according to various embodiments. The above-mentioned operations, among operation in FIG. 17, will be described briefly. The embodiment of FIG. 17 will be described with reference to the electronic device 101 in FIG. 1A or 5A, and FIG. 18. FIG. 18 illustrates a policy change of a network according to various embodiments.

In accordance with various embodiments, the electronic device 101 (e.g., at least one of the processor 120 or the communication processor 510) may determine at least one first parameter set related a SIM in operation 1701. In operation 1703, the electronic device 101 may control the switch 560 based on the at least one first parameter set. For example, as illustrated in FIG. 18, the electronic device 101 may receive first information 1801 from a network 1800. The electronic device 101 may determine the first parameter set, based on at least one of the first information 1801 or information stored in the memory 130. For example, the electronic device 101 may receive the first information to update the information stored in the memory 130, and may determine the updated information. The first parameter set may indicate that the network 1800 does not support an eSIM. The electronic device 101 may control the switch 560 such that the second slot 540 is connected to the communication processor 510. The electronic device 101 may display information 1821 and 1822 about the first SIM 531 and the second SIM 541 that are rSIMs. The electronic device 101 may perform at least a part of the first parameter set determination and the switch control based thereon in the process of booting (or rebooting). For example, the electronic device 101 may output, based on the received information, a message inquiring whether to reboot, and may perform rebooting when a user input for the message is obtained. During rebooting, at least a part of the first parameter set determination and the switch control based thereon may be performed.

In accordance with various embodiments, the electronic device 101 may obtain at least one second parameter set related to a SIM in operation 1705. For example, a mobile network operator in charge of the network 1800 may change a policy so as to support an eSIM. The network 1800 may provide the electronic device 101 with second information 1802 indicating that an eSIM is supported. The electronic device 101 may store the second information 1802. The electronic device 101 may perform rebooting based on reception of the second information. In operation 1707, the electronic device 101 may control the switch 560, based on the at least one second parameter set. For example, the electronic device 101 may control, based on detection of an event for using the eSIM 550, the switch 560 such that the eSIM 550 is connected to the communication processor 510. The electronic device 101 may display information 1821, 1822, and 1823 about the first SIM 531, the second SIM 541, and the eSIM 550, and a tab 1824 for profile addition. For example, when the second parameter set correspond to the above-mentioned first example, the electronic device 101 may control, based on the detection of the event for using the eSIM 550, the switch 560 such that the eSIM 550 is connected to the communication processor 510. When the second parameter set corresponds to the third example, the electronic device 101 may control the switch 560 such that an eSIM 550 is connected to the communication processor 510.

In accordance with various embodiments, at least a part of operations 1705 and 1707 may be performed during rebooting of the electronic device 101 after operation 1703.

Alternatively, even when a mobile network operator changes a policy from supporting an eSIM to not supporting the eSIM, the network 1800 may provide the electronic device 101 with information indicating that the eSIM is not supported, whereby a dual SIM function can be provided to correspond to the changed policy without replacing the electronic device 101.

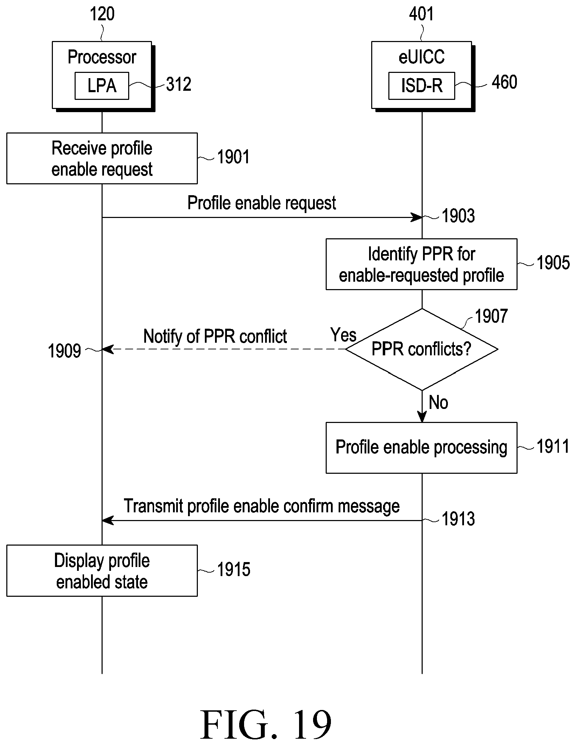

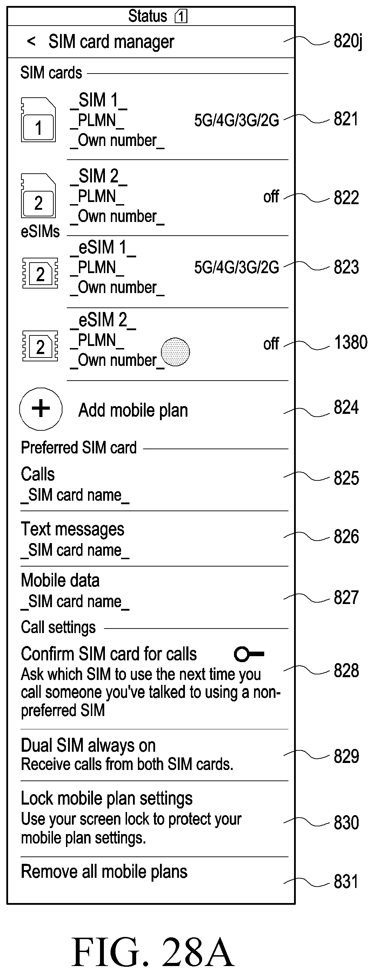

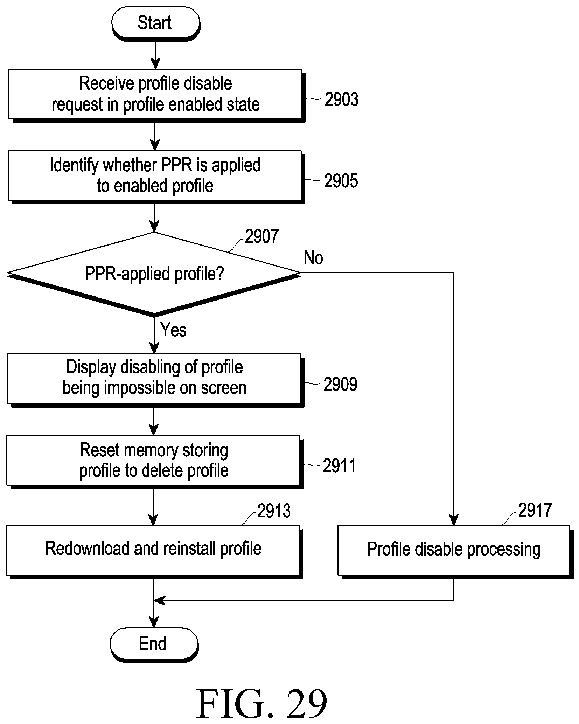

Hereinafter, embodiments in which an operation of an eSIM profile is restricted will be described with reference to FIGS. 19 to 35. According to various embodiments, as described above, the electronic device 101 may include at least one eUICC (e.g., the eSIM 201). In the following description, the eUICC 401 may be used as a term corresponding to an eSIM. According to various embodiments, "eSIM1" and/or "eSIM2" illustrated in the drawings (e.g., FIGS. 28A and 29D) may be profiles included in one eUICC 401. For example, the same may refer to profiles included in an eSIM.

As illustrated in FIG. 3, an eUICC (e.g., the eSIM 201) may be included in the electronic device 101 to communicate with the processor 120. According to various embodiments, as illustrated in FIG. 4, the eUICC 401 may include at least one profile 410, 420, or 430. Each profile included in the eUICC 401 may be referred to as an eSIM profile. For example, in FIG. 4, one eUICC 401 may include a first profile 410 (a first eSIM profile), a second profile 420 (a second eSIM profile), and a third profile 430 (a third eSIM profile). According to various embodiments, when multiple profiles are installed in the one eUICC 401, only one profile (e.g., the first profile 410) may be in an enabled state, and the other profiles (e.g., the second profile 420 and the third profile 430) may be in a disabled state.

According to various embodiments, FIG. 5A shows that the electronic device 101 is connected to the first SIM 531 and the second SIM 541 through the first slot 530 and the second slot 540, but the electronic device 101 may not include the first slot 530 and/or the second slot 540, or only the eUICC (e.g., the eSIM 550) may be connected to the communication processor 510 while the first SIM 531 and the second SIM 541 are not connected thereto. In the various embodiments, the switch 560 in FIG. 5A may be omitted.

According to various embodiments, each profile stored in the eUICC (e.g., the eUICC 401 in FIG. 4) may include a profile policy rule (PPR) which restricts (or does not allow) the operation of the corresponding profile. The PPR may be set such that a state change of the corresponding profile (e.g., a change from an enabled state to a disabled state or a change from a disabled state to an enabled state) is not allowed, or that deletion of the corresponding profile is not allowed. The PPR may be defined by an operator for providing a profile (a profile owner), and may be set by the SM-DP+ server 220. Information related to the SM-DP+ server 220 may be included in metadata of a profile.

According to various embodiments, each profile stored in the eUICC 401 may not include the PPR, but may include one or more PPRs. When a specific profile is installed in the eUICC 401, the PPR may be included in the corresponding profile. According to various embodiments, the PPR may be set to PPR1 and PPR2 as follows. Embodiments herein are not limited to PPRs exemplified below, and various profile policy rules for operation and management of a profile may be added as PPRs herein.
- PPR1: "'Disabling of this Profile is not allowed"
- PPR2: "Deletion of this Profile is not allowed"

For example, when the PPR1 is set for a specific profile, switching of the profile from an enabled state to a disabled state may not be allowed or may be restricted. Furthermore, when the PPR2 is set for a specific profile, deletion of the profile may not be allowed or may be restricted. In accordance with various embodiments, the PPR2 may not affect application of PPR1 of another profile (e.g., application of disabling of another profile).

Hereinafter, the operation of an electronic device according to a profile policy rule will be described with reference to FIGS. 19 to 24. According to various embodiments, FIGS. 19 to 21 illustrate the operation of an electronic device according to enabling, disabling, or deleting a profile to which a profile policy rule (PPR) is applied.

FIG. 19 is a flowchart illustrating a profile enabling method according to various embodiments.

In accordance with various embodiments, in operation 1901, the processor 120 (e.g., the LPA 312) of the electronic device 101 may receive a request for enabling a profile which is currently in a disabled state. The request for enabling the profile may be made when a user selects a corresponding menu through the screen 820a or 820b including information related to a SIM, illustrated in FIG. 8B or 8D. Detailed embodiments of the method for requesting the enabling will be described later.

In accordance with various embodiments, in operation 1903, the processor 120 of the electronic device 101 may transmit, to the eUICC 401 (e.g., the ISD-R 460), a request for enabling a specific profile selected by the user.

In accordance with various embodiments, in operation 1905, the eUICC 401 of the electronic device 101 may determine whether a PPR is applied to the specific profile, which has been requested to be enabled, or other profiles which have already been installed. As a result of the determination, when it is determined, in operation 1907, that the enabling request conflicts with the PPR applied to the specific profile, which is requested to be enabled, or the already installed other profiles (Yes), the eUICC 401 may notify the processor 120 of the conflict with the PPR in operation 1909.

In accordance with various embodiments, as a result of the determination, when it is determined, in operation 1907, that the enabling request does not conflict with the PPR applied to the profile (No), the eUICC 401 may enable, in operation 1911, the corresponding profile which is in the disabled state.

In accordance with various embodiments, in operation 1913, the eUICC 401 of the electronic device 101 may transmit a profile enabling confirmation message (profile enable confirmation) to the processor 120 as a result of the enabling of the profile.

In accordance with various embodiments, the processor 120 of the electronic device 101 may receive the profile enabling confirmation message from the eUICC 401, and, in operation 1915, may display a screen indicating that the corresponding profile is in an enabled state.

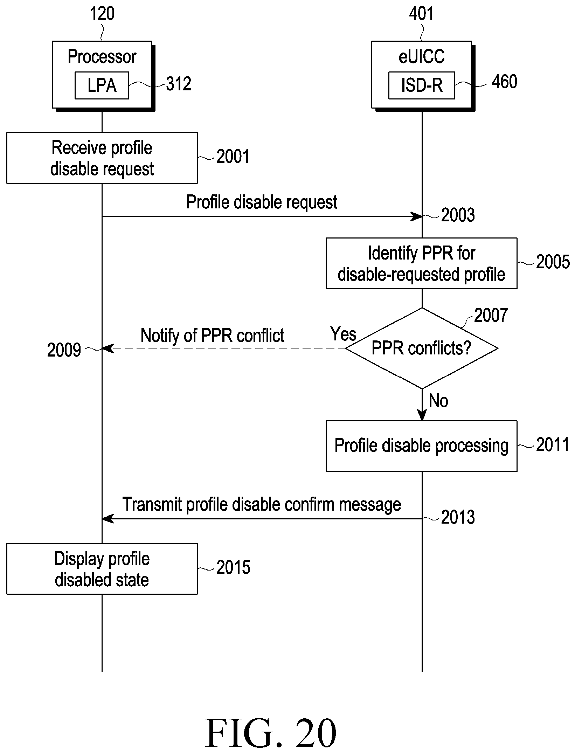

FIG. 20 is a flowchart illustrating a profile disabling method according to various embodiments.

In accordance with various embodiments, in operation 2001, the processor 120 (e.g., the LPA 312) of the electronic device 101 may receive a request for disabling a profile which is currently in an enabled state. The request for disabling the profile may be made when a user selects a corresponding menu through the screen 820a or 820b including information related to a SIM, illustrated in FIG. 8B or 8D. Detailed embodiments of the method for requesting the disabling will be described later.

In accordance with various embodiments, in operation 2003, the processor 120 of the electronic device 101 may transmit, to the eUICC 401 (e.g., the ISD-R 460), a request for disabling a specific profile selected by the user.

In accordance with various embodiments, in operation 2005, the eUICC 401 of the electronic device 101 may determine whether a PPR is applied to the specific profile, which has been requested to be disabled. As a result of the determination, when it is determined, in operation 2007, that the disabling request conflicts with the PPR applied to the profile (Yes), the eUICC 401 may notify the processor 120 of the conflict with the PPR in operation 2009. For example, when PPR1 is applied to the profile, as described above, the profile may not be allowed to switch from the enabled state to a disable state as defined in the PPR1.

In accordance with various embodiments, as a result of the determination, when it is determined, in operation 2007, that the disabling request does not conflict with the PPR applied to the profile (No) (e.g., when PPR 1 is not applied to the profile), the eUICC 401 may disable, in operation 2011, the corresponding profile which is in the enabled state.

In accordance with various embodiments, in operation 2013, the eUICC 401 of the electronic device 101 may transmit a profile disabling confirmation message (profile disable confirmation) to the processor 120 as a result of the disabling of the profile.

In accordance with various embodiments, the processor 120 of the electronic device 101 may receive the profile disabling confirmation message from the eUICC 401, and, in operation 2015, may display a screen indicating that the corresponding profile is in a disabled state.

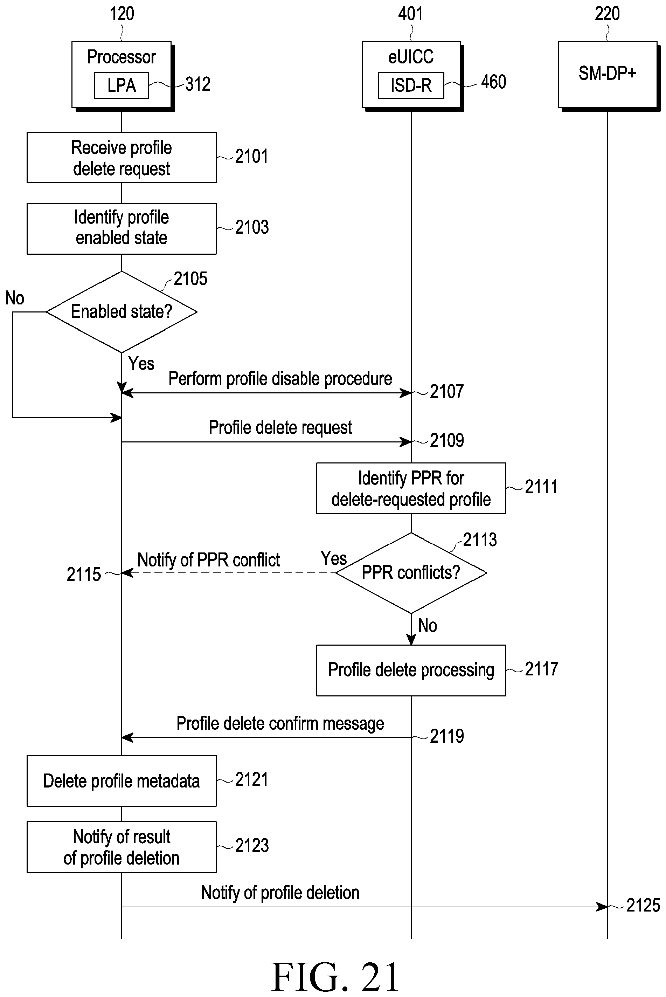

FIG. 21 is a flowchart illustrating a profile deletion method according to various embodiments.

In accordance with various embodiments, in operation 2101, the processor 120 (e.g., the LPA 312) of the electronic device 101 may receive a request for deleting a profile which is currently in an enabled state. The request for deleting the profile may be made when a user selects a corresponding menu through the screen 820a or 820b including information related to a SIM, illustrated in FIG. 8B or 8D. Detailed embodiments of the profile deletion request method will be described later.

In accordance with various embodiments, when a profile to be deleted is in an enabled state, the processor 120 of the electronic device 101 may disable and then delete the profile. For example, in operation 2103, the processor 120 may determine whether the profile, which is requested to be deleted, is in an enabled state. As a result of the determination, when it is determined, in operation 2105, that the profile which is requested to be deleted is in an enabled state (2105-Yes), the processor 120 may perform, in operation 2107, a procedure of disabling the profile, which is requested to be deleted, with the eUICC 401. In an example, the disabling procedure between the processor 120 and the eUICC 401 may be performed the above-mentioned procedure in FIG. 20.

As a result of the determination, when it is determined, in operation 2105, that the profile which is requested to be deleted is in a disabled state (2105-No), the processor 120 of the electronic device 101 may transmit a request for deleting a specific profile selected by a user to the eUICC 401(e.g., the ISD-R 460) in operation 2109.

In accordance with various embodiments, in operation 2111, the eUICC 401 of the electronic device 101 may determine whether a PPR is applied to the profile which is requested to be deleted. As a result of the determination, when it is determined, in operation 2113, that the deletion request conflicts with the PPR applied to the profile (2113-Yes), the eUICC 401 may notify the processor 120 of the conflict with the PPR in operation 2115. For example, when PPR2 is applied to the profile, as described above, the profile may not be allowed to be deleted as defined in the PPR2. According to various embodiments, when PPR1 is applied to the profile, as described above, the profile is not allowed to be disabled as defined in the PPR1, and thus the deletion may not be performed.

In accordance with various embodiments, as a result of the determination, when it is determined, in operation 2113, that the deletion request does not conflict with the PPR applied to the profile (2113-No) (e.g., when PPR 2 is not applied to the profile), the eUICC 401 may delete, in operation 2117, the corresponding profile which is in the disabled state.

In accordance with various embodiments, in operation 2119, the eUICC 401 of the electronic device 101 may transmit a profile deletion confirmation message (profile delete confirmation) to the processor 120 as a result of the deletion of the profile.

In accordance with various embodiments, the processor 120 of the electronic device 101 may receive the profile deletion confirmation message from the eUICC 401, and, in operation 2121, may display a screen indicating that the corresponding profile has been deleted.

In accordance with various embodiments, in operation 2125, the processor 120 of the electronic device 101 may notify the SM-DP+ server 220 of the result of the deletion of the profile.

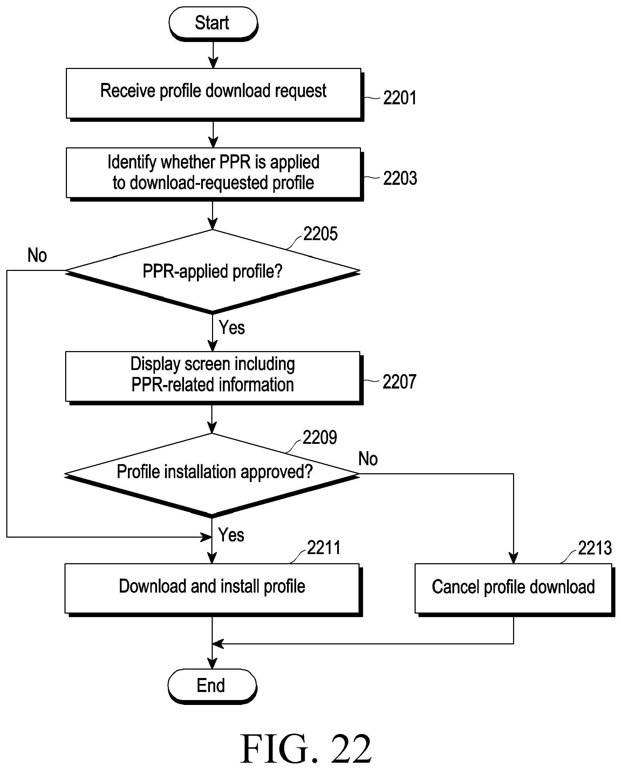

FIG. 22 is a flowchart illustrating a profile download method according to various embodiments.

Operations in FIG. 22 according to various embodiments will be described with reference to the electronic device 101 in FIG. 1A or 3.

In accordance with various embodiments, in operation 2201, the processor 120 (e.g., the LPA 312) of the electronic device 101 may receive a request for downloading a profile. The request for downloading the profile may be made through a menu or a link included in a webpage at which a specific profile can be downloaded, or may be made by purchasing a quick response (QR) code-based voucher having an activation code and scanning the QR code in the electronic device 101. However, embodiments herein are not limited to the above-mentioned methods.

In accordance with various embodiments, in operation 2203, the processor 120 of the electronic device 101 may determine whether a PPR has been applied to the profile which is requested to be downloaded. As a result of the determination, when it is determined, in operation 2205, that the profile which is requested to be downloaded is a profile to which a PPR has been applied (2205-Yes) (e.g., when it is determined that PPR1 and/or PPR2 has been applied to the corresponding profile), the processor 120 may display a screen including PPR-related information in operation 2207. According to various embodiments, the processor 120 may include and display a menu for approving installation of the corresponding profile on the screen including the PPR-related information.

In accordance with various embodiments, when the processor 120 of the electronic device 101 receives, in operation 2209, profile installation approval through the menu for approving the profile installation (2209-Yes), the processor 120 may download the profile and install the profile in the eUICC 401 in operation 2211.

In accordance with various embodiments, when profile installation cancellation is input through the menu for approving the profile installation of the profile in operation 2209 (2209-No), the processor 120 of the electronic device 101 may cancel a profile download procedure in operation 2213.

In accordance with various embodiments, as a result of the determination of the processor 120 of the electronic device 101, in operation 2203, as to whether a PPR has been applied to the profile which is requested to be downloaded, when it is determined, in operation 2205, that the profile which is requested to be downloaded is a profile to which the PPR has not been applied (2205-No) (e.g., when it is determined that PPR1 and/or PPR2 has not been applied to the corresponding profile), the processor 120 may download the profile and install the profile in the eUICC 401 in operation 2211.

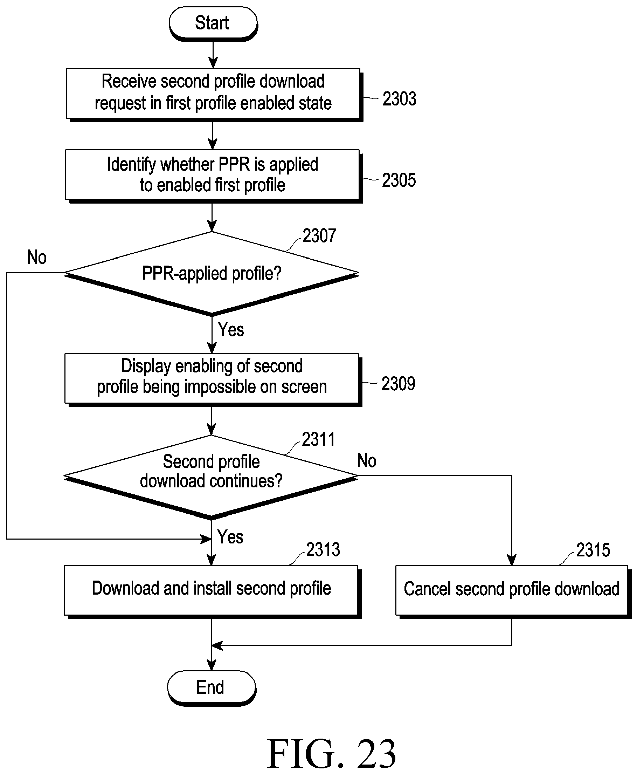

FIG. 23 is a flowchart illustrating a profile download method according to various embodiments.

Operations in FIG. 23 according to various embodiments will be described with reference to the electronic device 101 in FIG. 1A or 3.

In accordance with various embodiments, in a state in which a first profile already installed in the eUICC 401 is enabled, the processor 120 (e.g., the LPA 312) of the electronic device 101 may receive a request for downing a second profile in operation 2303. The request for downloading the second profile may be made through a menu or a link included in a webpage at which the second profile can be downloaded, or may be made by purchasing a quick response (QR) code-based voucher having an activation code and scanning the QR code in the electronic device 101. However, embodiments herein are not limited to the above-mentioned methods.

In accordance with various embodiments, in operation 2305, the processor 120 of the electronic device 101 may determine whether a PPR has been applied to the first profile which is already installed in the electronic device 101 and is in an enabled state. As a result of the determination, when it is determined, in operation 2307, that the enabled first profile is a profile to which a PPR has been applied (e.g., when it is determined that PPR1 and/or PPR2 has been applied to the corresponding profile), the processor 120 may display, in operation 2309, a screen including information indicating that the second profile may not be allowed to be enabled even when being downloaded. According to various embodiments, the processor 120 may include and display a menu for continuing to download the second profile in and on the screen including the information. Furthermore, in order to download a new profile on the screen including the information, the processor 120 may give notice that a memory reset should be performed, and the screen may further include a menu in which a shortcut to a function of the memory reset can be executed.

In accordance with various embodiments, in operation 2311, when the processor 120 of the electronic device 101 is requested to continue download of the second profile through the menu, the processor 120 may download the second profile and installed the second profile in the eUICC 401 in operation 2313.

In accordance with various embodiments, in operation 2311, when cancellation of the download or installation of the second profile is input through the menu, the processor 120 of the electronic device 101 may cancel a procedure of downloading the second profile in operation 2315.

In accordance with various embodiments, as a result of the determination of the processor 120 of the electronic device 101, in operation 2305, as to whether a PPR has been applied to the enabled first profile, when it is determined, in operation 2307, that the first profile is a profile to which the PPR has not been applied (e.g., when it is determined that PPR1 and/or PPR2 has not been applied to the corresponding profile), the processor 120 may download a profile of the second eSIM and install the same in the eUICC 401 in operation 2313.

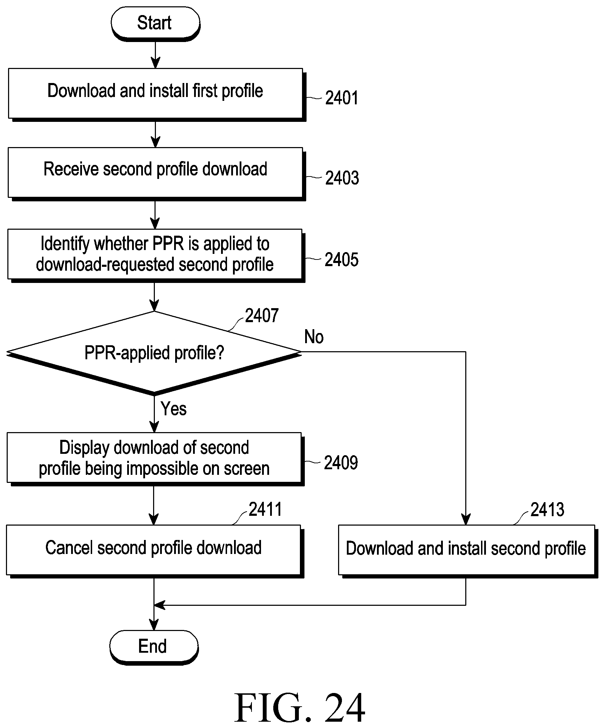

FIG. 24 is a flowchart illustrating a profile download method according to various embodiments.

Operations in FIG. 24 according to various embodiments will be described with reference to the electronic device 101 in FIG. 1A or 3.

In accordance with various embodiments, in operation 2401, the processor 120 (e.g., the LPA 312) of the electronic device 101 may download a first profile and install the first profile in the eUICC 401 of the electronic device 101. In a state in which the first profile is installed in the electronic device 101, the processor 120 may receive a request for downing a second profile in operation 2403. The request for downloading the second profile may be made through a menu or a link included in a webpage at which the second profile can be downloaded, or may be made by purchasing a quick response (QR) code-based voucher having an activation code and scanning the QR code in the electronic device 101. However, embodiments herein are not limited to the above-mentioned methods.

In accordance with various embodiments, in operation 2405, the processor 120 of the electronic device 101 may determine whether a PPR has been applied to the second profile which is requested to be downloaded. As a result of the determination, when it is determined, in operation 2407, that the second profile which is requested to be downloaded is a profile to which a PPR has been applied (2407-Yes) (e.g., when it is determined that PPR1 and/or PPR2 has been applied to the corresponding profile), the processor 120 may display, in operation 2409, a screen including information indicating that the second profile is not allowed to be downloaded. According to various embodiments, in operation 2411, the processor 120 may cancel the download of the second profile.

In accordance with various embodiments, as a result of the determination of the processor 120 of the electronic device 101, in operation 2405, as to whether a PPR has been applied to the second profile which is requested to be downloaded, when it is determined, in operation 2407, that the second profile which is requested to be downloaded is a profile to which the PPR has not been applied (2407-No) (e.g., when it is determined that PPR1 and/or PPR2 has not been applied to the corresponding profile), the processor 120 may download the second profile and install the second profile in the eUICC 401 in operation 2413.

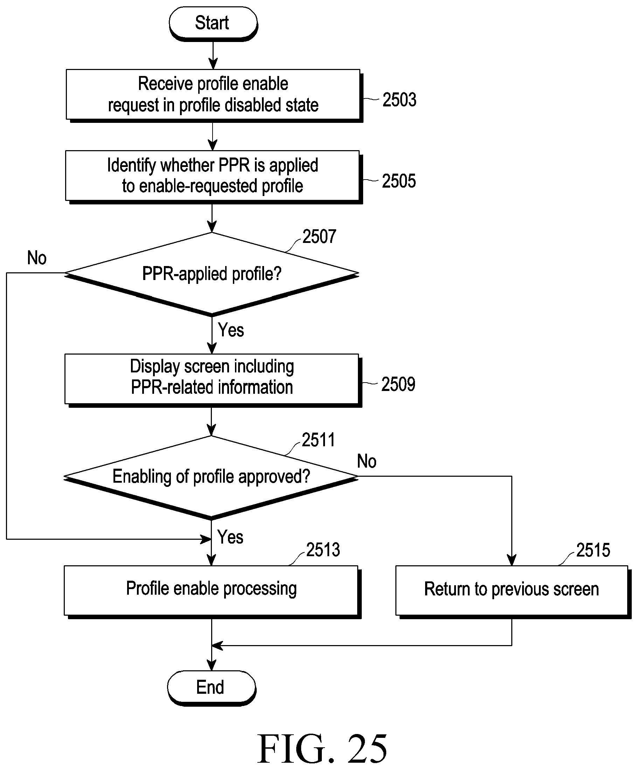

FIG. 25 is a flowchart illustrating a profile enabling method according to various embodiments. FIG. 25 will be described with reference to the electronic device 101 in FIG. 1A or 3, and FIGS. 26A, 26B, and 26Cc.

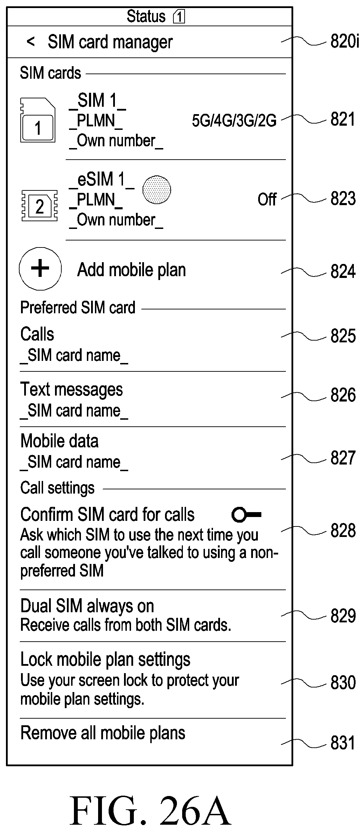

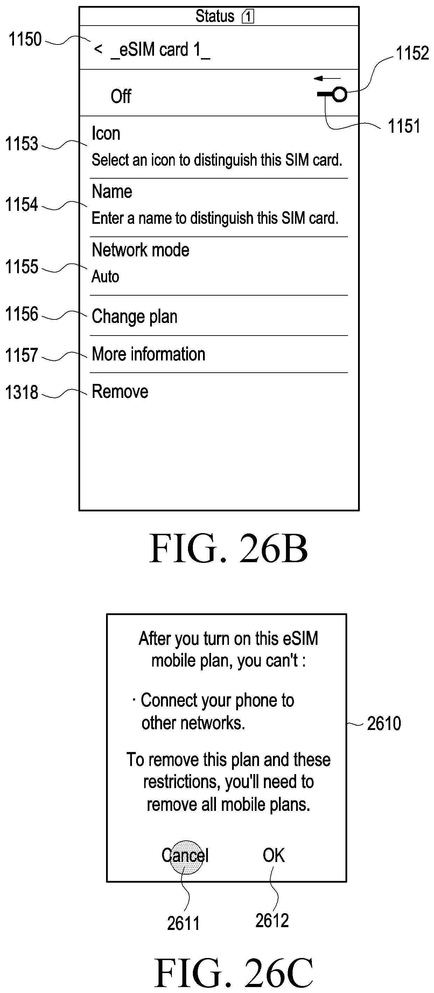

In accordance with various embodiments, in a state in which a profile installed in the eUICC 401 of the electronic device 101 is disabled, the processor 120 (e.g., the LPA 312) of the electronic device 101 may receive, in operation 2503, a request for enabling the disabled profile. The request for enabling the profile may be performed when a user selects a corresponding function through screens illustrated in FIGS. 26A and 26B.

In accordance with various embodiments, a screen 820i including information related to a SIM, illustrated in FIG. 26A, may include a tab 821 corresponding to the first SIM 531, and a tab 823 corresponding to a first profile (eSIM 1). According to various embodiments, when the first SIM 531 is not included in the electronic device 101, the tab 821 corresponding to the first SIM 531 may not be displayed on the screen 820i. The electronic device 101 may display information related to the first SIM 531 (e.g., own number (e.g., MSISDN), PLMN information, or a supportable network communication type) in the tab 821 corresponding to the first SIM 531. The electronic device 101 may display, based on the enabled state of the first SIM 531, a supportable network communication type to be visually distinguished from a disabled SIM. According to various embodiments, the electronic device 101 may display only text of "off", based on the disabled state of the first profile. The electronic device 101 may display information related to the first profile (e.g., own number (e.g., MSISDN), PLMN information, or a supportable network communication type) in the tab 823 corresponding to the first profile. The electronic device 101 may display a supportable network type (e.g., 5G/4G/3G/2G) with respect to an enabled SIM (e.g., the first SIM 531) and an indicator (e.g., text of "off") indicating a disabled state with respect to a disabled SIM (e.g., the eSIM 550), so that a user identifies currently enabled/disabled SIMs.

In accordance with various embodiments, the screen 820i including information related to a SIM may further include, based on the implementation, a tab 824 for adding a mobile plan, a tab 825 related to calls, a tab 826 related to text messages, a tab 827 related to mobile data, a tab 828 to confirm a SIM card for calls, a dual SIM always on tab 829, a tab 830 to lock mobile plan settings, and a tab 831 to remove all mobile plans, but there is no limitation. A mobile plan may include a profile.

According to various embodiments, the electronic device 101 may detect selection of the tab 823 corresponding to the first profile (eSIM 1) in a state in which the screen illustrated in FIG. 26A is displayed. When the tab 823 corresponding to the first profile is selected, the electronic device 101 may display a screen 1150 including information corresponding to the first profile as illustrated in FIG. 26B. The screen 1150 including information corresponding to the first profile may include a bar 1151 for toggling an object 1152. When the object 1152 is located at a first position on the bar 1151, the first profile may be enabled, and text (e.g., On) indicating the enabling state may be displayed. When the object 1152 is located at a second position on the bar 1151, the first profile may be disabled, and text (e.g., Off) indicating the disabled state may be displayed. The electronic device 101 may change the position of the object 1152, based on a drag input corresponding to the object 1152, and may control whether to enable the first profile, based on the position of the object 1152. As illustrated in 26B, when an input for moving the object 1152 from the second position on the bar 1151 to the first position is identified, the electronic device 101 may determine that a request for profile enabling for the disabled first profile has been received. The screen 1150 illustrated in FIG. 26B may include at least one among an icon control tab 1153 corresponding to the first profile, a name-related tab 1154, a network mode tab 1155, a mobile plan change tab 1156, a more information-related tab 1157, or a mobile plan (e.g., profile) deletion tab 1318. When the mobile plan deletion tab 1318 is selected, the electronic device 101 may determine that a command to delete the first profile has been obtained.

According to various embodiments, when the processor 120 receives the profile enabling request in operation 2503, the eUICC 401 of the electronic device 101 may determine, in operation 2505, whether a PPR has been applied to the profile which is requested to be enabled. As a result of the determination, when it is determined, in operation 2507, that the profile which is requested to be enabled is a profile to which the PPR has been applied (2507-Yes) (e.g., when it is determined that PPR1 and/or PPR2 has been applied to the corresponding profile), the processor 120 may display, in operation 2509, a screen (e.g., a pop-up window) including information indicating that the PPR has been applied to the profile. According to various embodiments, the screen may be displayed as illustrated FIG. 26C. For example, referring to FIG. 26C, the electronic device 101 may give, through a screen 2610, notice that when a first eSIM to which the PPR has been applied is enabled, other profiles cannot be downloaded and enabled, and that, in order to remove the already installed first profile or remove the application of the PPR applied to the first eSIM, it is needed to remove all profiles installed in the electronic device 101.

According to various embodiments, when approval for enabling the profile is received in operation 2511 (2511-Yes), the processor 120 may enable the profile in operation 2513. As illustrated in FIG. 26C, a menu for approval for enabling the profile may be included and provided in the screen including information indicating that the PPR has been applied to the profile. When an icon 2612 for approval is selected from among an icon 2611 for rejection and the icon 2612 for approval, included in the screen 2610 in FIG. 26C, the processor 120 may perform a profile enabling procedure. When the profile enabling procedure is completed, the processor 120 may display, on the screen 820i in FIG. 26A, a supportable network communication type (e.g., 5G/4G/3G/2G) corresponding to the tab 823 corresponding to the enabled eSIM(e.g., the first eSIM 550).

According to various embodiments, when rejection of enabling the profile is received in operation 2511 (2511-No) (e.g., when the icon 2611 for rejection is selected from among the icon 2611 for rejection and the icon 2612 for approval included in the screen 2610 in FIG. 26C), the processor 120 may return to the previous screen without enabling the profile in operation 2515.

In accordance with various embodiments, as a result of the determination of the processor 120 of the electronic device 101, in operation 2505, as to whether a PPR has been applied to the eSIM profile which is requested to be enabled, when it is determined, in operation 2507, that the profile is a profile to which the PPR has not been applied (2507-No) (e.g., when it is determined that PPR1 and/or PPR2 has not been applied to the corresponding profile), the processor 120 may enable the profile in operation 2513.

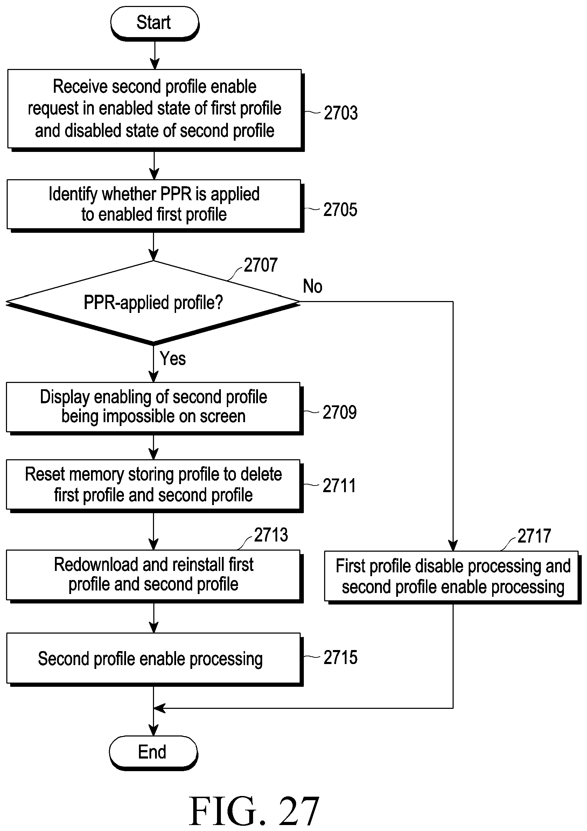

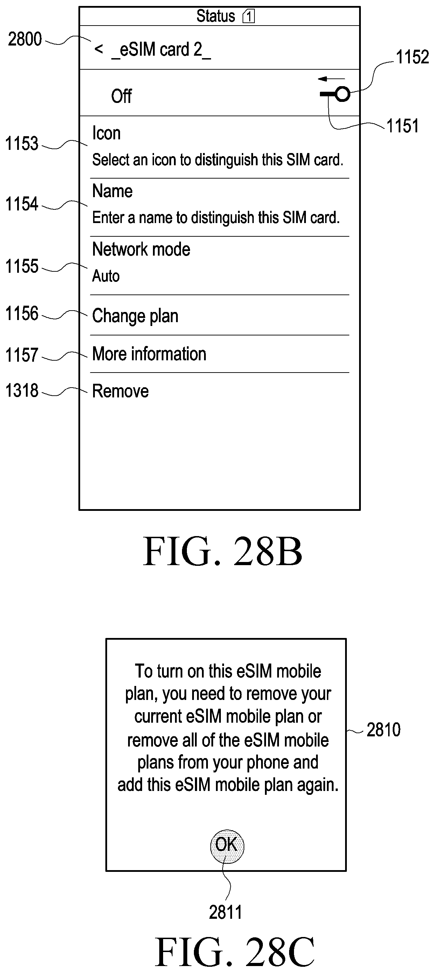

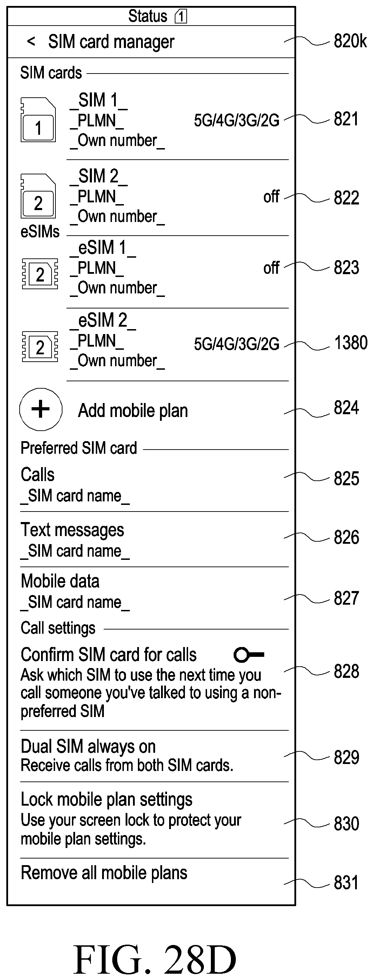

FIG. 27 is a flowchart illustrating a profile enabling method according to various embodiments. FIG. 27 will be described with reference to the electronic device 101 in FIG. 1 or 3, the eUICC 401 in FIG. 4, and FIGS. 28A, 28B, 28C, and 28D.

In accordance with various embodiments, in a state in which a first profile installed in the eUICC 401 of the electronic device 101 is enabled and a second profile is disabled, the processor 120 may receive a request for enabling the second profile in operation 2703. The request for enabling the second profile may be made when a user selects a corresponding function through a screen in FIG. 28A.

In accordance with various embodiments, a screen 820j including information related to a SIM, illustrated in FIG. 28A, may include a tab 821 corresponding to the first SIM 531, a tab 822 corresponding to the second SIM 541, a tab 823 corresponding to the first profile (eSIM 1), and a tab 1380 corresponding to the second profile (eSIM 2). According to various embodiments, when the first SIM 531 and/or the second SIM 541 is not included in the electronic device 101, the tab 821 corresponding to the first SIM 531 and/or the tab 822 corresponding to the second SIM 541 may not be displayed on the screen 820j. The electronic device 101 may display, based on the enabled state of the first profile, a supportable network type to be visually distinguished from the disabled second profile. According to various embodiments, the electronic device 101 may display only text of "off", based on the disabled state of the second profile. The electronic device 101 may display information related to the first profile and the second profile (e.g., own number (e.g., MSISDN), PLMN information, or a supportable network communication type) in the tabs 823 and 1380 corresponding to the first profile and the second profile. The electronic device 101 may display a supportable network communication type (e.g., 5G/4G/3G/2G) with respect to an enabled profile (e.g., the first profile) and an indicator (e.g., text of "off") indicating a disabled state with respect to a disabled profile (e.g., the second profile), so that a user identifies currently enabled/disabled profiles.

According to various embodiments, the electronic device 101 may detect selection of the tab 1380 corresponding to the second profile in a state in which the screen illustrated in FIG. 28A is displayed. When the tab 1380 corresponding to the second profile is selected, the electronic device 101 may display a screen including information corresponding to the second profile, as illustrated FIG. 28B. For example, a screen 2800 including the information corresponding to the second profile may include a bar 1151 for toggling an object 1152. When the object 1152 is located at a first position on the bar 1151, the second profile may be enabled, and text (e.g., On) indicating the enabled state may be displayed. When the object 1152 is located at a second position on the bar 1151, the second profile may be disabled, and text (e.g., Off) indicating the disabled state may be displayed. The electronic device 101 may change the position of the object 1152, based on a drag input corresponding to the object 1152, and may control, based on the position of the object 1152, whether to enable the second profile. When an input for moving the object 1152 from the second position on the bar 1151 to the first position is identified, the electronic device 101 may determine that a request for enabling the disabled second profile has been received.

According to various embodiments, when the processor 120 receives a request for enabling the second profile in operation 2703, the eUICC 401 of the electronic device 101 may determine, in operation 2705, whether a PPR has been applied to the already enabled first profile. As a result of the determination, when it is determined, in operation 2707, that the enabled first profile is a profile to which a PPR has been applied (2707-Yes) (e.g., when it is determined that PPR1 and/or PPR2 has been applied to the corresponding profile), the processor 120 may display, in operation 2709, a screen (e.g., a pop-up window) including information indicating that enabling of the second profile, which is requested to be enabled, is not allowed. According to various embodiments, the screen may be displayed as illustrated in FIG. 28C. For example, referring to FIG. 28C, the electronic device 101 may give, through a screen 2810, notice that in order to enable the second profile, it is needed to remove the currently enabled first profile or delete all profiles currently installed in the electronic device 101 and install the second profile again. When an icon 2811 indicating confirmation is selected on the screen 2810 in FIG. 28C, the electronic device 101 may return to the screen 2800 in FIG. 28B.

According to various embodiments, when a mobile plan deletion tab 1318 is selected on the screen 2800 in FIG. 28B, the processor 120 may delete both the first profile and the second profile by resetting a memory storing profiles in operation 2711.

According to various embodiments, the processor 120 may re-download and reinstall the first profile and the second profile in operation 2713. Since the reinstalled first profile and the reinstalled second profile are in a disabled state, the second profile may be enabled.

According to various embodiments, the electronic device 101 may enable the second profile in operation 2715. According to another embodiment, only the second profile among the first profile and the second profile which were deleted may be reinstalled and enabled.

After reinstalling the first profile and the second profile, when a procedure for enabling the second profile is completed, the processor 120 may display a screen 820k in FIG. 28D with which the screen 820j in FIG. 28A is replaced. For example, referring to FIG. 28D, "off" may be displayed as an indicator of a disabled state in the tab 823 corresponding to the first profile (eSIM 1), and a supportable network communication type (e.g., 5G/4G/3G/2G) may be displayed as an indicator of an enabled state in the tab 1380 corresponding to the second profile (eSIM 2).

In accordance with various embodiments, as a result of the determination of the processor 120 of the electronic device 101, in operation 2705, as to whether a PPR has been applied to the enabled first profile, when it is determined, in operation 2707, that the first profile is a profile to which the PPR has not been applied (2707-No) (e.g., when it is determined that PPR1 and/or PPR2 has not been applied to the corresponding profile), in operation 2717, the processor 120 may disable the first profile and then enable the disabled second profile.

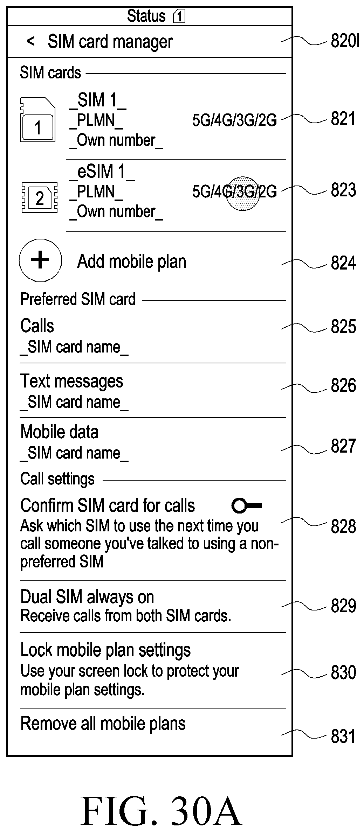

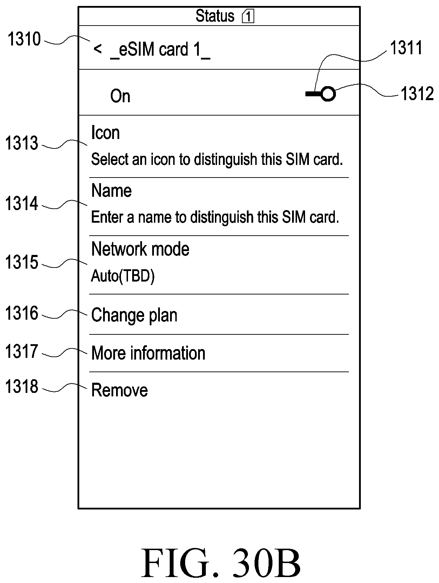

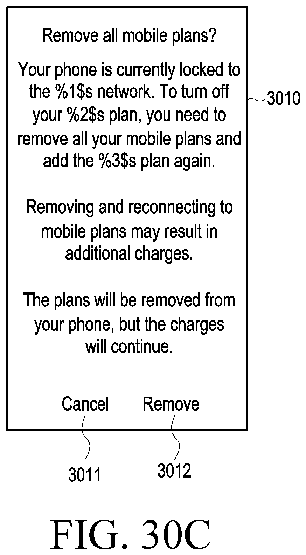

FIG. 29 is a flowchart illustrating a profile disabling method according to various embodiments. FIG. 29 will be described with reference to the electronic device 101 FIG. 1 or 3, the eUICC 401 in FIG. 4, and FIGS. 30A, 30B, and 30C.

In accordance with various embodiments, in a state in which a profile installed in the eUICC 401 of the electronic device 101 is enabled, the processor 120 may receive a request for disabling the profile in operation 2903. The request for disabling the profile may be made when a user selects a corresponding function through a screen illustrated in FIG. 30A.

In accordance with various embodiments, a screen 8201 including information related to a SIM, illustrated in FIG. 30A, may include a tab 821 corresponding to the first SIM 531 and a tab 823 corresponding to the first profile (eSIM 1). According to various embodiments, when the first SIM 531 is not included in the electronic device 101, the tab 821 corresponding to the first SIM 531 may not be displayed on the screen 8201. The electronic device 101 may display information related to the first SIM and the first profile (e.g., own number (e.g., MSISDN), PLMN information, or a supportable network communication type) in the tabs 821 and 823 corresponding to the first SIM and the first profile. The electronic device 101 may display a supportable network communication type (e.g., 5G/4G/3G/2G) with respect to an enabled SIM (e.g., the first SIM and the first profile).

According to various embodiments, the electronic device 101 may detect selection of the tab 823 corresponding to the first profile in a state in which the screen illustrated in FIG. 30A is displayed. When the tab 823 corresponding to the first profile is selected, the electronic device 101 may display a screen including information corresponding to the first profile as illustrated FIG. 30B. For example, a screen 1310 including the information corresponding to the first profile may include a bar 1151 for toggling an object 1152. When the object 1152 is located at a first position on the bar 1151, the first profile may be enabled, and text (e.g., On) indicating the enabled state may be displayed. When the object 1152 is located at a second position on the bar 1151, the first profile may be disabled, and text (e.g., Off) indicating the disabled state may be displayed. The electronic device 101 may change the position of the object 1152, based on a drag input corresponding to the object 1152, and may control, based on the position of the object 1152, whether to enable the first profile. According to various embodiments, when an input for moving the object 1152 from the first position on the bar 1151 to the second position is identified, the electronic device 101 may determine that a request for disabling the enabled first profile has been received.

According to various embodiments, when the processor 120 receives a request for disabling the profile (e.g., the first profile) in operation 2903, the electronic device 101 may determine, in operation 2905, whether a PPR has been applied to the profile (e.g., the first profile) which is requested to be disabled. As a result of the determination, when it is determined, in operation 2907, that the enabled profile is a profile to which a PPR has been applied (2907-Yes) (e.g., when it is determined that PPR1 and/or PPR2 has been applied to the corresponding profile), the processor 120 may display, in operation 2909, a screen (e.g., a pop-up window) including information indicating that disabling of the profile, which is requested to be disabled, is not allowed. According to various embodiments, the screen may be displayed as illustrated in FIG. 30C. For example, referring to FIG. 30C, the electronic device 101 may give, through a screen 3010, notice that in order to disable the first profile, it is needed to delete all profiles currently installed in the electronic device 101 and install the first profile again. When an icon 3011 indicating cancellation is selected on the screen 3010 in FIG. 30C, the electronic device 101 may return to the screen 1310 in FIG. 30B.

According to various embodiments, when an icon 3012 indicating mobile plan removal is selected on the screen 3010 in FIG. 30C, the processor 120 may delete all profiles installed in electronic device 101 including the first profile by resetting a memory storing profiles in operation 2911.

According to various embodiments, the processor 120 may re-download and reinstall the profile in operation 2913. The profile reinstalled in the electronic device 101 are in a disabled state.

In accordance with various embodiments, as a result of the determination of the processor 120 of the electronic device 101, in operation 2905, as to whether a PPR has been applied to the profile which is requested to be disabled, when it is determined, in operation 2907, that the profile is a profile to which the PPR has not been applied (e.g., when it is determined that PPR1 and/or PPR2 has not been applied to the corresponding profile), the processor 120 may disable the profile in operation 2917. The electronic device 101 may determine that the profile disabled in operation 2917 is in a disabled state.

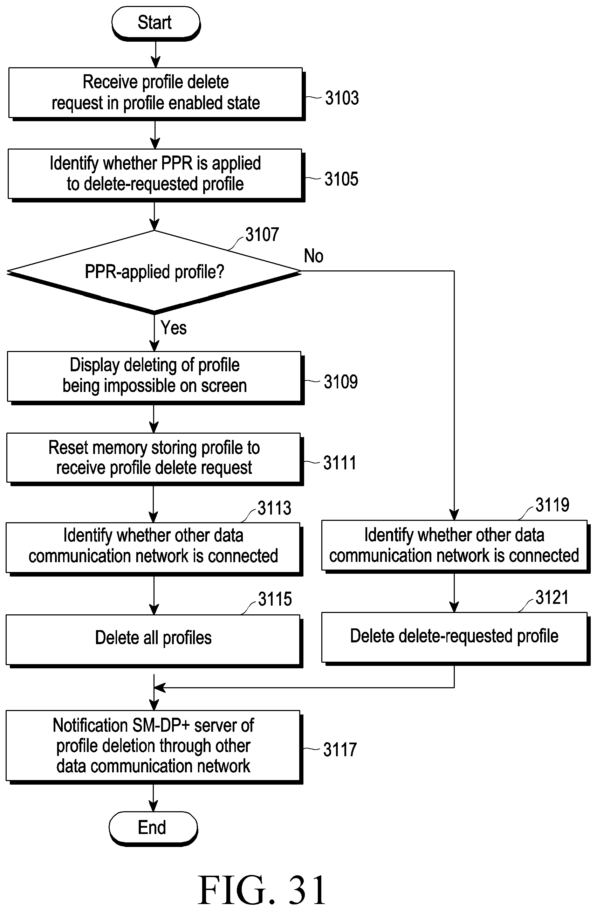

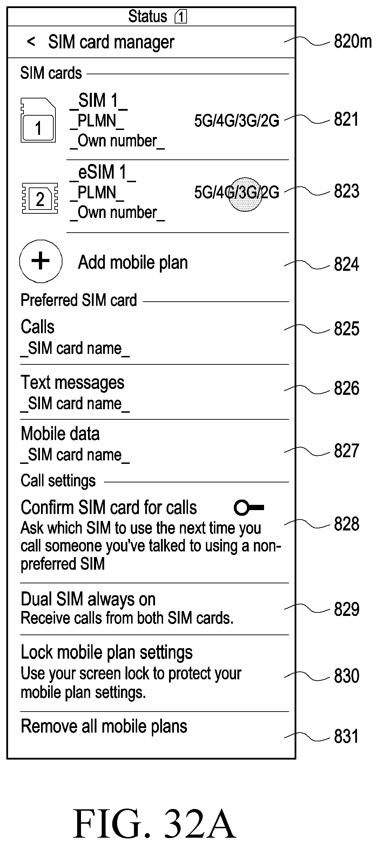

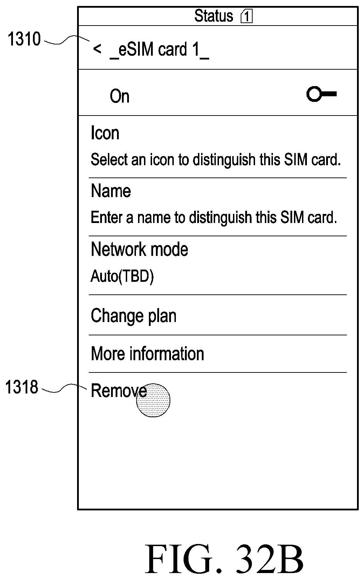

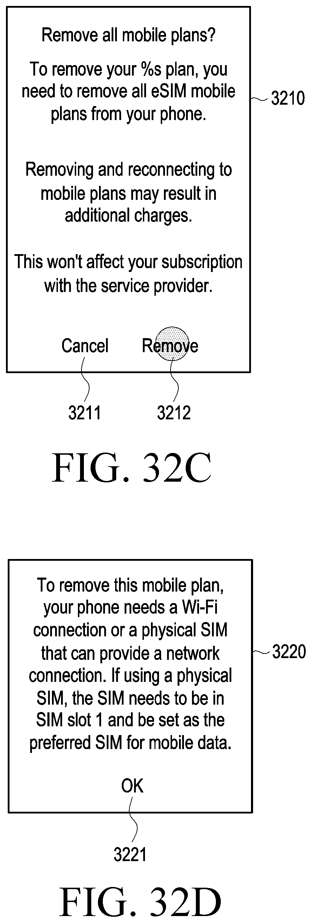

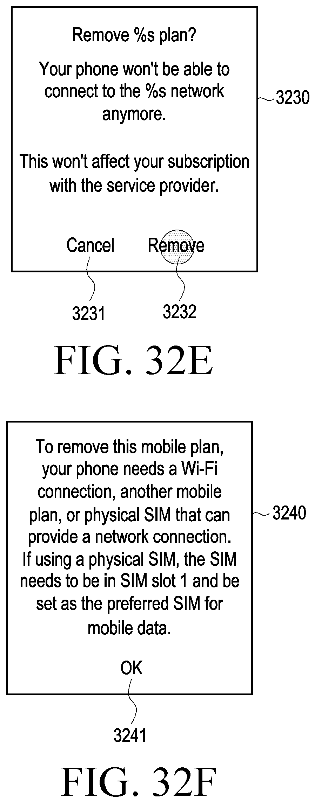

FIG. 31 is a flowchart illustrating a profile deletion method according to various embodiments. FIG. 31 will be described with reference to the electronic device 101 in FIG. 1 or 3, the eUICC 401 in FIG. 4, and FIGS. 32A, 32B, 32C, 32D, 32E, and 32F.

In accordance with various embodiments, in a state in which a profile installed in the eUICC 401 of the electronic device 101 is enabled, the processor 120 may receive a request for deleting the profile in operation 3103. The request for deleting the profile may be made when a user selects a corresponding function through screens illustrated in FIGS. 32A and 32B.

In accordance with various embodiments, a screen 820m including information related to an SIM, illustrated in FIG. 32A, may include a tab 821 corresponding to the first SIM 531 and a tab 823 corresponding to the first profile. According to various embodiments, when the first SIM 531 is not included in the electronic device 101, the tab 821 corresponding to the first SIM 531 may not be displayed on the screen 820m. The electronic device 101 may display information related to the first SIM and the first profile (e.g., own number (e.g., MSISDN), PLMN information, or a supportable network communication type) in the tabs 821 and 823 corresponding to the first SIM and the first profile. The electronic device 101 may display a supportable network type (e.g., 5G/4G/3G/2G) with respect to an enabled SIM (e.g., the first SIM and the first profile).

According to various embodiments, the electronic device 101 may detect selection of the tab 823 corresponding to the first profile (eSIM 1) in a state in which the screen illustrated in FIG. 32A is displayed. When the tab 823 corresponding to the first profile is selected, the electronic device 101 may display a screen including information corresponding to the first profile as illustrated FIG. 32B.

According to various embodiments, when a mobile plan deletion tab 1318 is selected on a screen 1310 in FIG. 32B, the electronic device 101 may determine that a profile deletion request for the corresponding profile (e.g., the firsts profile) has been received.

According to various embodiments, when the processor 120 receives a profile deletion request for the profile (e.g., the first profile) in operation 3103, the electronic device 101 may determine, in operation 3105, whether a PPR has been applied to the profile. As a result of the determination, it is determined, in operation 3107, that the profile is a profile to which a PPR has been applied (3107-Yes) (e.g., when it is determined that PPR1 and/or PPR2 has been applied to the corresponding profile), the processor 120 may display, in operation 3109, a screen (e.g., a pop-up window) including information indicating that deleting of the profile which is requested to be deleted is not allowed. According to various embodiments, the screen may be displayed as illustrated FIG. 32C. For example, referring to FIG. 32C, the electronic device 101 may give, through a screen 3210, notice that in order to delete the profile, it is needed to delete all profiles currently installed in the electronic device 101. When an icon 3211 indicating cancellation is selected on the screen 3210 in FIG. 32C, the electronic device 101 may return to the screen 1310 in FIG. 32B.

According to various embodiments, when an icon 3212 indicating mobile plan removal is selected on the screen 3210 in FIG. 32C, the processor 120 may determine a request for deleting all profiles currently installed in the electronic device 101 has been received. Before deleting all the profiles, the processor 120 may determine, in operation 3113, whether a connection is made to a data communication network (e.g., a communication network by WiFi or a physical SIM) other than a communication network by the profile (e.g., the first profile). As a result of the determination, when communication by another data communication network is not connected, the processor 120 may display, as illustrated in FIG. 32D, a screen 3220 (e.g., a pop-up window) for giving notice that a connection to the other data communication network is needed. Referring to FIG. 32D, on the screen 3220, it may be notified that a connection to the other data communication network is needed to delete the all profiles, and that in order to make a connection using a physical SIM, a SIM card needs to be inserted into a SIM slot and the corresponding physical SIM needs to be set as a preferred SIM for the connection. When an icon 3221 indicating deletion approval is selected on the screen 3220 in FIG. 32D, the processor 120 may wait for a network connection.

According to various embodiments, when it is determined that a communication network by another data communication network is connected, in operation 3115, the processor 120 may reset a memory storing profiles in operation 3115 to delete all profiles installed in the electronic device 101, including the profile (e.g., the first profile). In operation 3117, the processor 120 may use the other connected data communication network to notify a server (e.g., the SM-DP+ server 220 in FIG. 2) that the corresponding profile has been deleted.

In accordance with various embodiments, as a result of the determination of the processor 120 of the electronic device 101, in operation 3105, as to whether a PPR has been applied to a profile which is requested to be deleted, when it is determined, in operation 3107, that the profile is a profile to which a PPR has not been applied (3107-No) (e.g., when it is determined that PPR1 and/or PPR2 has not been applied to the corresponding profile), the processor 120 may display a screen (e.g., a pop-up window) including information previously giving notice that due to the deletion of the profile, provision of a communication network service using the corresponding profile is not allowed. According to various embodiments, the screen may be displayed as illustrated in FIG. 32E. For example, referring to FIG. 32E, the electronic device 101 may give, through a screen 3230, notice that providing the corresponding communication network service is not allowed when the profile is deleted. When an icon 3231 indicating cancellation is selected on the screen 3230 in FIG. 32E, the electronic device 101 may return to the screen 1310 in FIG. 32B.

According to various embodiments, when an icon 3232 indicating mobile plan removal is selected on the screen 3230 in FIG. 32E, the processor 120 may determine that the request for deleting the profile has been received, and may terminate the network connection based on the profile which is requested to be deleted. Before deleting the profile which is requested to be deleted, the processor 120 may determine, in operation 3119, whether a connection is made to a data communication network (e.g., a communication network by WiFi, another profile which is not requested to be deleted, or a physical SIM) other than a communication network by the profile (e.g., the first profile). As a result of the determination, when the communication network by the other data communication network is not connected, the processor 120 may display, as illustrated in FIG. 32F, a screen 3240 (e.g., a pop-up window) for giving notice that a connection to the other data communication network is needed. Referring to FIG. 32F, the screen 3240 may give notice that that a connection to the other data communication network is needed to delete the profile which is requested to be deleted, and that in order to make a connection using a physical SIM, a SIM card needs to be inserted into a SIM slot and the corresponding physical SIM needs to be set as a preferred SIM for the connection. When an icon 3241 indicating deletion approval is selected on the screen 3240 in FIG. 32F, the processor 120 may wait for a network connection.

According to various embodiments, when it is determined that a communication network by the other data communication network is connected, the processor 120 may delete, in operation 3121, the profile which is requested to be deleted. In operation 3117, the processor 120 may use the other connected data communication network to notify a server (e.g., the SM-DP+ server 220) that the corresponding profile (e.g., the first profile) has been deleted.

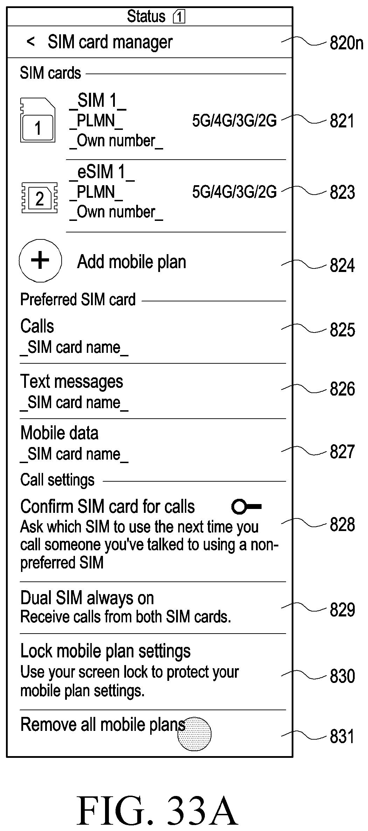

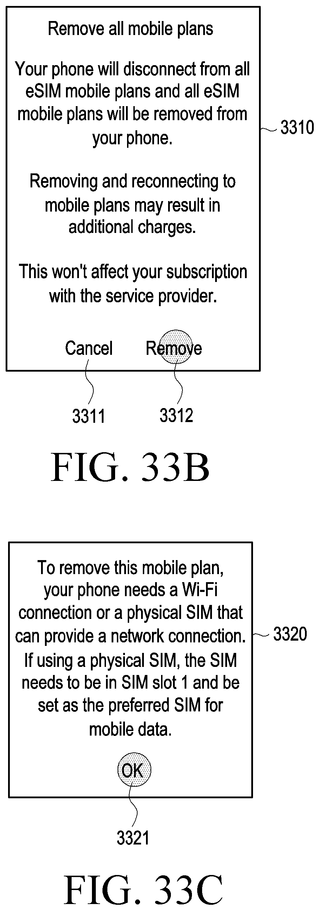

FIGS. 33A, 33B, and 33C illustrate screens displayed in an electronic device according to various embodiments. According to various embodiments, when a tab 831 for deleting all mobile plans is selected on a screen 820n in FIG. 33A, the processor 120 may display a screen (e.g., a pop-up window) including information giving notice that communication network connection by all profiles is stopped in response to the deletion request. According to various embodiments, the screen may be displayed as illustrated in FIG. 33B. For example, referring to FIG. 33B, the electronic device 101 may give, through the screen 3310, notice that if the profile is deleted, a charge may be made for additional download of a profile in the future. When an icon 3311 indicating cancellation is selected on the screen 3310 in FIG. 33B, the electronic device 101 may return to the screen 1310 in FIG. 33A.

According to various embodiments, when an icon 3312 indicating mobile plan removal is selected on the screen 3310 in FIG. 33B, the processor 120 may determine that a request for deleting all profile currently installed in the electronic device 101 has been received. Before deleting the all profiles, the processor 120 may determine whether a connection to another data communication network (e.g., a communication network by WiFi or a physical SIM) is made. As a result of the determination, which a communication network by the other data communication network is not connected, the processor 120 may display, as illustrated in FIG. 33C, a screen 3320 (e.g., a pop-up window) for notifying of the face that a connection to the other data communication network is needed. Referring to FIG. 33C, the screen 3320 may give notice that a connection to the other data communication network is needed to delete the all profiles, and that in order to make a connection using a physical SIM, a SIM card needs to be inserted into a SIM slot and the corresponding physical SIM needs to be set as a preferred SIM for the connection. When an icon 3321 indicating deletion approval is selected on the screen 3320 in FIG. 33C, the processor 120 may determine that the request for deleting all profiles has been received.

According to various embodiments, the processor 120 may reset a memory storing profiles to delete all profiles installed in the electronic device 101, including the profile.

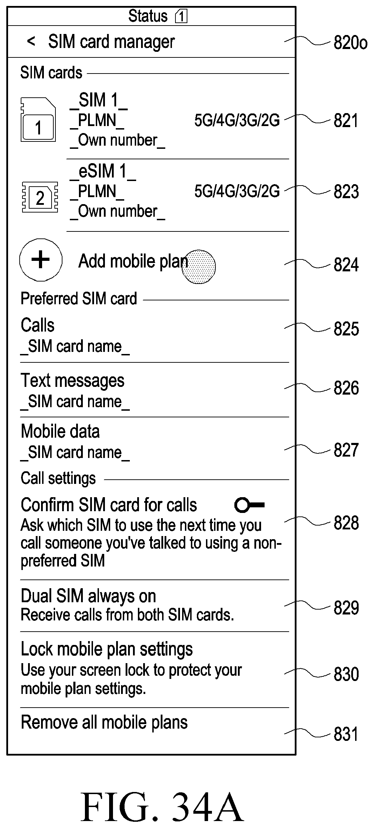

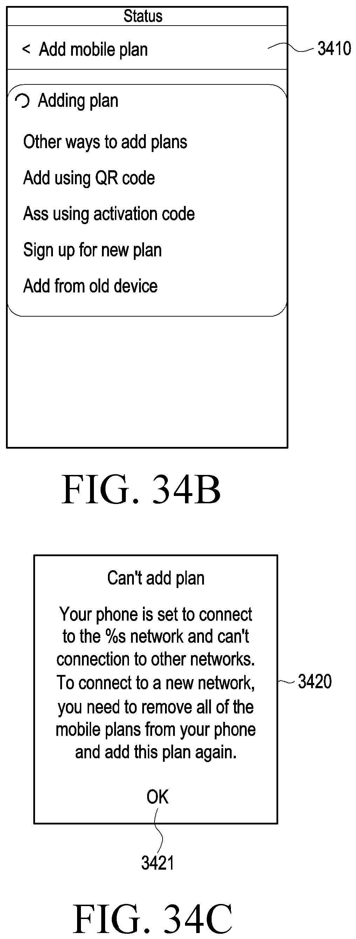

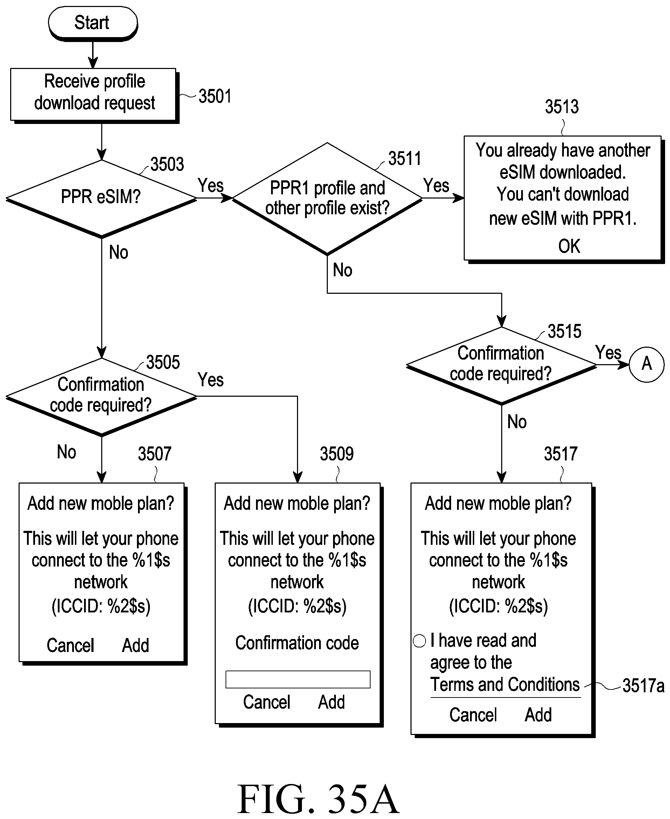

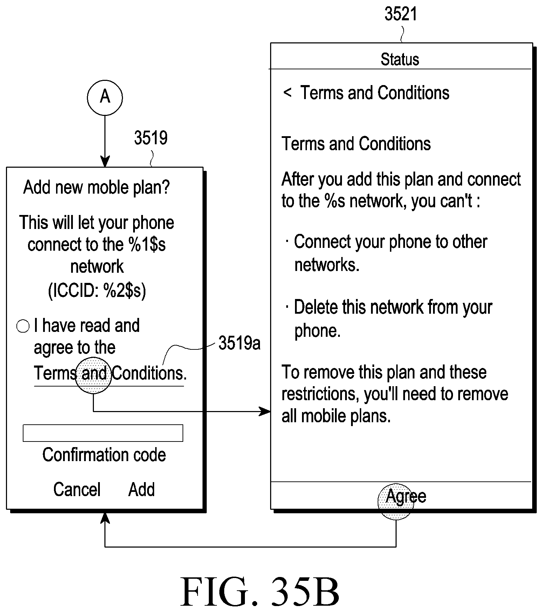

FIGS. 34A, 34B, and 34C illustrate screens displayed in an electronic device according to various embodiments. According to various embodiments, when a tab 824 for adding a mobile plan is selected on a screen 820o in FIG. 34A, the processor 120 may display a screen 3410 illustrated in FIG. 34B. When a specific method for adding a mobile plan is selected on the screen 3410 illustrated in FIG 34B, whether a PPR has been applied to an already installed eSIM may be determined. As a result of the determination, when it is determined that there is a PPR-applied profile among already installed profiles (e.g., when it is determined that PPR1 and/or PPR2 has been applied to the corresponding profile), the processor 120 may display a screen (e.g., a pop-up window) including information indicating that addition of a new profile is not allowed. According to various embodiments, the screen may be displayed as illustrated in FIG. 34C. For example, referring to FIG. 34C, the electronic device 101 may give, through a screen 3420, notice that addition of a new profile is not allowed and that in order to add a new profile, all of currently installed profiles need to be deleted. When an icon 3421 indicating confirmation is selected on the screen 3420 in FIG. 34C, the electronic device 101 may return to the screen 820o in FIG. 34A or the screen 3410 in FIG. 34B. According to various embodiments, the display order of FIGS. 34B and 34C may be changed. According to various embodiments, when the tab 824 for adding a mobile plan is selected on the screen 820o in FIG. 34A, the screen 3420 in FIG. 34C may be displayed first. Thereafter, when icon 3421 indicating confirmation is selected on the screen 3420 in FIG. 34C, the screen 3410 in FIG. 34B may also be displayed. FIGS. 35A and 35B illustrate screens displayed in an electronic device according to various embodiments. Referring to FIGS. 35A and 35B, in operation 3501, the electronic device 101 may receive a request for downloading a profile.

According to various embodiments, the electronic device 101 may determine whether the profile which is requested to be downloaded is a profile to which a PPR has been applied. As a result of the determination, when it is determined, in operation 3503, that the profile is a profile to which a PPR has not been applied (3503-No), the electronic device 101 may determine whether a confirmation code is required. According to various embodiments, after metadata for the profile, which is requested to be deleted, is downloaded before downloading the profile, whether a PPR has been applied to the profile which is requested to be downloaded may be determined through the metadata. The confirmation code is a code usable when making a profile download request, and may be provided by the SM-DP+ 220. When the profile download request is made, the SM-DP+ 220 may perform authentication by comparing a confirmation code input by the user with a pre-stored confirmation code. As a result of the determination, when the confirmation code is not required (3505-No), the electronic device 101 may display an addition determination screen 3507 (e.g., a pop-up window) for downloading a new profile. As a result of the determination, when the confirmation code is required (3505-Yes), the electronic device 101 may display an addition determination and confirmation code input screen 3509 (e.g., a pop-up window) for downloading a new profile.

According to various embodiments, the electronic device 101 may determine whether the profile which is requested to be downloaded is a profile to which a PPR has been applied. As a result of the determination, when it is determined, in operation 3503, that the profile is a profile to which a PPR has been applied (3503-Yes), the electronic device 101 may determine, in operation 3511, whether the profile is the profile is a profile to which PPR1 has been applied, and whether there is another profile already installed. As a result of the determination, when the profile which is requested to be downloaded is a profile to which PPR1 has been applied, and when there is another profile already installed (3511-Yes), the electronic device 101 may display a screen 3513 (e.g., a pop-up window) showing that since the other profile already exists, it is not possible to download a new profile to which a PPR has been applied.

As a result of the determination, when the profile which is requested to be downloaded is not a profile to which PPR1 has been applied (e.g., when the profile is a profile to which PPR2 has been applied) or when there is no another profile already installed (3511-No), the electronic device 101 may determine, in operation 3515, whether a confirmation code is required. As a result of the determination, when the confirmation code is not required (3515-No), the electronic device 101 may display an addition determination screen 3517 (e.g., a pop-up window) for downloading a new profile, together with PPR-related link information 3517a. As a result of the determination, when the confirmation code is required (3515-Yes), the electronic device 101 may display an addition determination and confirmation code input screen 3519 (e.g., a pop-up window) for downloading a new profile, together with PPR-related link information 3519a. A SIM identification number (e.g., an integrated circuit card identifier (ICCID) may also be displayed on the screen 3519.

According to various embodiments, when PPR-related link information 3517a and 3519a are selected on the screen 3517 and the screen 3519, detailed information related to a PPR may be displayed in a screen 3521.

In accordance with various embodiments, an electronic device (e.g., the electronic device 101) includes at least one processor (e.g., at least one of the processor 120 or the communication processor 501), a first slot (e.g., the first slot 530) connected to the at least one processor (e.g., at least one of the processor 120 or the communication processor 501) and capable of containing a removable first SIM (e.g., the first SIM 531), a second slot (e.g., the second slot 541) selectively connectable to the at least one processor (e.g., at least one of the processor 120 or the communication processor 501) and capable of containing a removable second SIM (e.g., the second SIM 540), an eSIM (e.g., the eSIM 550) selectively connectable to the at least one processor (e.g., at least one of the processor 120 or the communication processor 501) and included in the electronic device (e.g., the electronic device 101), and a switch (e.g., the switch 560) configured to connect one of the second slot (e.g., the second slot 541) or the eSIM (e.g., the eSIM 550) to the at least one processor (e.g., at least one of the processor 120 or the communication processor 501), wherein the at least one processor (e.g., at least one of the processor 120 or the communication processor 501) is configured to obtain, from a network, first information indicating whether the eSIM (e.g., the eSIM 550) is supported, and when the first information is identified as supporting the eSIM (e.g., the eSIM 550), control, based on detection of a first event for using the second SIM (e.g., the second SIM 540), the switch (e.g., the switch 560) such that the at least one processor (e.g., at least one of the processor 120 or the communication processor 501) is connected to the second slot (e.g., the second slot 541), and control, based on detection of a second event for using the eSIM (e.g., the eSIM 550), the switch (e.g., the switch 560) such that the at least one processor (e.g., at least one of the processor 120 or the communication processor 501) is connected to the eSIM (e.g., the eSIM 550), and when the first information is identified as not supporting the eSIM (e.g., the eSIM 550), control the switch (e.g., the switch 560) such that the at least one processor (e.g., at least one of the processor 120 or the communication processor 501) is connected to the second slot (e.g., the second slot 541).

In accordance with various embodiments, the electronic device (e.g., the electronic device 101) may further include a display (e.g., the display device 160), wherein the at least one processor (e.g., at least one of the processor 120 or the communication processor 501) is further configured to control the display (e.g., the display device 160) to display a first screen including a first tab corresponding to the first SIM (e.g., the first SIM 531), a second tab corresponding to the second SIM (e.g., the second SIM 540), and a third tab corresponding to at least one profile stored in the eSIM (e.g., the eSIM 550) when the first information is identified as supporting the eSIM (e.g., the eSIM 550).

In accordance with various embodiments, the at least one processor (e.g., at least one of the processor 120 or the communication processor 501) may be configured to enable one of the second SIM (e.g., the second SIM 540) or the eSIM (e.g., the eSIM 550) and disable the other, based on a user input for one of the second tab or the third tab on the first screen.

In accordance with various embodiments, the at least one processor (e.g., at least one of the processor 120 or the communication processor 501) may be configured to, as at least a part of the controlling, based on the detection of the first event, the switch (e.g., the switch 560) such that the at least one processor (e.g., at least one of the processor 120 or the communication processor 501) is connected to the second SIM (e.g., the second SIM 540), detect, as the first event, a first user input for controlling the second SIM (e.g., the second SIM 540) for the second tab to an enabled state and control the switch (e.g., the switch 560) such that, the at least one processor (e.g., at least one of the processor 120 or the communication processor 501) is connected to the second SIM (e.g., the second SIM 540), and may be configured to, as at least a part of the controlling, based on the detection of the second event, the switch (e.g., the switch 560) such that the at least one processor (e.g., at least one of the processor 120 or the communication processor 501) is connected to the eSIM (e.g., the eSIM 550), detect, as the second event, a second user input for controlling the eSIM (e.g., the eSIM 550) for the third tab to an enabled state and control the switch (e.g., the switch 560) such that the at least one processor (e.g., at least one of the processor 120 or the communication processor 501) is connected to the eSIM (e.g., the eSIM 550).

In accordance with various embodiments, the at least one processor (e.g., at least one of the processor 120 or the communication processor 501) may be configured to display the first screen including at least one among information about the first SIM (e.g., the first SIM 531) as at least a part of the displaying of the first screen, information about an enabled SIM, or information about a disabled SIM, and the information about the disabled SIM may be obtained and pre-stored in the electronic device (e.g., the electronic device 101) while the disabled SIM is connected to the at least one processor (e.g., at least one of the processor 120 or the communication processor 501) before the first screen is displayed.

In accordance with various embodiments, the at least one processor (e.g., at least one of the processor 120 or the communication processor 501) may be configured to, as at least a part of the displaying of the first screen, display information about the first SIM (e.g., the first SIM 531) and information about an enabled SIM to be distinguished from information about a disabled SIM.

In accordance with various embodiments, the at least one processor (e.g., at least one of the processor 120 or the communication processor 501) may be configured to, when the first information is identified as not supporting the eSIM (e.g., the eSIM 550) and when second information indicating that the electronic device (e.g., the electronic device 101) supports two slots is determined, control the switch (e.g., the switch 560) to connect the first slot (e.g., the first slot 530) and the second slot (e.g., the second slot 541) to the at least one processor (e.g., at least one of the processor 120 or the communication processor 501), and disable the eSIM (e.g., the eSIM 550).

In accordance with various embodiments, the electronic device (e.g., the electronic device 101) may further include a display (e.g., the display device 160), wherein the at least one processor (e.g., at least one of the processor 120 or the communication processor 501) is further configured to control the display (e.g., the display device 160) to display a second screen including a first tab corresponding to the first SIM (e.g., the first SIM 531) and a second tab corresponding to the second SIM (e.g., the second SIM 540), or a third screen including the first tab, the second tab, and a third tab indicating that the eSIM (e.g., the eSIM 550) is in a disabled state.

In accordance with various embodiments, the at least one processor (e.g., at least one of the processor 120 or the communication processor 501) may be configured to, when the first information is identified as supporting the eSIM (e.g., the eSIM 550) and when second information indicating that the electronic device (e.g., the electronic device 101) supports one slot is determined, control the switch (e.g., the switch 560) to connect the first slot (e.g., the first slot 530) and the eSIM (e.g., the eSIM 550) to the at least one processor (e.g., at least one of the processor 120 or the communication processor 501).

In accordance with various embodiments, the electronic device (e.g., the electronic device 101) may further include a display (e.g., the display device 160), wherein the at least one processor (e.g., at least one of the processor 120 or the communication processor 501) is further configured to control the display (e.g., the display device 160) to display a second screen including a first tab corresponding to the first SIM (e.g., the first SIM 531) and a third tab corresponding to at least one profile stored in the eSIM (e.g., the eSIM 550), or a third screen including the first tab, the third tab, and a second tab indicating that the second SIM (e.g., the second SIM 540) is in a disabled state.

In accordance with various embodiments, the at least one processor (e.g., at least one of the processor 120 or the communication processor 501) may be configured to, when the first information is identified as not supporting the eSIM (e.g., the eSIM 550) and when second information indicating that the electronic device (e.g., the electronic device 101) supports one slot is determined, control the switch (e.g., the switch 560) such that both the second slot (e.g., the second slot 541) and the eSIM (e.g., the eSIM 550) are not connected to the at least one processor (e.g., at least one of the processor 120 or the communication processor 501), or defer or ignore processing of information from at least one of the second slot (e.g., the second slot 541) or the eSIM (e.g., the eSIM 550).

In accordance with various embodiments, the electronic device (e.g., the electronic device 101) may further include a display (e.g., the display device 160), wherein the at least one processor (e.g., at least one of the processor 120 or the communication processor 501) is further configured to control the display (e.g., the display device 160) to display a fourth screen including a first tab corresponding to the first SIM (e.g., the first SIM 531), or a fifth screen including the first tab, a second tab indicating that the second SIM (e.g., the second SIM 540) is in a disabled state, and a third tab indicating that the eSIM (e.g., the eSIM 550) is in a disabled state.

In accordance with various embodiments, the at least one processor (e.g., at least one of the processor 120 or the communication processor 501) may be configured to obtain a request for a change from a first mobile network operator supporting the eSIM (e.g., the eSIM 550) to a second mobile network operator that does not support the eSIM (e.g., the eSIM 550), and output, when there is a profile defined in the eSIM (e.g., the eSIM 550), a message indicating that the change to the second mobile network operator is impossible.

In accordance with various embodiments, the at least one processor (e.g., at least one of the processor 120 or the communication processor 501) may be configured to disallow a change from a mobile network operator corresponding to the electronic device (e.g., the electronic device 101) to another mobile network operator when the electronic device (e.g., the electronic device 101) is determined to be positioned in a designated country.

In accordance with various embodiments, the at least one processor (e.g., at least one of the processor 120 or the communication processor 501) may be configured to determine, based on at least one parameter set including the first information indicating whether the eSIM (e.g., the eSIM 550) is supported, the state of the switch (e.g., the switch 560) and whether to enable each of the second SIM (e.g., the second SIM 540) and the eSIM (e.g., the eSIM 550), detect a change of the at least one parameter set, and change, based on the changed at least one parameter set, the state of the switch (e.g., the switch 560) and whether to enable each of the second SIM (e.g., the second SIM 540) and the eSIM (e.g., the eSIM 550).

In accordance with various embodiments, an operation method of an electronic device (e.g., the electronic device 101), which includes at least one processor (e.g., at least one of the processor 120 or the communication processor 501), a first slot (e.g., the first slot 530) capable of containing a removable first SIM (e.g., the first SIM 531), a second slot (e.g., the second slot 541) capable of containing a removable second SIM (e.g., the second SIM 540), an eSIM (e.g., the eSIM 550) included in the electronic device (e.g., the electronic device 101), and a switch (e.g., the switch 560) configured to connect one of the second slot (e.g., the second slot 541) or the eSIM (e.g., the eSIM 550) to the at least one processor (e.g., at least one of the processor 120 or the communication processor 501), includes obtaining, from a network, first information indicating whether the eSIM (e.g., the eSIM 550) is supported, and when the first information is identified as supporting the eSIM (e.g., the eSIM 550), controlling, based on detection of a first event for using the second SIM (e.g., the second SIM 540), the switch (e.g., the switch 560) such that the at least one processor (e.g., at least one of the processor 120 or the communication processor 501) is connected to the second slot (e.g., the second slot 541), or controlling, based on detection of a second event for using the eSIM (e.g., the eSIM 550), the switch (e.g., the switch 560) such that the at least one processor (e.g., at least one of the processor 120 or the communication processor 501) is connected to the eSIM (e.g., the eSIM 550), and when the first information is identified as not supporting the eSIM (e.g., the eSIM 550), controlling the switch (e.g., the switch 560) such that the at least one processor (e.g., at least one of the processor 120 or the communication processor 501) is connected to the second slot (e.g., the second slot 541).

In accordance with various embodiments, the operation method may further include displaying a first screen including a first tab corresponding to the first SIM (e.g., the first SIM 531), a second tab corresponding to the second SIM (e.g., the second SIM 540), and a third tab corresponding to at least one profile stored in the eSIM (e.g., the eSIM 550) when the first information is identified as supporting the eSIM (e.g., the eSIM 550).

In accordance with various embodiments, the operation method may further include enabling one of the second SIM (e.g., the second SIM 540) or the eSIM (e.g., the eSIM 550) and disabling the other, based on a user input for one of the second tab or the third tab on the first screen.

In accordance with various embodiments, the operation method may further include, when the first information is identified as not supporting the eSIM (e.g., the eSIM 550) and when second information indicating that the electronic device (e.g., the electronic device 101) supports two slots is determined, controlling the switch (e.g., the switch 560) to connect the first slot (e.g., the first slot 530) and the second slot (e.g., the second slot 541) to the at least one processor (e.g., at least one of the processor 120 or the communication processor 501), and disabling the eSIM (e.g., the eSIM 550).

In accordance with various embodiments, the operation method may further include controlling the switch (e.g., the switch 560) to connect the first slot (e.g., the first slot 530) and the eSIM (e.g., the eSIM 550) to the at least one processor (e.g., at least one of the processor 120 or the communication processor 501) when the first information is identified as supporting the eSIM (e.g., the eSIM 550) and when second information indicating that the electronic device (e.g., the electronic device 101) supports one slot is determined.

In accordance with various embodiments, the operation method may further include, when the first information is identified as not supporting the eSIM (e.g., the eSIM 550) and when second information indicating that the electronic device (e.g., the electronic device 101) supports one slot is determined, controlling the switch (e.g., the switch 560) such that both the second slot (e.g., the second slot 541) and the eSIM (e.g., the eSIM 550) are not connected to the at least one processor (e.g., at least one of the processor 120 or the communication processor 501), or deferring or ignoring processing of information from at least one of the second slot (e.g., the second slot 541) or the eSIM (e.g., the eSIM 550).

The electronic device according to an embodiment of the disclosure may be one of various types of electronic devices. The electronic devices may include, for example, a computer device, a portable communication device (e.g., a smartphone), a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes or replacements for a corresponding embodiment, within the scope of the appended claims. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., a program) including one or more instructions that are stored in a storage medium (e.g., internal memory or external memory) that is readable by a machine (e.g., a master device or a task performing device). For example, a processor of the machine (e.g., the master device or the task performing device) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the components may include a single entity or multiple entities. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120, 510);
a first slot (530) connected to the at least one processor (120, 510) and capable of containing a removable first SIM;
a second slot (540) selectively connectable to the at least one processor (120, 510) and capable of containing a removable second SIM;
an eSIM (550, 201) selectively connectable to the at least one processor (120, 510) and included in the electronic device (101); and
a switch (560) configured to connect one of the second slot (540) or the eSIM (550, 201) to the at least one processor (120, 510),
wherein the at least one processor (120, 510) is configured to
obtain, from a network, first information indicating whether the eSIM (550, 201) is supported by the network,
based on the first information indicating that the eSIM (550, 201) is supported by the network, control, based on detection of a first event for using the second SIM, the switch such that the at least one processor (120, 510) is connected to the second slot (540), and control, based on detection of a second event for using the eSIM (550, 201), the switch such that the at least one processor (120, 510) is connected to the eSIM (550, 201), and
based on the first information indicating that the eSIM (550, 201) is not supported by the network, control the switch such that the at least one processor (120, 510) is connected to the second slot (540).

2. The electronic device (101) of claim 1, further comprising a display (160),
wherein the at least one processor (120, 510) is further configured to control the display (160) to display a first screen comprising a first tab corresponding to the first SIM, a second tab corresponding to the second SIM, and a third tab corresponding to at least one profile stored in the eSIM (550, 201), based on the first information being identified as supporting the eSIM (550, 201).

3. The electronic device (101) of claim 2, wherein the at least one processor (120, 510) is configured to enable one of the second SIM or the eSIM (550, 201) and disable the other, based on a user input for one of the second tab or the third tab on the first screen.

4. The electronic device (101) of claim 3, wherein the at least one processor (120, 510) is configured to,
as at least a part of the controlling, based on the detection of the first event, the switch such that the at least one processor (120, 510) is connected to the second SIM, detect, as the first event, a first user input for controlling the second SIM for the second tab to an enabled state and control the switch such that, the at least one processor (120, 510) is connected to the second SIM, and
as at least a part of the controlling, based on the detection of the second event, the switch such that the at least one processor (120, 510) is connected to the eSIM (550, 201), detect, as the second event, a second user input for controlling the eSIM (550, 201) for the third tab to an enabled state and control the switch such that the at least one processor (120, 510) is connected to the eSIM (550, 201).

5. The electronic device (101) of claim 3, wherein the at least one processor (120, 510) is configured to display the first screen comprising at least one among information about the first SIM, information about an enabled SIM, or information about a disabled SIM as at least a part of the displaying of the first screen, and
the information about the disabled SIM is obtained and pre-stored in the electronic device (101) while the disabled SIM is connected to the at least one processor (120, 510) before the first screen is displayed.

6. The electronic device (101) of claim 1, wherein the at least one processor (120, 510) is configured to,
based on the first information indicating that the eSIM (550, 201) is not supported by the network and second information indicating that two slots are supported by the electronic device (101):
control the switch to connect the first slot (530) and the second slot (540) to the at least one processor (120, 510), and
disable the eSIM (550, 201),
wherein the electronic device (101) further comprising a display (160),
wherein the at least one processor (120, 510) is further configured to control the display to display a second screen comprising a first tab corresponding to the first SIM and a second tab corresponding to the second SIM, or a third screen comprising the first tab, the second tab, and a third tab indicating that the eSIM (550, 201) is in a disabled state.

7. The electronic device (101) of claim 1, wherein the at least one processor (120, 510) is configured to,
based on the first information indicating that the eSIM (550, 201) is supported by the network and second information indicating that one slot is supported by the electronic device (101),
control the switch to connect the first slot (530) and the eSIM (550, 201) to the at least one processor (120, 510), wherein the electronic device further comprises a display, wherein the at least one processor (120, 510) is further configured to control the display (160) to display a second screen comprising a first tab corresponding to the first SIM and a third tab corresponding to at least one profile stored in the eSIM (550, 201), or a third screen comprising the first tab, the third tab, and a second tab indicating that the second SIM is in a disabled state.

8. The electronic device (101) of claim 1, wherein the at least one processor (120, 510) is configured to, based on the first information indicating that the eSIM (550, 201) is not supported by the network and second information indicating that one slot is supported by the electronic device (101), control the switch such that both the second slot (540) and the eSIM (550, 201) are not connected to the at least one processor (120, 510), or defer or ignore processing of information from at least one of the second slot (540) or the eSIM (550, 201),wherein the electronic device (101) further comprising a display (160),
wherein the at least one processor (120, 510) is further configured to control the display (160) to display a fourth screen comprising a first tab corresponding to the first SIM, or a fifth screen comprising the first tab, a second tab indicating that the second SIM is in a disabled state, and a third tab indicating that the eSIM (550, 201) is in a disabled state.

9. The electronic device (101) of any of claims 1 to 8, wherein the at least one processor (120, 510) is configured to
obtain a request for a change from a first mobile network operator supporting the eSIM (550, 201) to a second mobile network operator that does not support the eSIM (550, 201), and
output, based on a profile defined in the eSIM (550, 201), a message indicating that the change to the second mobile network operator is impossible.

10. The electronic device (101) of any of claims 1 to 8, wherein the at least one processor (120, 510) is configured to,
based on the electronic device (101) being determined to be positioned in a designated country, disallow a change from a mobile network operator corresponding to the electronic device (101) to another mobile network operator.

11. The electronic device (101) of claim 1, wherein the at least one processor (120, 510) is configured to
determine, based on at least one parameter set comprising the first information indicating whether the eSIM (550, 201) is supported, a state of the switch and whether to enable each of the second SIM and the eSIM (550, 201),
detect a change of the at least one parameter set, and
change, based on the changed at least one parameter set, the state of the switch and whether to enable each of the second SIM and the eSIM (550, 201).

12. An operation method performed by an electronic device comprising at least one processor, a first slot capable of containing a removable first SIM, a second slot capable of containing a removable second SIM, an eSIM included in the electronic device, and a switch configured to connect one of the second slot or the eSIM to the at least one processor, the operation method comprising:
obtaining, from a network, first information indicating whether the eSIM is supported by the network;
based on the first information indicating that the eSIM (550, 201) is supported by the network, controlling, based on detection of a first event for using the second SIM, the switch such that the at least one processor is connected to the second slot, or controlling, based on detection of a second event for using the eSIM, the switch such that the at least one processor is connected to the eSIM; and
based on the first information indicating that the eSIM (550, 201) is not supported by the network, controlling the switch such that the at least one processor is connected to the second slot.

13. The operation method of claim 12, further comprising, based on the first information being identified as supporting the eSIM, displaying a first screen comprising a first tab corresponding to the first SIM, a second tab corresponding to the second SIM, and a third tab corresponding to at least one profile stored in the eSIM.

14. The operation method of claim 13, further comprising enabling one of the second SIM or the eSIM and disabling the other, based on a user input for one of the second tab or the third tab on the first screen.

15. The operation method of claim 12, further comprising,
based on the first information indicating that the eSIM (550, 201) is not supported by the network and second information indicating that two slots are supported by the electronic device, controlling the switch to connect the first slot and the second slot to the at least one processor, and disabling the eSIM, or
based on the first information indicating that the eSIM (550, 201) is supported by the network and second information indicating that one slot is supported by the electronic device, controlling the switch to connect the first slot and the eSIM to the at least one processor.

## Patentansprüche

1. Elektronische Vorrichtung (101), umfassend:
mindestens einen Prozessor (120, 510);
einen ersten Slot (530), der mit dem mindestens einen Prozessor (120, 510) verbunden ist und in der Lage ist, eine entnehmbare erste SIM zu enthalten;
einen zweiten Slot (540), der selektiv mit dem mindestens einen Prozessor (120, 510) verbunden werden kann und in der Lage ist, eine entnehmbare zweite SIM zu enthalten;
eine eSIM (550, 201), die selektiv mit dem mindestens einen Prozessor (120, 510) verbindbar und in der elektronischen Vorrichtung (101) enthalten ist; und
einen Schalter (560), der konfiguriert ist, um eines des zweiten Slots (540) oder der eSIM (550, 201) mit dem mindestens einen Prozessor (120, 510) zu verbinden,
wobei der mindestens eine Prozessor (120, 510) konfiguriert ist zum:
Erhalten, von einem Netzwerk, von ersten Informationen, die angeben, ob die eSIM (550, 201) von dem Netzwerk unterstützt wird,
basierend darauf, dass die ersten Informationen angeben, dass die eSIM (550, 201) von dem Netzwerk unterstützt wird, Steuern des Schalters basierend auf der Erfassung eines ersten Ereignisses zur Verwendung der zweiten SIM derart, dass der mindestens eine Prozessor (120, 510) mit dem zweiten Slot (540) verbunden wird, und basierend auf der Erfassung eines zweiten Ereignisses zur Verwendung der eSIM (550, 201) Steuern des Schalters derart, dass der mindestens eine Prozessor (120, 510) mit der eSIM (550, 201) verbunden wird, und
basierend darauf, dass die ersten Informationen angeben, dass die eSIM (550, 201) nicht vom Netzwerk unterstützt wird, Steuern des Schalters derart, dass der mindestens eine Prozessor (120, 510) mit dem zweiten Slot (540) verbunden wird.

2. Elektronische Vorrichtung (101) nach Anspruch 1, ferner umfassend eine Anzeige (160),
wobei der mindestens eine Prozessor (120, 510) ferner konfiguriert ist, um die Anzeige (160) basierend darauf, dass die ersten Informationen als die eSIM (550, 201) unterstützend identifiziert werden, so zu steuern, dass sie einen ersten Bildschirm anzeigt, der eine erste Registerkarte, die der ersten SIM entspricht, eine zweite Registerkarte, die der zweiten SIM entspricht, und eine dritte Registerkarte umfasst, die mindestens einem in der eSIM (550, 201) gespeicherten Profil entspricht.

3. Elektronische Vorrichtung (101) nach Anspruch 2, wobei der mindestens eine Prozessor (120, 510) so konfiguriert ist, dass er basierend auf einer Benutzereingabe für eine der zweiten Registerkarte oder der dritten Registerkarte auf dem ersten Bildschirm eine der zweiten SIM oder der eSIM (550, 201) aktiviert und die andere deaktiviert.

4. Elektronische Vorrichtung (101) nach Anspruch 3, wobei der mindestens eine Prozessor (120, 510) konfiguriert ist zum:
als zumindest ein Teil des Steuerns, basierend auf der Erfassung des ersten Ereignisses des Schalters derart, dass der mindestens eine Prozessor (120, 510) mit der zweiten SIM verbunden ist, Erfassen, als erstes Ereignis, einer ersten Benutzereingabe zum Steuern der zweiten SIM für die zweite Registerkarte in einen aktivierten Zustand und Steuern des Schalters derart, dass der mindestens eine Prozessor (120, 510) mit der zweiten SIM verbunden wird, und
als zumindest ein Teil des Steuerns, basierend auf der Erfassung des zweiten Ereignisses, des Schalters derart, dass der mindestens eine Prozessor (120, 510) mit der eSIM (550, 201) verbunden wird, Erfassen, als das zweite Ereignis, einer zweiten Benutzereingabe zum Steuern der eSIM (550, 201) für die dritte Registerkarte in einen aktivierten Zustand und Steuern des Schalters derart, dass der mindestens eine Prozessor (120, 510) mit der eSIM (550, 201) verbunden wird.

5. Elektronische Vorrichtung (101) nach Anspruch 3, wobei der mindestens eine Prozessor (120, 510) so konfiguriert ist, dass er den ersten Bildschirm anzeigt, der mindestens eine aus Informationen über die erste SIM, Informationen über eine aktivierte SIM oder Informationen über eine deaktivierte SIM als mindestens ein Teil des Anzeigens des ersten Bildschirms anzeigt, und
die Informationen über die deaktivierte SIM erhalten und in der elektronischen Vorrichtung (101) vorgespeichert werden, während die deaktivierte SIM mit dem mindestens einen Prozessor (120, 510) verbunden ist, bevor der erste Bildschirm angezeigt wird.

6. Elektronische Vorrichtung (101) nach Anspruch 1, wobei der mindestens eine Prozessor (120, 510) konfiguriert ist zum:
basierend darauf, dass die ersten Informationen angeben, dass die eSIM (550, 201) nicht vom Netzwerk unterstützt wird, und die zweiten Informationen angeben, dass zwei Slots von der elektronischen Vorrichtung (101) unterstützt werden:
Steuern des Schalters, um den ersten Slot (530) und den zweiten Slot (540) mit dem mindestens einen Prozessor (120, 510) zu verbinden, und
Deaktivieren der eSIM (550, 201),
wobei die elektronische Vorrichtung (101) ferner eine Anzeige (160) umfasst,
wobei der mindestens eine Prozessor (120, 510) ferner so konfiguriert ist, dass er die Anzeige so steuert, dass sie einen zweiten Bildschirm, der eine erste Registerkarte, die der ersten SIM entspricht, und eine zweite Registerkarte, die der zweiten SIM entspricht, umfasst, oder einen dritten Bildschirm anzeigt, der die erste Registerkarte, die zweite Registerkarte und eine dritte Registerkarte umfasst, die anzeigt, dass die eSIM (550, 201) in einem deaktivierten Zustand ist.

7. Elektronische Vorrichtung (101) nach Anspruch 1, wobei der mindestens eine Prozessor (120, 510) konfiguriert ist zum:
basierend darauf, dass die ersten Informationen angeben, dass die eSIM (550, 201) vom Netzwerk unterstützt wird, und die zweiten Informationen angeben, dass nur ein Slot von der elektronischen Vorrichtung (101) unterstützt wird:
Steuern des Schalters, um den ersten Slot (530) und die eSIM (550, 201) mit dem mindestens einen Prozessor (120, 510) zu verbinden, wobei die elektronische Vorrichtung ferner eine Anzeige umfasst, wobei der mindestens eine Prozessor (120, 510) ferner konfiguriert ist, um die Anzeige (160) zu steuern, um einen zweiten Bildschirm, der eine erste Registerkarte, die der ersten SIM entspricht, und eine dritte Registerkarte, die mindestens einem in der eSIM (550, 201) gespeicherten Profil entspricht, umfasst, oder einen dritten Bildschirm anzuzeigen, der die erste Registerkarte, die dritte Registerkarte und eine zweite Registerkarte umfasst, die anzeigt, dass die zweite SIM in einem deaktivierten Zustand ist.

8. Elektronische Vorrichtung (101) nach Anspruch 1, wobei der mindestens eine Prozessor (120, 510) konfiguriert ist, um basierend darauf, dass die ersten Informationen angeben, dass die eSIM (550, 201) nicht vom Netzwerk unterstützt wird, und die zweiten Informationen angeben, dass ein Slot von der elektronischen Vorrichtung (101) unterstützt wird den Schalter so zu steuern, dass sowohl der zweite Slot (540) als auch die eSIM (550, 201) nicht mit dem mindestens einen Prozessor (120, 510) verbunden sind, oder die Verarbeitung von Informationen von mindestens einem von dem zweiten Slot (540) oder der eSIM (550, 201) aufzuschieben oder zu ignorieren,wobei die elektronische Vorrichtung (101) ferner eine Anzeige (160) umfasst,
wobei der mindestens eine Prozessor (120, 510) ferner so konfiguriert ist, dass er die Anzeige (160) so steuert, dass sie einen vierten Bildschirm, der eine erste Registerkarte umfasst, die der ersten SIM entspricht, oder einen fünften Bildschirm anzeigt, der die erste Registerkarte, eine zweite Registerkarte, die anzeigt, dass sich die zweite SIM in einem deaktivierten Zustand befindet, und eine dritte Registerkarte umfasst, die anzeigt, dass sich die eSIM (550, 201) in einem deaktivierten Zustand befindet.

9. Elektronische Vorrichtung (101) nach Anspruch 1, wobei der mindestens eine Prozessor (120) konfiguriert ist, um:
eine Anforderung für einen Wechsel von einem ersten Mobilfunknetzbetreiber, der die eSIM (550, 201) unterstützt, zu einem zweiten Mobilfunknetzbetreiber, der die eSIM (550, 201) nicht unterstützt, zu erhalten und
basierend auf einem in der eSIM (550, 201) definierten Profil eine Nachricht auszugeben, die anzeigt, dass der Wechsel zum zweiten Mobilfunknetzbetreiber nicht möglich ist.

10. Elektronische Vorrichtung (101) nach einem der Ansprüche 1 bis 8, wobei der mindestens eine Prozessor (120, 510) konfiguriert ist, um:
basierend darauf, dass bestimmt wird, dass die elektronische Vorrichtung (101) in einem bestimmten Land positioniert ist, einen Wechsel von einem der elektronischen Vorrichtung (101) entsprechenden Mobilfunknetzbetreiber zu einem anderen Mobilfunknetzbetreiber zu untersagen.

11. Elektronische Vorrichtung (101) nach Anspruch 1, wobei der mindestens eine Prozessor (120) konfiguriert ist, um:
basierend auf zumindest einem Parametersatz, der die ersten Informationen umfasst, die angeben, ob die eSIM (550, 201) unterstützt wird, einen Zustand des Schalters zu bestimmen und ob sowohl die zweite SIM als auch die eSIM (550, 201) aktiviert werden sollen,
eine Änderung des mindestens einen Parametersatzes zu erfassen, und
basierend auf dem geänderten mindestens einen Parametersatz den Zustand des Schalters zu ändern und ob sowohl die zweite SIM als auch die eSIM (550, 201) aktiviert werden sollen.

12. Betriebsverfahren, das von einer elektronischen Vorrichtung durchgeführt wird, die mindestens einen Prozessor, einen ersten Slot, der in der Lage ist, eine entnehmbare erste SIM zu enthalten, einen zweiten Slot, der in der Lage ist, eine entnehmbare zweite SIM zu enthalten, eine in der elektronischen Vorrichtung enthaltene eSIM und einen Schalter umfasst, der so konfiguriert ist, dass er eines des zweiten Slots oder der eSIM mit dem mindestens einen Prozessor verbindet, wobei das Betriebsverfahren Folgendes umfasst:
Erhalten, von einem Netzwerk, von ersten Informationen, die angeben, ob die eSIM von dem Netzwerk unterstützt wird;
basierend darauf, dass die ersten Informationen angeben, dass die eSIM von dem Netzwerk unterstützt wird, Steuern des Schalters basierend auf der Erfassung eines ersten Ereignisses zur Verwendung der zweiten SIM derart, dass der mindestens eine Prozessor mit dem zweiten Slot verbunden wird, oder basierend auf der Erfassung eines zweiten Ereignisses zur Verwendung der eSIM Steuern des Schalters derart, dass der mindestens eine Prozessor mit der eSIM verbunden wird; und
basierend darauf, dass die ersten Informationen angeben, dass die eSIM (550, 201) nicht vom Netzwerk unterstützt wird, Steuern des Schalters derart, dass der mindestens eine Prozessor mit dem zweiten Slot verbunden wird.

13. Betriebsverfahren nach Anspruch 12, ferner umfassend, basierend darauf, dass die ersten Informationen als die eSIM unterstützend identifiziert wurden, Anzeigen eines ersten Bildschirms, der eine erste Registerkarte, die der ersten SIM entspricht, eine zweite Registerkarte, die der zweiten SIM entspricht, und eine dritte Registerkarte, die mindestens einem in der eSIM gespeicherten Profil entspricht, umfasst.

14. Betriebsverfahren nach Anspruch 13, ferner umfassend Aktivieren einer der zweiten SIM oder der eSIM und Deaktivieren der jeweils anderen basierend auf einer Benutzereingabe für eine der zweiten oder der dritten Registerkarte auf dem ersten Bildschirm.

15. Betriebsverfahren nach Anspruch 12, ferner umfassend:
basierend darauf, dass die ersten Informationen angeben, dass die eSIM (550, 201) nicht vom Netzwerk unterstützt wird, und die zweiten Informationen angeben, dass zwei Slots von der elektronischen Vorrichtung unterstützt werden, Steuern des Schalters, um den ersten Slot und den zweiten Slot mit dem mindestens einen Prozessor zu verbinden, und Deaktivieren der eSIM, oder
basierend darauf, dass die ersten Informationen angeben, dass die eSIM (550, 201) von dem Netzwerk unterstützt wird, und die zweiten Informationen angeben, dass ein Slot von der elektronischen Vorrichtung unterstützt wird, Steuern des Schalters, um den ersten Slot und die eSIM mit dem mindestens einen Prozessor zu verbinden.

## Revendications

1. Dispositif électronique (101), comprenant :
au moins un processeur (120, 510) ;
un premier slot (530) connecté à l'au moins un processeur (120, 510) et capable de contenir une première SIM amovible ;
un deuxième slot (540) pouvant être connecté sélectivement à l'au moins un processeur (120, 510) et capable de contenir une deuxième SIM amovible ;
une eSIM (550, 201) pouvant être connectée sélectivement à l'au moins un processeur (120, 510) et incluse dans le dispositif électronique (101) ; et
un commutateur (560) configuré pour connecter l'un du deuxième slot (540) ou de l'eSIM (550, 201) à l'au moins un processeur (120, 510),
dans lequel l'au moins un processeur (120, 510) est configuré pour :
obtenir, depuis un réseau, des premières informations indiquant si l'eSIM (550, 201) est prise en charge par le réseau,
sur la base des premières informations indiquant que l'eSIM (550, 201) est prise en charge par le réseau, commander, sur la base de la détection d'un premier événement d'utilisation de la deuxième SIM, le commutateur de sorte que l'au moins un processeur (120, 510) soit connecté au deuxième slot (540), et commander, sur la base de la détection d'un deuxième événement d'utilisation de l'eSIM (550, 201), le commutateur de sorte que l'au moins un processeur (120, 510) soit connecté à l'eSIM (550, 201), et
en se basant sur les premières informations indiquant que l'eSIM (550, 201) n'est pas prise en charge par le réseau, commander le commutateur de sorte que l'au moins un processeur (120, 510) soit connecté au deuxième slot (540).

2. Dispositif électronique (101) de la revendication 1, comprenant en outre un affichage (160),
dans lequel l'au moins un processeur (120, 510) est en outre configuré pour commander l'affichage (160) afin d'afficher un premier écran comprenant un premier onglet correspondant à la première SIM, un deuxième onglet correspondant à la deuxième SIM, et un troisième onglet correspondant à au moins un profil stocké dans l'eSIM (550, 201), sur la base des premières information étant identifiées comme prenant en charge l'eSIM (550, 201).

3. Dispositif électronique (101) de la revendication 2, dans lequel l'au moins un processeur (120, 510) est configuré pour activer l'une de la deuxième SIM ou de l'eSIM (550, 201) et désactiver l'autre, sur la base d'une entrée d'utilisateur pour l'un du deuxième onglet ou du troisième onglet sur le premier écran.

4. Dispositif électronique (101) de la revendication 3, dans lequel l'au moins un processeur (120, 510) est configuré pour :
comme au moins une partie du fait de commander, sur la base de la détection du premier événement, le commutateur de sorte que l'au moins un processeur (120, 510) est connecté à la deuxième SIM, détecter, en tant que premier événement, une première entrée d'utilisateur pour commander la deuxième SIM pour le deuxième onglet à un état activé et commander le commutateur de sorte que l'au moins un processeur (120, 510) est connecté à la deuxième SIM, et
comme au moins une partie du fait de commander, sur la base de la détection du deuxième événement, le commutateur de sorte que l'au moins un processeur (120, 510) est connecté à l'eSIM (550, 201), détecter, en tant que deuxième événement, une deuxième entrée utilisateur pour commander l'eSIM (550, 201) pour le troisième onglet à un état activé et commander le commutateur de sorte que l'au moins un processeur (550, 201) est connecté à l'eSIM (550, 201).

5. Dispositif électronique (101) de la revendication 3, dans lequel l'au moins un processeur (120, 510) est configuré pour afficher le premier écran comprenant au moins une parmi des informations sur la première SIM, des informations sur une SIM activée, ou des informations sur une SIM désactivée en tant qu'au moins une partie de l'affichage du premier écran, et
les informations sur la SIM désactivée sont obtenues et pré-enregistrées dans le dispositif électronique (101) pendant que la SIM désactivée est connectée à l'au moins un processeur (120, 510) avant l'affichage du premier écran.

6. Dispositif électronique (101) de la revendication 1, dans lequel l'au moins un processeur (120, 510) est configuré pour :
en se basant sur les premières informations indiquant que l'eSIM (550, 201) n'est pas prise en charge par le réseau et sur les deuxièmes informations indiquant que deux slots sont pris en charge par le dispositif électronique (101) :
commander le commutateur pour connecter le premier slot (530) et le deuxième slot (540) à l'au moins un processeur (120, 510), et
désactiver l'eSIM (550, 201),
dans lequel le dispositif électronique (101) comprend en outre un affichage (160),
dans lequel l'au moins un processeur (120, 510) est en outre configuré pour commander l'affichage afin d'afficher un deuxième écran comprenant un premier onglet correspondant à la première SIM et un deuxième onglet correspondant à la deuxième SIM, ou un troisième écran comprenant le premier onglet, le deuxième onglet, et un troisième onglet indiquant que l'eSIM (550, 201) est dans un état désactivé.

7. Dispositif électronique (101) de la revendication 1, dans lequel l'au moins un processeur (120, 510) est configuré pour :
en se basant sur les premières informations indiquant que l'eSIM (550, 201) est prise en charge par le réseau et sur les deuxièmes informations indiquant qu'un slot seulement est pris en charge par le dispositif électronique (101) :
commander le commutateur pour connecter le premier slot (530) et l'eSIM (550, 201) à l'au moins un processeur (120, 510), le dispositif électronique comprenant en outre un affichage, l'au moins un processeur (120, 510) étant en outre configuré pour commander l'affichage (160) afin d'afficher un deuxième écran comprenant un premier onglet correspondant à la première SIM et un troisième onglet correspondant à au moins un profil stocké dans l'eSIM (550, 201), ou un troisième écran comprenant le premier onglet, le troisième onglet et un deuxième onglet indiquant que la deuxième SIM est dans un état désactivé.

8. Dispositif électronique (101) de la revendication 1, dans lequel l'au moins un processeur (120, 510) est configuré pour, en se basant sur les premières informations indiquant que l'eSIM (550, 201) n'est pas prise en charge par le réseau et les deuxièmes informations indiquant qu'un slot est pris en charge par le dispositif électronique (101), commander le commutateur de sorte que le deuxième slot (540) et l'eSIM (550, 201) ne soient pas connectés à l'au moins un processeur (120, 510), ou différer ou ignorer le traitement des informations provenant d'au moins un du deuxième slot (540) ou de l'eSIM (550, 201), dans lequel le dispositif électronique (101) comprend en outre un affichage (160),
dans lequel l'au moins un processeur (120, 510) est en outre configuré pour commander l'affichage (160) afin d'afficher un quatrième écran comprenant un premier onglet correspondant à la première SIM, ou un cinquième écran comprenant le premier onglet, un deuxième onglet indiquant que la deuxième SIM est dans un état désactivé, et un troisième onglet indiquant que l'eSIM (550, 201) est dans un état désactivé.

9. Dispositif électronique (101) de la revendication 1, dans lequel l'au moins un processeur (120) est configuré pour
obtenir une demande de changement d'un premier opérateur de réseau mobile prenant en charge l'eSIM (550, 201) vers un deuxième opérateur de réseau mobile ne prenant pas en charge l'eSIM (550, 201), et
émettre, en se basant sur un profil défini dans l'eSIM (550, 201), un message indiquant que le changement vers le deuxième opérateur de réseau mobile est impossible.

10. Dispositif électronique (101) d'une quelconque des revendications 1 à 8, dans lequel l'au moins un processeur (120, 510) est configuré pour :
en se basant sur le fait que le dispositif électronique (101) est déterminé comme étant positionné dans un pays désigné, interdire un changement d'opérateur de réseau mobile correspondant au dispositif électronique (101) vers un autre opérateur de réseau mobile.

11. Dispositif électronique (101) de la revendication 1, dans lequel l'au moins un processeur (120) est configuré pour :
déterminer, en se basant sur au moins un ensemble de paramètres comprenant les premières informations indiquant si l'eSIM (550, 201) est prise en charge, un état du commutateur et s'il faut activer chacune de la deuxième SIM et de l'eSIM (550, 201),
détecter une modification de l'au moins un ensemble de paramètres, et
modifier, en se basant sur l'au moins un ensemble de paramètres modifié, l'état du commutateur et l'activation ou non de la deuxième SIM et de la eSIM (550, 201).

12. Procédé de fonctionnement exécuté par un dispositif électronique comprenant au moins un processeur, un premier slot pouvant contenir une première SIM amovible, un deuxième slot pouvant contenir une deuxième SIM amovible, une eSIM incluse dans le dispositif électronique, et un commutateur configuré pour connecter l'un du deuxième slot ou de l'eSIM à l'au moins un processeur, le procédé de fonctionnement comprenant :
obtenir, à partir d'un réseau, des premières informations indiquant si l'eSIM est prise en charge par le réseau ;
sur la base des premières informations indiquant que l'eSIM (550, 201) est prise en charge par le réseau, commander, sur la base de la détection d'un premier événement d'utilisation de la deuxième SIM, le commutateur de sorte que l'au moins un processeur est connecté au deuxième slot, ou commander, sur la base de la détection d'un deuxième événement d'utilisation de l'eSIM, le commutateur de sorte que l'au moins un processeur est connecté à l'eSIM ; et
en se basant sur les premières informations indiquant que l'eSIM (550, 201) n'est pas prise en charge par le réseau, commander le commutateur de manière à ce que l'au moins un processeur soit connecté au deuxième slot.

13. Procédé de fonctionnement de la revendication 12, comprenant en outre, sur la base des premières informations identifiées comme prenant en charge l'eSIM, l'affichage d'un premier écran comprenant un premier onglet correspondant à la première SIM, un deuxième onglet correspondant à la deuxième SIM, et un troisième onglet correspondant à au moins un profil stocké dans l'eSIM.

14. Procédé de fonctionnement de la revendication 13, comprenant en outre l'activation de l'une de la deuxième SIM ou de l'eSIM et la désactivation de l'autre, en se basant sur une entrée d'utilisateur pour l'un du deuxième onglet ou du troisième onglet sur le premier écran.

15. Procédé de fonctionnement de la revendication 12, comprenant en outre :
en se basant sur les premières informations indiquant que l'eSIM (550, 201) n'est pas prise en charge par le réseau et sur les deuxièmes informations indiquant que deux slots sont pris en charge par le dispositif électronique, commander le commutateur pour connecter le premier slot et le slot à l'au moins un processeur, et désactiver l'eSIM (550, 201), ou
en se basant sur les premières informations indiquant que l'eSIM (550, 201) est prise en charge par le réseau et sur les deuxièmes informations indiquant qu'un slot est pris en charge par le dispositif électronique, commander le commutateur pour connecter le premier slot et l'eSIM à l'au moins un processeur.
